# EUROPÄISCHE PATENTSCHRIFT

(11) **EP 3 125 464 B1**
(45) Veröffentlichungstag und Bekanntmachung des Hinweises auf die Patenterteilung: **25.03.2020**
(21) Anmeldenummer: 16180482.8
(22) Anmeldetag: 21.07.2016
(51) Int. Cl.: H04L 9/32

(54) **SPERRDIENST FÜR EIN DURCH EINEN ID-TOKEN ERZEUGTES ZERTIFIKAT**
BLOCKING SERVICE FOR A CERTIFICATE CREATED USING AN ID TOKEN
SERVICE DE RÉVOCATION POUR UN CERTIFICAT GÉNÉRÉ PAR UN JETON D'ID

(30) Priorität: 29.07.2015 DE 102015214340
(43) Veröffentlichungstag der Anmeldung: 01.02.2017
(73) Patentinhaber: Bundesdruckerei GmbH, 10969 Berlin (DE)
(72) Erfinder: Wirth, Dr. Klaus-Dieter, 12683 Berlin (DE); Scholze, Steffen, 13469 Berlin (DE); Schwan, Dr. Matthias, 10437 Berlin (DE); Müller, Frank, 10407 Berlin (DE); Filzhuth, Dr. Elke, 12359 Berlin (DE)
(74) Vertreter: Richardt Patentanwälte PartG mbB

(56) Entgegenhaltungen:
- EP-A2- 1 796 052
- WO-A1-2011/006912
- WO-A1-2013/033612
- US-A1- 2005 120 205
- Anonymous: "BSI TR-03110 Advanced Security Mechanisms for Machine Readable Travel Documents", , 20. März 2012 (2012-03-20), XP055029789, Gefunden im Internet: URL:https://www.bsi.bund.de/ContentBSI/Pub likationen/TechnischeRichtlinien/tr03110/i ndex_htm.html [gefunden am 2012-06-13]
- "Technische Richtlinie TR-03127 Architektur Elektronischer Personalausweis", TECHNISCHE RICHTLINIE TR-03127, BUNDESAMT FÜR SICHERHEIT IN DER INFORMATIONSTECHNIK, DE, Nr. Version 0.5, 17. April 2009 (2009-04-17), Seiten 1-37, XP007914804,
- MIROSLAW KUTYLOWSKI ET AL: "Signing with multiple ID's and a single key", CONSUMER COMMUNICATIONS AND NETWORKING CONFERENCE (CCNC), 2011 IEEE, IEEE, 9. Januar 2011 (2011-01-09), Seiten 519-520, XP031865975, DOI: 10.1109/CCNC.2011.5766527 ISBN: 978-1-4244-8789-9

## Beschreibung

Die Erfindung betrifft ein Verfahren zur Prüfung der Gültigkeit eines durch einen ID-Token eines Nutzers für einen Sicherheitstoken desselben Nutzers erzeugten Zertifikats, ein Verfahren zur Erzeugung eines Zertifikats für einen Sicherheitstoken eines Nutzers durch einen ID-Token desselben Nutzers, sowie ein entsprechendes elektronisches System.

Aus dem Stand der Technik ist die Verwendung von elektronischen Pässen zur elektronischen Identifizierung, Authentifizierung und andern "Trust-Services" bekannt (vergleiche Technical Guideline TR-03110-2, "Advanced Security Mechanisms for Machine-Readable Travel Documents and eIDAS Token - Part 2 - Protocols for Electronic IDentification, Authentication and Trust Services (eIDAS)", Version 2, 20, 3. Februar 2015, Bundesamt für Sicherheit in der Informationstechnik, ANSSI sowie Technical Guideline TR-03110-3, "Advanced Security Mechanisms for Machine-Readable Travel Documents and elDAS Token - Part 3 - Common Specification", Version 2.20, 3. Februar 2015, Bundesamt für Sicherheit in der Informationstechnik, ANSSI).

Tuecke, S., et al.: "Internet X.509 Public Key Infrastructure (PKI) - Proxy Certificate Profile", Network Working Group, Request for Comments: 3820, Juni 2004, S. 1-37, beschreibt ein Zertifikatprofil für Proxy-Zertifikate basierend auf X.509 Public Key Infrastructure (PKI) Zertifikaten, wie in RFC 3280 definiert, für eine Verwendung im Internet. Der Begriff Proxy-Zertifikat wird dabei verwendet, um ein Zertifikat zu beschreiben, welches abgeleitet von und signiert durch ein normales X.509 Public Key End Entity Zertifikat ist oder ein anderes Proxy-Zertifikat zu dem Zweck, ein beschränktes Vertreten und Delegieren innerhalb eines auf einer PKI basierenden Authentifizierungssystems bereitzustellen.

DE 10 2012 017 826 A1 beschreibt ein Verfahren zur Erstellung einer von einem Originaldatenträger abgeleiteten Authentisierungsinstanz, wobei der Originaldatenträger ein für den Originaldatenträger individuelles Schlüsselpaar, welches einen öffentlichen Schlüssel und einen geheimen Schlüssel des Originaldatenträgers umfasst, sowie ein Zertifikat über den öffentlichen Schlüssel des Originaldatenträgers aufweist.

Kutylowski, M., et al.: "Signing with Multiple ID'S and a Single Key", The 8th Annual IEEE Consumer Communications and Networking Conference - Work in Progress (Short Papers), 2011 IEEE, S. 519-520, beschreibt ein Verfahren für elektronische Ausweise, die es ermöglicht, eine Mehrzahl von Identitäten für eine Person zu erzeugen durch Erzeugen von digitalen Signaturen mit nur einem privaten Schlüssel, der in einem Ausweis der Person gespeichert ist. Die dem privaten Schlüssel zugeordneten öffentlichen Schlüssel gehören zu verschiedenen Sektoren, die verschiedenen Anwendungen oder Tätigkeitsbereiche, wie etwa einer privaten Nutzung und einem Signieren im Namen eines Unternehmens oder einer Behörde zugeordnet sind. Hierdurch wird eine Mehrzahl von sektorenspezifischen Signaturen erzeugt, welche nicht miteinander in Verbindung gebracht werden können.

Der Erfindung liegt demgegenüber die Aufgabe zugrunde, ein Verfahren zur Prüfung der Gültigkeit eines durch einen ID-Token eines Nutzers für einen Sicherheitstoken desselben Nutzers erzeugten Zertifikats, ein Verfahren zur Erzeugung eines Zertifikats für einen Sicherheitstoken eines Nutzers durch einen ID-Token desselben Nutzers, sowie ein entsprechendes elektronisches System zur Verfügung zu stellen.

Die der Erfindung zugrundeliegende Aufgabe wird mit den Merkmalen der unabhängigen Patentansprüche gelöst. Ausführungsformen der Erfindung sind in den abhängigen Patentansprüchen angegeben.

Unter einem "Zertifikat" wird hier ein Zertifikat einer Public-Key-Infrastructure (PKI) verstanden, beispielsweise nach dem Standard X.509 oder ein Card Verifiable Certificate (CVC) (vergleiche ISO 7816 - Teil 8). Ein Zertifikat ist ein digitaler Datensatz, der einen öffentlichen Schlüssel beinhaltet und signiert ist.

Unter einem "ID-Token" wird hier ein Dokument, insbesondere ein Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Unter einem "Sicherheitstoken" wird hier eine Chipkarte, ein Dokument, ein USB-Stick oder ein anderes Secure Element (SE), wie beispielsweise von Global Platform (www.globalplatform.org) spezifiziert, verstanden.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Speicherbereich eines elektronischen Speichers verstanden, auf den ein direkter Zugriff über eine Kommunikationsschnittstelle des ID-Tokens bzw. des Sicherheitstokens nicht möglich ist. Auf einen "geschützten Speicherbereich" ist ein Zugriff, das heißt ein Lesezugriff oder ein Schreibzugriff, nur über einen mit dem Speicher gekoppelten Prozessor möglich, wobei ein entsprechender Zugriff nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einer "Dokumenten-PKI" wird hier eine public key infrastructure (PKI) verstanden, die zur Erstellung von Zertifikaten für ID-Token, also Dokumente, dient, wobei die Zertifikate zur Prüfung der Authentizität des betreffenden ID-Tokens verwendet werden, beispielsweise wie in technische Richtlinie TR-03127, "Architektur elektronischer Personalausweis und elektronischer Aufenthaltstitel", Version 1.15, 1. August 2012, Bundesamt für Sicherheit in der Informationstechnik, spezifiziert, vergleiche insbesondere Seite 27 unter 5.1.

Unter einer "Berechtigungs-PKI" wird hier eine PKI verstanden, die zur Erstellung von Zertifikaten, insbesondere sogenannten Berechtigungszertifikaten, dient, welche zur Prüfung der Zugriffsberechtigung eines Dienstanbieters auf einen ID-Token dienen, beispielsweise wie in der o.g. technischen Richtlinie TR-03127 spezifiziert, vergleiche Seite 27 ff. unter Punkt 5.2.

Unter einem "Attribut" wird hier eine Information betreffend den Nutzer und/oder den ID-Token bezeichnet, wie zum Beispiel eine Information betreffend die Identität des Nutzers, beispielsweise dessen Name, Wohnort, Geburtsdatum oder eine den ID-Token selbst betreffende Information, wie zum Beispiel den Herausgeber des ID-Tokens, das Datum der Ausstellung des ID-Tokens oder die Gültigkeitsdauer des ID-Tokens.

Ein solches Attribut kann in den ID-Token anlässlich der Produktion des ID-Tokens durch eine Personalisierungsanlage gespeichert werden. Alternativ kann ein Attribut nachträglich in den ID-Token geladen werden, nachdem ein Nutzer bereits den ID-Token in Benutzung genommen hat, wie es beispielsweise in DE 10 2015 200 313 derselben Anmelderin.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos ausgebildet sein kann, beispielsweise nach einem RFID- und/oder NFC-Standard.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Zurverfügungstellung einer eCommerce- oder eGovernment-Anwendung handein, insbesondere einen Onlineshop oder einen Behördenserver. Der Dienst kann auch lediglich in dem Nachladen von Attributen bestehen.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer®, Safari®, Google Chrome®, Firefox® oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Prüf-Computersystem" wird hier ein Computersystem verstanden, welches dazu konfiguriert ist, eine Datenbankabfrage einer Datenbank auszuführen, wobei durch die Datenbankabfrage abgefragt wird, ob ein bestimmter Wert in der Datenbank gespeichert ist, und ein Prüfsignal zu erzeugen, welches das Ergebnis der Datenbankabfrage anzeigt.

Unter einem "Lesegerät" wird hier ein elektronisches Gerät verstanden, welches einen Lesezugriff und auch einen Schreibzugriff auf den ID-Token oder Sicherheitstoken ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln.

Unter einem "Sektor" wird hier eine Mehrzahl von Sicherheitstoken verstanden, welche jeweils einen identischen öffentlichen Sektorenschlüssel enthalten und durch diesen Sektorenschlüssel eindeutig einem gemeinsamen Sektor aus einer Mehrzahl von vordefinierten Sektoren zugeordnet sind. Jeder Sicherheitstoken ist durch den Sektorenschlüssel eindeutig einem Sektor zugeordnet, wobei alle Sicherheitstoken mit einem identischen Sektorenschlüssel einen gemeinsamen Sektor bilden. Jede Verwendung eines ID-Tokens kann daher auf Basis des Sektorenschlüssels einem Sektor zugeordnet werden. Da jeder Sektor durch einen anderen Sektorenschlüssel definiert wird, können die Verwendungen des ID-Token in einem Sektor nicht mit einer Verwendung in einem anderen Sektor in Verbindung gebracht werden. Wird der ID-Token beispielsweise zur Erzeugung zweier Zertifikate für zwei Sicherheitstoken aus unterschiedlichen Sektoren verwendet, so sind die ersten Identifikatoren, welche aus einem ersten privaten Schlüssel des ID-Tokens und dem jeweiligen öffentlichen Sektorenschlüssel des Sektors berechnet werden, dem die Sicherheitstoken jeweils zugeordnet sind, stets unterschiedlich und lassen sich ohne sektorenübergreifende Informationen nicht auf denselben ID-Token zurückführen. Somit kann eine Verwendung des ID-Tokens innerhalb eines Sektors aus Sicht der beteiligten Instanzen dieses Sektors nicht mit einer Verwendung desselben ID-Tokens in einem anderen Sektor in Verbindung gebracht werden.

Nach einer Ausführungsform umfasst das Verfahren zur Prüfung der Gültigkeit eines durch einen ID-Token eines Nutzers für einen Sicherheitstoken desselben Nutzers erzeugten Zertifikats, wobei der ID-Token einen geschützten Speicherbereich aufweist, in welchem mindestens ein erster privater Schlüssel eines ersten kryptographischen Schlüsselpaars bestehend aus dem ersten privaten Schlüssel und einem ersten öffentlichen Schlüssel gespeichert ist, und wobei dem ID-Token ein Zertifikat einer Dokumenten-PKI zugeordnet ist, wobei dem Sicherheitstoken ein Zertifikat einer Berechtigungs-PKI zugeordnet und auf dem Sicherheitstoken gespeichert ist, wobei in dem Zertifikat der Berechtigungs-PKI eine Schreibberechtigung für einen Schreibzugriff des Sicherheitstokens auf den geschützten Speicherbereich des ID-Tokens festgelegt ist, wobei das Zertifikat der Berechtigungs-PKI einen öffentlichen Sektorenschlüssel beinhaltet, welcher einem Sektor aus einer Mehrzahl von vordefinierten Sektoren zugeordnet und für alle Sicherheitstoken desselben Sektors identisch ist, wobei auf dem Sicherheitstoken ein dem erzeugten Zertifikat zugeordneter privater Schlüssel eines durch den Sicherheitstoken erzeugten kryptographischen Schlüsselpaars bestehend aus dem privaten Schlüssel und einem öffentlichen Schlüssel gespeichert ist, und wobei auf dem Sicherheitstoken zumindest ein erster dem ID-Token zugeordneter sektorenspezifischer Identifikator gespeichert ist, welcher aus dem ersten privaten Schlüssel des ID-Token und dem öffentlichen Sektorenschlüssel des Sicherheitstoken berechnet ist, wobei das von dem ID-Token erzeugte Zertifikat ein von dem Zertifikat der Dokumenten-PKI abgeleitetes und auf dem Sicherheitstoken gespeichertes Zertifikat ist, welches den öffentlichen Sektorenschlüssel oder einen kryptografisch davon abgeleiteter Wert und den öffentlichen Schlüssel des durch den Sicherheitstoken erzeugten kryptographischen Schlüsselpaars beinhaltet:
- Ausführen einer ersten Datenbankabfrage einer ersten Sperrdatenbank durch ein erstes Prüf-Computersystem zur Ermittlung eines Sperrstatus des ID-Tokens, wobei die erste Sperrdatenbank derart konfiguriert ist, dass aus ihr der Sperrstatus des ID-Tokens abfragbar ist,
- Erzeugen eines ersten Prüfsignals durch das erste Prüf-Computersystem, welches das Ergebnis der ersten Datenbankabfrage anzeigt,
- Ausführen einer zweiten Datenbankabfrage einer zweiten Sperrdatenbank durch ein zweites Prüf-Computersystem zur Ermittlung eines Sperrstatus des erzeugten Zertifikats, wobei die zweite Sperrdatenbank derart konfiguriert ist, dass aus ihr der Sperrstatus des erzeugten Zertifikats abfragbar ist,
- Erzeugen eines zweiten Prüfsignals durch das zweite Prüf-Computersystem, welches das Ergebnis der zweiten Datenbankabfrage anzeigt,
- Erzeugen eines Gültigkeitssignals, weiches die Gültigkeit des erzeugten Zertifikats unter der Voraussetzung anzeigt, dass das erste Prüfsignal anzeigt, dass der ID-Token nicht gesperrt ist, und das zweite Prüfsignal anzeigt, dass das erzeugte Zertifikat nicht gesperrt ist.

Bei der Sperrung eines Zertifikats mit einer klassischen Sperrliste, beispielsweise einer Negativliste, stehen eindeutige Merkmale von Zertifikaten, ID- oder Sicherheitstoken in einer allgemein zugänglichen, d.h. öffentlichen Liste, der Liste der gesperrten Zertifikate ID- oder Sicherheitstoken. Soll hohen Ansprüchen an den Schutz persönlicher Daten genügt werden, müssen auch kryptische Werte, die einer Person zugeordnet sind, als personenbezogene Daten eingestuft werden, welche nicht öffentlich verfügbar sein sollen.

Zur Erfüllung dieser Ansprüche werden Sektoren eingeführt und sektorenspezifische Sperrlisten bzw. Sperrdatenbanken, sodass die in den Sperrlisten bzw. Sperrdatenbanken gespeicherten Daten nicht mehr allgemein, sondern nur noch für den entsprechenden Sektor zugänglich sind. Da nur Instanzen mit Berechtigungszertifikat überhaupt auf den ID-Token zugreifen dürfen, können diese Instanzen auf Basis unterschiedlicher in die Berechtigungszertifikate aufgenommene Sektorenschlüssel verschiedenen Sektoren zugeordnet werden. Die Sperrlisten können für jeden Sektor separat erstellt werden, wobei jeder ID-Token einerseits in jedem Sektor anhand eines sektorenspezifischen Identifikators eindeutig erkannt werden kann, andererseits aber auch in verschiedenen Sektoren verschiedene Sperrmarkmale haben kann.

Bei dem ersten im geschützten Speicherbereich des ID-Tokens gespeicherten privaten Schlüssel handelt es sich beispielsweise um einen in dem Protokoll Restricted Identification (RI) angewendeten Schlüssel (vergleiche Abschnitt 3.6 Restricted Identification, Technische Richtline TR-03110-2, "Advanced Security Mechanisms for Machine-Readable Travel Documents and eIDAS Token - Part 2 - Protocols for Electronic IDentification, Authentication and Trust Services (eIDAS)", Version 2.20, 3. Februar 2015, Bundesamt für Sicherheit in der Informationstechnik).

Hierbei berechnet der ID-Token einen Restricted Identifier auf Basis eines öffentlichen Sektorenschlüssels, der im Berechtigungszertifikat eines Dienstanbieters hinterlegt ist und einem dem ID-Token zugeordneten privaten Schlüssel, der im geschützten Speicherbereich des ID-Tokens gespeichert ist. Der berechnete Restricted Identifier wird folgend an den Dienstanbieter übermittelt. Mit Hilfe dieses als Pseudonym dienenden Restricted Identifiers ist es dem Dienstanbieter möglich, den jeweiligen Nutzer bzw. den ihm zugeordneten ID-Token bei der nächsten Nutzung seines Angebotes wiederzuerkennen, z. B. bei einem Login-Zugang für ein soziales Netzwerk.

Restricted Identification kann somit insbesondere zur Erzeugung von Pseudonymen verwendet werden, die spezifisch für einen ID-Token und einen Sektor, beispielweise alle Lesegeräte eines Dienstanbieters, sind. Dadurch wird es einem Lesegerät möglich, einen Chip basierend auf dem zuvor erhaltenen Pseudonym wiederzuerkennen, ohne personenbezogene Daten auszulesen. Weiterhin ist es nicht möglich, die Pseudonyme zwischen verschiedenen Sektoren zu verketten. Dieses Verfahren wird beispielsweise beim deutschen Personalausweis als Datenschutzmechanismus verwendet.

Ausführungsformen der Erfindung können den Vorteil haben, dass sie es dem Nutzer eines ID-Tokens ermöglicht ein für einen Sicherheitstoken erzeugtes Zertifikat, welches von dem ID-Token abgeleitet ist, zu sperren.

Ein Sperren eines für einen Sicherheitstoken abgeleiteten Zertifikats ist beispielsweise notwendig, falls der dem Zertifikat zugeordnete Sicherheitstoken abhanden gekommen ist oder gestohlen wurde, um zu verhindern, dass ein unberechtigter Dritter mit dem Sicherheitstoken und dem abgeleiteten Zertifikat Missbrauch betreibt.

Zudem können Ausführungsformen der Erfindung den Vorteil haben, dass sie es dem Nutzer einerseits ermöglichen ohne Einschaltung eines eID-Provider-Computersystems und ohne das Erfordernis einer Netzwerkverbindung für einen Sicherheitstoken ein Zertifikat zu erzeugen. Der Nutzer kann also selbst dann, wenn keine Netzwerkverbindung zur Verfügung steht, autark und dennoch ohne Einschränkung hinsichtlich der Sicherheit und der Vertrauenswürdigkeit ein Zertifikat für seinen Sicherheitstoken mithilfe seines ID-Tokens erzeugen. Dies hat den weiteren Vorteil der Stärkung des Datenschutzes und der informationellen Selbstbestimmung des Nutzers, da keinerlei Daten des Nutzers für die Erzeugung des Zertifikats über ein Netzwerk übertragen werden müssen und auch keine hoheitliche Institution oder ein sonstiger Dritter hierzu involviert werden müssen.

Andererseits kann sichergestellt werden, dass keine gültigen Zertifikate mit einem ungültigen, d.h. gesperrten ID-Token erzeugt werden. Dies ist insbesondere vorteilhaft, falls der ID-Token abhandenkommt oder gestohlen wird, und verhindert werden soll, dass dieser trotz Sperrung zur autarken Erzeugung von nicht gesperrten Zertifikaten für Sicherheitstoken verwendet wird.

In dem elektronischen Personalausweis der Bundesrepublik Deutschland sind beispielsweise die beiden zusätzlichen privaten Schlüssel PrK.ICC.SD (Sperrschlüssel) und PrK.ICC.RI (RI-Schlüssel) gespeichert. Ein Dienst bzw. ein Dienstanbieter mit einem Berechtigungszertifikat hat einen öffentlichen Sektorenschlüssel PuK.T.Sektor, der sektorenspezifisch ist, das heißt mehrere Dienste, Lesegeräte oder Dienstanbieter desselben Sektors haben jeweils denselben öffentlichen Sektorenschlüssel, wie zum Beispiel sämtliche Dienste, Lesegeräte oder Dienstanbieter auf dem Gebiet Gesundheit, eGovernment oder in einem anderen Bereich. Alle Dienste, Lesegeräte oder Dienstanbieter, welchen jeweils derselbe öffentliche Sektorenschlüssel PuK.T.Sektor zugeordnet ist, bilden einen sogenannten "Sektor".

Durch kryptografische Kombination des Sperrschlüssels und des Sektorenschlüssels, insbesondere durch Punktmultiplikation, kann ein erster Identifikator erzeugt werden. Aufgrund der Kombination mit dem Sektorenschlüssel ist der resultierende Identifikator stets sektorenspezifisch, d.h. er kann nur innerhalb des dem Sektorenschlüssel zugeordneten Sektors auf Basis des Sektorenschlüssels erkannt werden. Zur Sperrung eines Personalausweises werden daher die Identifikatoren des Personalausweises für sämtliche Sektoren in Sperrdatenbanken, beispielsweise in Sperrlisten in Form von Negativlisten, sog. Blacklists, vermerkt, sodass der Personalausweis anhand der Sperrlisten für alle Sektoren als gesperrt erkannt werden kann. Der sektorenspezifische Identifikator erlaubt somit eine Wiedererkennung des Personalausweises durch einen Dienstanbieter aus diesem Sektor. Zudem kann dieser sektorenspezifische Identifikator, wenn er in einer sektorenspezifischen Sperrliste, beispielweise in Form einer Negativliste, einer Sperrdatenbank enthalten ist, von einem Dienst durch eine Datenbankabfrage als gesperrt erkannt werden.

Wird diese Sperrdatenbank zur Sperrung des Personalausweises auch zur Sperrung abgeleiteter Zertifikate von Sicherheitstoken verwendet, hat dies zur Folge, dass durch Sperrung des Personalausweises sämtliche von diesem abgeleitete Zertifikate der Sicherheitstoken gesperrt werden. Soll ein einzelnes Zertifikat eines Sicherheitstokens gesperrt werden, beispielsweise aufgrund eines Verlustes oder Diebstahls des entsprechenden Sicherheitstokens, müssen in diesem Fall sowohl der Personalausweis auch alle anderen von diesem abgeleiteten Sicherheitstoken ebenfalls gesperrt werden.

Ein zweiter sektorenspezifischer Identifikator kann mithilfe des RI-Schlüssels berechnet werden, und zwar durch kryptografische Kombinationen des RI-Schlüssels mit dem öffentlichen Sektorenschlüssel. Auch hier wird eine Wiedererkennung des Personalausweises durch einen Dienstanbieter aus diesem Sektor ermöglich.

Erfindungsgemäß werden einer oder beide dieser sektorenspezifischen Identifikatoren, d.h. Restricted Identifier, mit in das von dem ID-Token, beispielsweise einem Personalausweis der Bundesrepublik Deutschland, erzeugte Zertifikat des Sicherheitstokens aufgenommen. Es soll hier hervorgehoben werden, dass bei den Szenarien für die Sperrung von Sicherheitstoken, die von einem Sicherheitstoken abgeleitet wurden, aus dem Personalausweis keine Informationen freigegeben werden, die nicht bereits in den Zertifikaten der Sicherheitstoken vorhanden sind.

Geht der Sicherheitstoken verloren, verfügt der Nutzer noch über den ID-Token, beispielsweise seinen Personalausweis. Der Nutzer kann dann eine zweite sektorenspezifische Sperrdatenbank eines, beispielsweise von dem Herausgeber des Sicherheitstokens betriebenen, Sperrdienstes dazu verwenden, nur das einzelne von dem ID-Token abgeleitete Zertifikat des Sicherheitstokens zu sperren. Hierzu authentifiziert sich der Nutzer mit seinem Personalausweis mithilfe des RI-Schlüssels, d.h. in diesem Beispiel mithilfe des zweiten privaten Schlüssels, gegenüber dem Sperrdienst für den Sicherheitstoken. Auf eine entsprechende Anforderung des Nutzers hin wird dann nur der aus dem RI-Schlüssel berechnete zweite Identifikator, d.h. der RI-Identifikator, in die zweite Sperrdatenbank, z. B. eine Sperrliste in Form einer Negativliste, aufgenommen.

Es gibt somit neben einer ersten Sperrdatenbank für den ID-Token, welche beispielsweise vom Hersteller des ID-Token betrieben wird, eine weitere zweite Sperrdatenbank für abgeleitete Zertifikate der Sicherheitstoken, welche beispielsweise vom Hersteller der Sicherheitstoken betrieben wird. Diese zweite Sperrdatenbank wird automatisch und ohne Preisgabe von persönlichen Daten aus dem ID-Token betrieben werden.

Daher kann beispielsweise derjenige ein abgeleitetes Zertifikat sperren, der das Zertifikat mit seinem ID-Token auf dem Sicherheitstoken erzeugt hat. Dies ist im Allgemeinen der Inhaber des ID-Token. Der ID-Token kann beispielsweise eindeutig anhand eines RI, im Falle eines Personalausweises beispielsweise aus PrK.ICC.RI und PuK.T.Sector, erkannt werden. Weitere Informationen werden zum Erkennen des ID-Tokens nicht benötigt und der Inhaber des Sicherheitstokens gibt über den Sperrdienst keine zusätzlichen persönlichen Informationen. Der beim Sperren benötigte öffentliche Sektorenschlüssel des Herausgebers der Sicherheitstoken für einen gegebenen Sektor ist allgemein bekannt und beispielsweise auf dem Sicherheitstoken gespeichert, sodass er ausgelesen werden kann.

Da es eine eigene von der Sperrdatenbank für die ID-Token unabhängige Sperrdatenbank für abgeleitete Zertifikate von Sicherheitstoken gibt, können Letztere gesperrt werden, ohne dass der ID-Token gesperrt werden muss.

Mehrere Sicherheitstoken mit jeweils aus demselben ID-Token abgeleiteten Zertifikaten, können einzeln gesperrt werden, wenn die Sicherheitstoken beispielsweise zu verschiedenen Sektoren gehören oder wenn beim Sperren eines abgeleiteten Sicherheitstokens neben dem oben genannten RI des ID-Tokens noch eine Kennung, beispielsweise eine Seriennummer, des abgeleiteten Zertifikats angeben wird.

Da ein abgeleitetes Zertifikat für einen Sicherheitstoken gemäß der vorliegenden Erfindung autark, d.h. ohne Einschaltung eines eID-Provider-Computersystems und auch ohne das Erfordernis einer Netzwerkverbindung, erzeugt werden kann, funktioniert eine Zertifikatserzeugung im Allgemeinen auch mit einem gesperrten ID-Token. Bei einer Prüfung der Gültigkeit von abgeleiteten Zertifikaten auf Sicherheitstoken allein auf Basis einer Sperrdatenbank, welche angibt ob das abgeleitete Zertifikat gesperrt ist, wird eine Sperrung des zugrundeliegenden ID-Tokens nicht bemerkt werden.

Dieses Problem kann durch die Verwendung zweier Sperrdatenbanken gelöst werden: Ein abgeleitetes Zertifikat auf einem Sicherheitstoken ist gültig, wenn eine Prüfung beider Sperrdatenbanken eine Gültigkeit ergibt, d.h. sowohl der ersten Sperrdatenbank für den ID-Token als auch der zweiten Sperrdatenbank für das abgeleitete Zertifikat. Die Konsequenzen sind, dass eine Sperrung des ID-Token mittels der ersten Sperrdatenbank zur Sperrung aller abgeleiteten Sicherheitstoken führt, während einzelne abgeleitete Zertifikate und damit die zugeordneten Sicherheitstoken gesperrt werden können, ohne dass der ID-Token gesperrt wird. Andererseits bleiben bei einer Sperrung eines einzelnen Zertifikats alle anderen Zertifikate in anderen Sektoren gültig. Zudem können mit einem gesperrten ID-Token nur gesperrte abgeleitete Zertifikate erzeugt werden, d.h. mit einem gesperrten ID-Token erzeugte Zertifikate sind automatisch ebenfalls gesperrt.

Nach einer Ausführungsform ist der erste sektorenspezifische Identifikator in dem erzeugten Zertifikat beinhaltet.

Nach einer Ausführungsform ist die erste Sperrdatenbank derart konfiguriert, dass auf eine Sperraufforderung des Nutzers des ID-Tokens zum Sperren des ID-Tokens hin in der ersten Sperrdatenbank der erste sektorenspezifische Identifikator gespeichert wird, sodass das erste Prüfsignal als Ergebnis der ersten Datenbankabfrage der ersten Sperrdatenbank anzeigt, dass der ID-Token nicht gesperrt ist, unter der Voraussetzung, dass der erste sektorenspezifische Identifikator nicht in der ersten Sperrdatenbank gespeichert ist.

Zur Sperrung eines ID-Tokens wird der erste sektorenspezifische Identifikator des ID-Tokens in der ersten Sperrdatenbank gespeichert. Die Sperrdatenbank stellt somit eine Negativliste oder Blacklist dar. Durch eine Datenbankabfrage, welche prüft, ob der erste sektorenspezifische Identifikator in der ersten Sperrdatenbank abgespeichert ist, kann der Sperrstatus des zugehörigen ID-Tokens effizient bestimmt werden. Zudem kann durch das Einbeziehen des öffentlichen Sektorenschlüssels in die Berechnung des ersten sektorenspezifischen Identifikators sichergestellt werden, dass durch eine Sperrung des ID-Tokens keine persönlichen Daten des Nutzers öffentlich zugänglich gemacht werden.

Nach einer Ausführungsform ist die erste Sperrdatenbank derart konfiguriert, dass der erste sektorenspezifische Identifikator des ID-Tokens in der ersten Sperrdatenbank vorgespeichert ist und auf eine Sperraufforderung des Nutzers des ID-Tokens zum Sperren des ID-Tokens hin der vorgespeicherte erste sektorenspezifische Identifikator aus der ersten Sperrdatenbank gelöscht wird, sodass das erste Prüfsignal als Ergebnis der ersten Datenbankabfrage der ersten Sperrdatenbank anzeigt, dass der ID-Token nicht gesperrt ist, unter der Voraussetzung, dass der erste sektorenspezifische Identifikator in der ersten Sperrdatenbank gespeichert ist.

In dieser Ausführungsform wird der erste sektorenspezifische Identifikator bei der Herstellung des ID-Tokens und/oder einer Aktivierung bzw. Freischaltung des ID-Tokens in der ersten Sperrdatenbank gespeichert. Die Sperrdatenbank stellt somit eine Positivliste, eine sog. Whitelist, dar. Hierzu berechnet beispielsweise der Hersteller des ID-Tokens für eine Auswahl an Sektoren und/oder alle Sektoren jeweils einen sektorenspezifischen Identifikator, welcher in einer ersten Sperrdatenbank vorgespeichert wird. Zur Sperrung eines ID-Tokens wird der erste sektorenspezifische Identifikator des ID-Tokens aus der ersten Sperrdatenbank gelöscht. Durch eine Datenbankabfrage, welche prüft, ob der erste sektorenspezifische Identifikator in der ersten Sperrdatenbank abgespeichert ist, kann der Sperrstatus des zugehörigen ID-Tokens effizient bestimmt werden.

Nach einer Ausführungsform umfasst die erste Sperrdatenbank eine Mehrzahl von Sektorendatenbanken, wobei jede Sektorendatenbank jeweils einem individuellen Sektor zugeordnet und jeweils so konfiguriert ist, dass auf eine Sperraufforderung des Nutzers des ID-Tokens zum Sperren des ID-Tokens hin in der Sektorendatenbank ein dem ID-Token zugeordneter sektorenspezifischer Sperrfaktor gespeichert wird, der jeweils aus dem ersten privaten Schlüssel des ID-Tokens und einem dem Sektor der Sektorendatenbank zugeordneten öffentlichen Sektorenschlüssel berechnet ist.

Nach einer Ausführungsform umfasst die erste Sperrdatenbank eine Mehrzahl von Sektorendatenbanken, wobei jede Sektorendatenbank jeweils einem individuellen Sektor zugeordnet und jeweils so konfiguriert ist, dass in der Sektorendatenbank jeweils ein dem ID-Token zugeordneter sektorenspezifischer Sperrfaktor vorgespeichert ist, der aus dem ersten privaten Schlüssel des ID-Tokens und einem dem Sektor des jeweiligen Sektorendatenbank zugeordneten öffentlichen Sektorenschlüssel berechnet ist, und auf eine Sperraufforderung des Nutzers des ID-Tokens zum Sperren des ID-Tokens hin aus jeder Sektorendatenbank der jeweilige dem ID-Token zugeordnete vorgespeicherte sektorenspezifischen Identifikator gelöscht wird.

Ausführungsformen der Erfindung können den Vorteil haben, dass durch die Untergliederung in Sektoren im Zuge der Sperrung des ID-Tokens keine persönlichen Daten des Nutzers öffentlich, d.h. allgemein, zugänglich gemacht werden.

Nach einer Ausführungsform ist die zweite Sperrdatenbank derart konfiguriert, dass auf eine Sperraufforderung des Nutzers des ID-Tokens zum Sperren des erzeugten Zertifikats hin in der zweiten Sperrdatenbank ein zweiter sektorenspezifischer Identifikator gespeichert wird, sodass das zweite Prüfsignal als Ergebnis der zweiten Datenbankabfrage der zweiten Sperrdatenbank anzeigt, dass das erzeugte Zertifikat nicht gesperrt ist, unter der Voraussetzung, dass der zweite sektorenspezifische Identifikator nicht in der zweiten Sperrdatenbank gespeichert ist.

Zur Sperrung eines einzelnen abgeleiteten Zertifikats wird der zweite sektorenspezifische Identifikator des ID-Tokens in der ersten Sperrdatenbank gespeichert. Durch eine Datenbankabfrage, welche prüft, ob der zweite sektorenspezifische Identifikator in der ersten Sperrdatenbank abgespeichert ist, kann der Sperrstatus des für den zugehörigen Sektor abgeleiteten Zertifikats effizient bestimmt werden. Zudem kann durch ein Einbeziehen des öffentlichen Sektorenschlüssels in die Berechnung des zweiten sektorenspezifischen Identifikators sichergestellt werden, dass durch eine Sperrung eines abgeleiteten Zertifikats keine persönlichen Daten des Nutzers öffentlich zugänglich gemacht werden.

Nach einer Ausführungsform ist die zweite Sperrdatenbank derart konfiguriert, dass in der zweiten Sperrdatenbank ein zweiter sektorenspezifischer Identifikator des erzeugten Zertifikats vorgespeichert ist und auf eine Sperraufforderung des Nutzers des ID-Tokens zum Sperren des erzeugten Zertifikats hin der vorgespeicherte zweite sektorenspezifische Identifikator aus der zweiten Sperrdatenbank gelöscht wird, sodass das zweite Prüfsignal als Ergebnis der zweiten Datenbankabfrage der zweiten Sperrdatenbank anzeigt, dass das erzeugte Zertifikat nicht gesperrt ist, unter der Voraussetzung, dass der zweite sektorenspezifische Identifikator in der zweiten Sperrdatenbank gespeichert ist.

In dieser Ausführungsform wird der zweite sektorenspezifische Identifikator bei der Herstellung des ID-Tokens und/oder einer Aktivierung bzw. Freischaltung des abgeleiteten Zertifikats in der zweiten Sperrdatenbank gespeichert. Hierzu berechnet beispielsweise der Nutzer des ID-Tokens bei der Erzeugung des abgeleiteten Zertifikats mit dem ID-Token den zweiten sektorenspezifischen Identifikator, welcher in einer zweiten Sperrdatenbank vorgespeichert wird. Zur Sperrung eines einzelnen abgeleiteten Zertifikats wird der zweite sektorenspezifische Identifikator des ID-Tokens aus der zweiten Sperrdatenbank gelöscht. Durch eine Datenbankabfrage, welche prüft, ob der zweite sektorenspezifische Identifikator in der zweiten Sperrdatenbank abgespeichert ist, kann der Sperrstatus des zugehörigen abgeleiteten Zertifikats effizient bestimmt werden.

Nach einer Ausführungsform ist der zweite sektorenspezifische Identifikator mit dem ersten sektorenspezifischen Identifikator identisch.

Bei der ersten und zweiten Sperrdatenbank handelt es sich um voneinander verschiedene Datenbanken, die in einer Ausführung jeweils eine Unterdatenbank ein und derselben gemeinsamen Datenbank sein können. Bei voneinander verschiedenen Datenbanken, kann es sich bei dem ersten und zweiten sektorenspezifischen Identifikator um identische Identifikatoren handeln. Dabei kann beispielsweise das abgeleitete Zertifikat gesperrt sein, indem der entsprechende Identifikator in der zweiten Datenbank gespeichert ist, während der ID-Token nach wie vor gültig ist, d.h. der entsprechende Identifikator in der ersten Datenbank nicht gespeichert ist.

Nach einer Ausführungsform ist in dem geschützten Speicherbereich des ID-Tokens ferner ein zweiter privater Schlüssel eines zweiten kryptographischen Schlüsselpaars bestehend aus dem zweiten privaten Schlüssel und einem zweiten öffentlichen Schlüssel gespeichert, wobei das von dem ID-Token erzeugte Zertifikat ferner den zweiten dem ID-Token zugeordneten sektorenspezifischen Identifikator beinhaltet, welcher aus dem zweiten privaten Schlüssel des ID-Token und dem öffentlichen Sektorenschlüssel des Sicherheitstoken berechnet ist.

Ausführungsformen der Erfindung können den Vorteil haben, dass durch die Verwendung zweier voneinander verschiedener Identifikatoren die Sperrung des ID-Token klar von der Sperrung eines abgeleiteten Zertifikats in demselben Sektor getrennt werden kann. Beispielsweise ermöglicht dies auch die erste und zweite Datenbank zusammenzuführen, ohne dass es zu Unklarheiten kommt.

Nach einer Ausführungsform weist das von dem ID-Token erzeugte Zertifikat ferner eine individuelle Kennung auf und die Kennung des erzeugten Zertifikats wird in der zweiten Sperrdatenbank zusammen mit dem zweiten Identifikator jeweils gespeichert und/oder gelöscht.

Ausführungsformen der Erfindung können den Vorteil haben, dass auch bei einer Gruppe von Zertifikaten, die mit demselben ID-Token in demselben Sektor erzeugt werden, einzelne Zertifikate gesperrt werden können, während andere Zertifikate aus derselben Gruppe ihre Gültigkeit beibehalten. Zudem ermöglicht dies, dass nach der Sperrung eines Zertifikats ein neues, gültiges Zertifikat mit demselben ID-Token für denselben Sektor erzeugt werden kann. In einer Ausführungsform wird die Kennung zusätzlich zum zweiten Identifikator gespeichert, in einer anderen Ausführungsform geht die Kennung in die Berechnung des zweiten Identifikators mit ein, sodass der zweite Identifikator für verschiede Zertifikate ein und desselben Sektors, die mit ein und demselben ID-Token erzeugt wurden, verschieden voneinander sind. In einer Ausführungsform ist die Kennung ein dem abgeleiteten Zertifikat zugeordneter kryptographischer Schlüssel, vorzugsweise ein privater Schlüssel.

Zusätzlich zu dem zweiten Identifikator kann eine individuelle Kennung des erzeugten Zertifikats, wie etwa eine Seriennummer oder der Wert eines dem Zertifikat zugeordneten kryptographischen Schlüssels, zusammen mit dem zweiten Identifikator in der zweiten Sperrdatenbank verwendet werden, um das abgeleitete Zertifikat von anderen Zertifikaten desselben Sektors und ID-Tokens zu unterscheiden.

Nach einer Ausführungsform umfasst das Verfahren ferner:
- Ausführen einer dritten Datenbankabfrage einer dritten Datenbank durch ein drittes Prüf-Computersystem zur Ermittlung, ob das durch den ID-Token erzeugte Zertifikat freigeschaltet ist, wobei die dritte Sperrdatenbank derart konfiguriert ist, dass aus ihr abfragbar ist, ob das erzeugte Zertifikat freigeschaltet ist,
- Erzeugen eines dritten Prüfsignals durch das dritte Prüf-Computersystem, welches das Ergebnis der dritten Datenbankabfrage anzeigt, wobei das Gültigkeitssignal die Gültigkeit des erzeugten Zertifikats unter der zusätzlichen Voraussetzung anzeigt, dass das dritte Prüfsignal anzeigt, dass das erzeugte Zertifikat freigeschaltet ist.

Ausführungsformen der Erfindung können den Vorteil haben, dass ein erzeugtes Zertifikat freigeschaltet werden muss, bevor es benutzt werden kann. Dabei kann die Prüfung der Gültigkeit des ID-Tokens von der Prüfung der Gültigkeit des abgeleiteten Zertifikats gelöst und zeitlich zu der Erzeugung des abgeleiteten Zertifikats verschoben werden. Somit wird es ermöglicht einen ID-Token zu sperren, während die bereits vor der Sperrung des ID-Tokens abgeleiteten Zertifikate ihre Gültigkeit behalten. Dies wird dadurch ermöglicht, dass die Prüfung der Gültigkeit des ID-Tokens als Voraussetzung für die Gültigkeit eines abgeleiteten Zertifikats bereits bei der Erzeugung des entsprechenden abgeleiteten Zertifikats erfolgt. Das weitere Schicksal des ID-Tokens ist von diesem Zeitpunkt an unerheblich für die zukünftige Gültigkeit des entsprechenden Zertifikats. Folglich kann der ID-Token gesperrt werden, sodass mit dem gesperrten ID-Token keine gültigen Zertifikate mehr erzeugt werden können, während die älteren Zertifikate ungehindert weiter benutzt werden können.

Dies ist beispielsweise vorteilhaft, falls der ID-Token abhandenkommt oder gestohlen wird, da die abgeleiteten Zertifikate weiterbenutzt werden können, während der Nutzer auf einen neuen ID-Token wartet bzw. diesen besorgt.

Beispielsweise betreibt der Hersteller der Sicherheitstoken einer zweiten Sperrdatenbank in Form eine Negativliste und eine dritte Sperrdatenbank in Form einer Positivliste für die erzeugten Zertifikate. Alternativ können die zweite und dritte Sperrdatenbank identisch und in Form einer Positivliste konfiguriert sein. Nach der Erzeugung und dem Speichern eines Zertifikats für einen Sicherheitstoken muss der Inhaber des ID-Tokens den zweiten Identifikator, beispielsweise den RI aus PrK.ICC.RI und ggf. eine Kennung des abgeleiteten Zertifikats in die dritte Datenbank eintragen. Wie beim Sperren mittels einer Negativliste werden durch den Eintrag in eine Positivliste keine weiteren Daten des ID-Token-Nutzers preisgegeben. Damit dies nur mit einem ID-Token funktionieren, welcher selbst nicht gesperrt ist, erfolgt vor der Eintragung des abgeleiteten Zertifikats in die dritte Datenbank eine Gültigkeitsprüfung des ID-Tokens auf Basis einer ersten Datenbankabfrage der ersten Sperrdatenbank, deren positives Ergebnis, d.h. eine Gültigkeit des ID-Tokens, Voraussetzung für eine Eintragung ist. Der dritte Identifikator ist vorzugsweise identisch mit dem zweiten Identifikator. Ein abgeleitetes Zertifikat auf einem Sicherheitstoken ist somit gültig, wenn es mit dem zweiten Identifikator in der dritten Datenbank, nicht aber in der zweiten Sperrdatenbank enthalten ist.

Die Konsequenzen bei dieser Ausführungsform sind, dass eine Sperrung des ID-Token nicht zur Sperrung bereits zuvor abgeleiteter Sicherheitstoken führt. Abgeleitete Zertifikate von Sicherheitstoken können mittels der zweiten Sperrdatenbank gesperrt werden können, ohne dass damit der ID-Token gesperrt wird. Bei Sperrung eines einzelnen abgeleiteten Zertifikats bleiben alle weiteren abgeleiteten Zertifikate von Sicherheitstoken anderer Sektoren gültig. Mit einem gesperrten ID-Token können keine gültigen abgeleiteten Zertifikate mehr erzeugt werden, da diese die Voraussetzung für eine Eintragung in die dritte Datenbank nicht erfüllen und somit nicht eingetragen werden.

Nach einer Ausführungsform ist das dritte Prüf-Computersystem mit dem ersten und/oder dem zweiten Prüf-Computersystem identisch.

Ausführungsformen der Erfindung können den Vorteil haben, dass die zur Ausführung der vorliegenden Erfindung benötigte Systeminfrastruktur vereinfacht werden kann. Vorzugsweise ist das dritte Prüf-Computersystem mit dem zweiten Prüf-Computersystem identisch.

Nach einer Ausführungsform wird zum Freischalten des erzeugten Zertifikats bei der Erzeugung des Zertifikats in der dritten Datenbank ein dritter sektorenspezifischer Identifikator gespeichert, sodass das dritte Prüfsignal als Ergebnis der dritten Datenbankabfrage der dritten Datenbank anzeigt, dass das erzeugte Zertifikat freigeschaltet ist, unter der Voraussetzung, dass der dritte sektorenspezifischer Identifikator in der dritten Datenbank gespeichert ist, wobei die erste Datenbankabfrage der ersten Sperrdatenbank durch das erste Prüf-Computersystem beim Speichern des dritten sektorenspezifischer Identifikator erfolgt und wobei der dritte sektorenspezifischen Identifikator in der dritten Datenbank nur unter der Voraussetzung gespeichert wird, dass das erste Prüfsignal anzeigt, dass der ID-Token nicht gesperrt ist.

Nach einer Ausführungsform wird zum Freischalten des erzeugten Zertifikats bei der Erzeugung des Zertifikats ein vorgespeicherter dritter sektorenspezifischer Identifikator aus der dritten Datenbank gelöscht, sodass das dritte Prüfsignal als Ergebnis der dritten Datenbankabfrage der dritten Datenbank anzeigt, dass das erzeugte Zertifikat freigeschaltet ist, unter der Voraussetzung, dass der dritte sektorenspezifischer Identifikator nicht in der dritten Datenbank gespeichert ist, wobei die erste Datenbankabfrage der ersten Sperrdatenbank durch das erste Prüf-Computersystem beim Löschen des dritten sektorenspezifischer Identifikator erfolgt und wobei der dritte sektorenspezifischen Identifikator in der dritten Datenbank nur unter der Voraussetzung gelöscht wird, dass das erste Prüfsignal anzeigt, dass der ID-Token nicht gesperrt ist.

Nach einer Ausführungsform ist der dritte sektorenspezifische Identifikator mit dem ersten und/oder dem zweiten Identifikator identisch ist.

In einer Ausführungsform sind die zweite Sperrdatenbank und die dritte Datenbank identisch ebenso wie der dritte und zweite sektorenspezifische Identifikator. Bei der Erzeugung des abgeleiteten Zertifikats wird der zweite sektorenspezifische Identifikator in die zweite Sperrdatenbank geschrieben, vorausgesetzt die Eintragungsvoraussetzung eines gültigen ID-Tokens ist erfüllt, und beim Sperren wieder aus der Datenbank gelöscht.

Nach einer Ausführungsform wird die individuelle Kennung des erzeugten Zertifikats zusammen mit dem dritten Identifikator in der dritten Sperrdatenbank gespeichert und/oder gelöscht.

Ausführungsformen der Erfindung können wiederum den Vorteil haben, dass einzelne Zertifikate einer Gruppe von Zertifikaten, die für denselben Sektor mit demselben ID-Token erzeugt werden, unabhängig voneinander freigeschaltet werden können.

Nach einer Ausführungsform werden bei der Erzeugung des Zertifikats die Leserechte für das erzeugte Zertifikat auf dem Sicherheitstoken so gesetzt, dass das Zertifikat nicht lesbar ist, wobei die Leserechte für den ersten sektorenspezifischen Identifikator auf dem Sicherheitstoken so gesetzt sind, dass der erste sektorenspezifische Identifikator lesbar ist, wobei auf eine Aufforderung des Nutzers des ID-Tokens zum Freischalten der Leserechte des erzeugten Zertifikats erfolgt an ein drittes Prüf-Computersystem hin die erste Datenbankabfrage der ersten Sperrdatenbank durch das erste Prüf-Computersystem, und wobei die Leserechte des erzeugten Zertifikats von dem dritten Prüf-Computersystem durch Umsetzen freigeschaltet werden, sodass das Zertifikat lesbar ist, unter der Voraussetzung, dass das erste Prüfsignal anzeigt, dass der ID-Token nicht gesperrt ist.

Ausführungsformen der Erfindung können den Vorteil haben, dass wiederum die Prüfung der Gültigkeit auf den Zeitpunkt der Erzeugung des abgeleiteten Zertifikats vorverlegt wird und somit einerseits verhindert wird, dass mit einem ungültigen ID-Token ein gültiges Zertifikat erzeugt werden kann, und es andererseits ermöglicht wird, dass bereits erzeugte Zertifikate ihre Gültigkeit beibehalten auch nachdem das zugrundeliegende ID-Token gesperrt wird.

Bei der Erzeugung und Speicherung der abgeleiteten Zertifikate bleibt der Zugriff auf diese auf den Sicherheitstoken gespeicherten Zertifikate anfangs gesperrt. Der Sicherheitstoken ist damit mangels vorweisbarem Zertifikats noch nicht nutzbar. Aber der erste Identifikator, d.h. das Sperrmerkmal des ID-Token, bei einem Personalausweis beispielsweise der RI aus PrK.ICC.SD, ist aus dem Sicherheitstoken auslesbar. Zusätzlich zur zweiten Sperrdatenbank für abgeleitete Zertifikate, die beispielsweise vom Hersteller der Sicherheitstoken in Form einer Negativliste betrieben wird, ist eine dritte Datenbank vorgesehen, welche im Zuge eines Freischalte-Dienstes beispielsweise ebenfalls vom Hersteller der Sicherheitstoken betreibt wird. Wenn das auf dem Sicherheitstoken gespeicherte Sperrmerkmal des ID-Token, d.h. der erste Identifikator nicht in der ersten als Negativliste konfigurierten Sperrdatenbank gespeichert ist und den ID-Token somit als nicht gesperrt erkennen lässt, wird das abgeleitete Zertifikate auf dem Sicherheitstoken les- und damit nutzbar gemacht. In diesem Fall ist ein abgeleitetes Zertifikat auf einem Sicherheitstoken somit gültig, wenn es zudem mit dem ersten Identifikator nicht in der zweiten Sperrdatenbank enthalten ist, falls diese als Negativliste konfiguriert ist. Im Falle eines Personalausweises wäre dies beispielsweise der aus PrK.ICC.RI berechnete RI. Die Konsequenzen bei dieser Ausführungsform sind, dass eine Sperrung des ID-Token nicht zur nachträglichen Sperrung bereits abgeleiteter Zertifikate führt. Einmal freigeschaltete Zertifikate bleiben freigeschaltet, d.h. ihr weiteres Schicksal ist von dem Schicksal des ID-Token unabhängig. Weiterhin können abgeleitete Zertifikate mittels der zweiten Sperrdatenbank gesperrt werden, ohne dass der zugrundeliegende ID-Token gesperrt wird. Von einem Sperren eines einzelnen abgeleiteten Zertifikats bleiben die anderen Zertifikate auf Sicherheitstoken aus anderen Sektoren unberührt, d.h. gültig. Schließlich können mit gesperrten ID-Token keine gültigen, d.h. lesbaren, abgeleiteten Zertifikate mehr erzeugt werden, da die Zertifikate durch den Freischalte-Dienst nicht lesbar geschaltet werden.

Nach einer Ausführungsform umfasst das Verfahren zur Erzeugung eines Zertifikats für einen Sicherheitstoken eines Nutzers durch einen ID-Token desselben Nutzers, wobei in dem ID-Token ein Zertifikat einer Dokumenten-PKI gespeichert ist und der ID-Token einen geschützten Speicherbereich aufweist, in dem ein dem Zertifikat der Dokumenten-PKI zugeordneter privater Schlüssel eines kryptographischen Schlüsselpaars bestehend aus dem privaten und einem öffentlichen Schlüssel zur Erzeugung des Zertifikats, zumindest ein weiterer, dem Zertifikat der Dokumenten-PKI zugeordneter erster privater Schlüssel eines weiteren ersten kryptographischen Schlüsselpaars bestehend aus dem ersten privaten Schlüssel und einem ersten öffentlichen Schlüssel, ein oder mehrere Attribute und eine über eine Kommunikationsschnittstelle des ID-Tokens empfangene Zeitinformation gespeichert sind, wobei in dem Sicherheitstoken ein Zertifikat einer Berechtigungs-PKI gespeichert ist, wobei in dem Zertifikat der Berechtigungs-PKI eine Schreibberechtigung für einen Schreibzugriff des Sicherheitstokens auf den geschützten Speicherbereich des ID-Tokens festgelegt ist und wobei das Zertifikat der Berechtigungs-PKI einen öffentlichen Sektorenschlüssel beinhaltet, welcher einem Sektor aus einer Mehrzahl von vordefinierten Sektoren zugeordnet und für alle Sicherheitstoken desselben Sektors identisch ist:
- Authentifizierung des Nutzers gegenüber dem ID-Token und gegenüber dem Sicherheitstoken,
- gegenseitige Authentifizierung des ID-Tokens und des Sicherheitstokens unter Verwendung des Zertifikats der Dokumenten-PKI und des Zertifikats der Berechtigungs-PKI,
- Erzeugung eines kryptografischen Schlüsselpaars bestehend aus einem privaten Schlüssel und einem öffentlichen Schlüssel durch den Sicherheitstoken,
- Durchführung des Schreibzugriffs des Sicherheitstokens auf den geschützten Speicherbereich des ID-Tokens zur Speicherung des öffentlichen Schlüssels des erzeugten Schlüsselpaars und des öffentlichen Sektorenschlüssels in dem ID-Token,
- Durchführung eines Zugriffs des ID-Tokens auf den geschützten Speicherbereich, um den öffentlichen Schlüssel, den zumindest einen weiteren privaten Schlüssel, den öffentlichen Sektorenschlüssel, die Zeitinformation und zumindest das eine Attribut zu lesen,
- Berechnung eines ersten Identifikators aus dem weiteren ersten privaten Schlüssel und dem öffentlichen Sektorenschlüssel durch den ID-Token,
- Erzeugung eines Datensatzes, der den öffentlichen Schlüssel, den öffentlichen Sektorenschlüssel oder einen kryptografisch davon abgeleiteter Wert, die Zeitinformation und das zumindest eine Attribut beinhaltet, durch den ID-Token,
- Signierung des Datensatzes mit dem in dem geschützten Speicherbereich gespeicherten privaten Schlüssel durch den ID-Token zur Erzeugung des Zertifikats,
- Ausgabe des Zertifikats durch den ID-Token an den Sicherheitstoken und Speicherung des Zertifikats auf dem Sicherheitstoken,
- Ausgabe des ersten Identifikators durch den ID-Token an den Sicherheitstoken und Speicherung des ersten Identifikators auf dem Sicherheitstoken,
- Verwendung des ersten Identifikators als Sperrmerkmal des ID-Token für eine erste Sperrdatenbank, wobei die erste Sperrdatenbank derart konfiguriert ist, dass aus ihr ein Sperrstatus des ID-Tokens abfragbar ist,
- Verwendung eines zweiten Identifikator als Sperrmerkmal des erzeugten Zertifikats für eine zweite Sperrdatenbank, wobei die zweite Sperrdatenbank derart konfiguriert ist, dass aus ihr ein Sperrstatus des erzeugten Zertifikats abfragbar ist.

Ausführungsformen der Erfindung ermöglichen es dem Nutzer, für einen Sicherheitstoken ein Zertifikat zu erzeugen, und zwar ohne Einschaltung eines eID-Provider-Computersystems und auch ohne das Erfordernis einer Netzwerkverbindung. Der Nutzer kann also selbst dann, wenn keine Netzwerkverbindung zur Verfügung steht autark und dennoch ohne Einschränkung hinsichtlich der Sicherheit und der Vertrauenswürdigkeit ein Zertifikat für seinen Sicherheitstoken mithilfe seines ID-Tokens erzeugen. Dies hat den weiteren Vorteil der Stärkung des Datenschutzes und der informationellen Selbstbestimmung des Nutzers, da keinerlei Daten des Nutzers für die Erzeugung des Zertifikats über ein Netzwerk übertragen werden müssen und auch keine hoheitliche Institution oder ein sonstiger Dritter hierzu involviert werden müssen.

Nach Ausführungsformen der Erfindung beinhaltet der Datensatz den ersten Identifikator und der erste Identifikator wird als Bestandteil des aus dem Datensatz erzeugten Zertifikats durch den ID-Token an den Sicherheitstoken ausgegeben und auf dem Sicherheitstoken gespeichert.

Nach Ausführungsformen der Erfindung hat der ID-Token keine eigene Energieversorgung, insbesondere keine Primärbatterie, sondern wird über seine Kommunikationsschnittstelle von einem Lesegerät mit Energie versorgt, solange sich der ID-Token in der Reichweite des Lesegeräts befindet. Der ID-Token verfügt dann also über keinen eigenen Zeitgeber, benötigt aber eine Zeitinformation für die Erzeugung des Zertifikats, um die Gültigkeitsdauer des Zertifikats limitieren zu können.

Um eine hierzu geeignete vertrauenswürdige Zeitinformation zu gewinnen, kann so vorgegangen werden, dass initial, zum Beispiel bei der Personalisierung des ID-Tokens, eine Zeitinformation in einen nichtflüchtigen Speicher des ID-Tokens gespeichert wird. Wird der ID-Token anschließend von dem Nutzer verwendet, so empfängt der ID-Token über seine Schnittstelle - je nach Verwendungshäufigkeit des Nutzers - in zeitlichen Abständen Zertifikate über seine Kommunikationsschnittstelle, mithilfe derer sich zum Beispiel externe Dienste gegenüber dem ID-Token authentifizieren und/oder deren Berechtigung nachweisen. Solche über die Kommunikationsschnittstelle empfangenen Zertifikate tragen eine Zeitinformation, die zur Aktualisierung der in dem ID-Token gespeicherten Zeitinformationen verwendet werden, beispielsweise wie es in der WO 2008/071627 A1 offenbart ist.

Nach einer Ausführungsform der Erfindung ist die Kommunikationsschnittstelle des ID-Tokens drahtlos ausgebildet, das heißt beispielsweise als sogenannte RFID- oder NFC-Schnittstelle. Neben der drahtlosen Kommunikation dient diese Schnittstelle auch zur Einkopplung von Energie in den ID-Token, um diesen mit der für seinen Betrieb erforderlichen elektrischen Energie zu versorgen. Zusätzlich zu dem nichtflüchtigen elektronischen Speicher hat der ID-Token einen flüchtigen elektronischen Speicher, wie zum Beispiel ein RAM oder einen Arbeitsspeicher des Prozessors.

Solange ein Netzwerk zur Verfügung steht, kann der Nutzer seinen ID-Token für verschiedene Dienste, beispielsweise für eCommerce oder eGovernment-Anwendungen verwenden.

Nach einer Ausführungsform ist der zweite sektorenspezifische Identifikator mit dem ersten sektorenspezifischen Identifikator identisch ist.

Nach einer Ausführungsform ist in dem geschützten Speicherbereich des ID-Tokens ein weiterer, dem Zertifikat der Dokumenten-PKI zugeordneter zweiter privater Schlüssel eines weiteren zweiten kryptographischen Schlüsselpaars bestehend aus dem zweiten privaten Schlüssel und einem zweiten öffentlichen Schlüssel gespeichert, wobei das Verfahren ferner umfasst:
- Berechnung eines zweiten Identifikators aus dem weiteren zweiten privaten Schlüssel und dem öffentlichen Sektorenschlüssel durch den ID-Token,
- Erzeugung des Datensatzes durch den ID-Token, sodass der Datensatz zusätzlich den zweiten Identifikator beinhaltet.

Nach einer Ausführungsform ist der von dem Sektorenschlüssel abgeleitete kryptografische Wert ein Hash-Wert.

Nach einer Ausführungsform wird der erste und/oder zweite Identifikator durch den ID-Token durch Punktmultiplikation des entsprechenden weiteren ersten und/oder zweiten privaten Schlüssels und des öffentlichen Sektorenschlüssels auf einer elliptischen Kurve berechnet.

Nach einer Ausführungsform ist die erste Sperrdatenbank derart konfiguriert, dass auf eine Sperraufforderung des Nutzers des ID-Tokens zum Sperren des ID-Tokens hin in der ersten Sperrdatenbank der erste sektorenspezifische Identifikator gespeichert wird, sodass ein auf eine erste Datenbankabfrage der ersten Sperrdatenbank durch ein erstes Prüf-Computersystem zur Ermittlung eines Sperrstatus des ID-Tokens hin erzeugtes erstes Prüfsignal als Ergebnis der ersten Datenbankabfrage anzeigt, dass der ID-Token nicht gesperrt ist, unter der Voraussetzung, dass der erste sektorenspezifische Identifikator nicht in der ersten Sperrdatenbank gespeichert ist.

Nach einer Ausführungsform ist die erste Sperrdatenbank derart konfiguriert, dass der erste sektorenspezifische Identifikator des ID-Tokens in der ersten Sperrdatenbank vorgespeichert ist und auf eine Sperraufforderung des Nutzers des ID-Tokens zum Sperren des ID-Tokens hin der vorgespeicherte erste sektorenspezifische Identifikator aus der ersten Sperrdatenbank gelöscht wird, sodass das erste Prüfsignal als Ergebnis der ersten Datenbankabfrage der ersten Sperrdatenbank anzeigt, dass der ID-Token nicht gesperrt ist, unter der Voraussetzung, dass der erste sektorenspezifische Identifikator in der ersten Sperrdatenbank gespeichert ist.

Nach einer Ausführungsform ist die zweite Sperrdatenbank derart konfiguriert, dass auf eine Sperraufforderung des Nutzers des ID-Tokens zum Sperren des erzeugten Zertifikats hin in der zweiten Sperrdatenbank ein zweiter sektorenspezifischer Identifikator gespeichert wird, sodass ein auf eine zweite Datenbankabfrage der zweiten Sperrdatenbank durch ein zweites Prüf-Computersystem zur Ermittlung eines Sperrstatus des erzeugten Zertifikats hin erzeugtes zweites Prüfsignal als Ergebnis der zweiten Datenbankabfrage anzeigt, dass das erzeugte Zertifikat nicht gesperrt ist, unter der Voraussetzung, dass der zweite sektorenspezifische Identifikator nicht in der zweiten Sperrdatenbank gespeichert ist.

Nach einer Ausführungsform ist die zweite Sperrdatenbank derart konfiguriert, dass in der zweiten Sperrdatenbank ein zweiter sektorenspezifischer Identifikator des erzeugten Zertifikats vorgespeichert ist und auf eine Sperraufforderung des Nutzers des ID-Tokens zum Sperren des erzeugten Zertifikats hin der vorgespeicherte zweite sektorenspezifische Identifikator aus der zweiten Sperrdatenbank gelöscht wird, sodass das zweite Prüfsignal als Ergebnis der zweiten Datenbankabfrage der zweiten Sperrdatenbank anzeigt, dass das erzeugte Zertifikat nicht gesperrt ist, unter der Voraussetzung, dass der zweite sektorenspezifische Identifikator in der zweiten Sperrdatenbank gespeichert ist.

Nach einer Ausführungsform weist das erzeugte Zertifikat eine individuelle Kennung auf und die Kennung des erzeugten Zertifikats wird in der zweiten Sperrdatenbank zusammen mit dem zweiten Identifikator jeweils gespeichert und/oder gelöscht.

Nach einer Ausführungsform umfasst das Verfahren ferner:
- Freischalten des erzeugten Zertifikats auf eine Aufforderung des Nutzers des ID-Tokens zum Freischalten des erzeugten Zertifikats hin durch Speichern eines dritten sektorenspezifischen Identifikators in einer dritten Datenbank, wobei die dritte Datenbank derart konfiguriert ist, dass ein auf eine dritte Datenbankabfrage der dritten Sperrdatenbank durch ein drittes Prüf-Computersystem zur Ermittlung eines Sperrstatus des erzeugten Zertifikats hin erzeugtes drittes Prüfsignal als Ergebnis der dritten Datenbankabfrage anzeigt, dass das erzeugte Zertifikat freigeschaltet ist, unter der Voraussetzung, dass der dritte sektorenspezifischer Identifikator in der dritten Datenbank gespeichert ist, wobei die erste Datenbankabfrage der ersten Sperrdatenbank durch das erste Prüf-Computersystem beim Speichern des dritten sektorenspezifischer Identifikator erfolgt und wobei der dritte sektorenspezifischen Identifikator in der dritten Datenbank nur unter der Voraussetzung gespeichert wird, dass das erste Prüfsignal anzeigt, dass der ID-Token nicht gesperrt ist.

Nach einer Ausführungsform umfasst das Verfahren ferner:
- Freischalten des erzeugten Zertifikats auf eine Aufforderung des Nutzers des ID-Tokens zum Freischalten des erzeugten Zertifikats hin durch Löschen eines vorgespeicherten dritten sektorenspezifischen Identifikators aus einer dritten Datenbank, wobei die dritte Datenbank derart konfiguriert ist, dass ein auf eine dritte Datenbankabfrage der dritten Sperrdatenbank durch ein drittes Prüf-Computersystem zur Ermittlung eines Sperrstatus des erzeugten Zertifikats hin erzeugtes drittes Prüfsignal als Ergebnis der dritten Datenbankabfrage anzeigt, dass das erzeugte Zertifikat freigeschaltet ist, unter der Voraussetzung, dass der dritte sektorenspezifischer Identifikator nicht in der dritten Datenbank gespeichert ist, wobei die erste Datenbankabfrage der ersten Sperrdatenbank durch das erste Prüf-Computersystem beim Speichern des dritten sektorenspezifischer Identifikator erfolgt und wobei der dritte sektorenspezifischen Identifikator in der dritten Datenbank nur unter der Voraussetzung gelöscht wird, dass das erste Prüfsignal anzeigt, dass der ID-Token nicht gesperrt ist.

Nach einer Ausführungsform ist der dritte sektorenspezifische Identifikator mit dem ersten und/oder dem zweiten Identifikator identisch.

Nach einer Ausführungsform wird die Kennung des erzeugten Zertifikats in der dritten Sperrdatenbank zusammen mit dem dritten Identifikator jeweils gespeichert und/oder gelöscht.

Nach einer Ausführungsform werden die Leserechte für das auf dem Sicherheitstoken gespeicherte Zertifikat bei der Erzeugung so gesetzt, dass das Zertifikat nicht lesbar ist, und wobei die Leserechte für den ersten sektorenspezifischen Identifikator auf dem Sicherheitstoken so gesetzt sind, dass der erste sektorenspezifische Identifikator lesbar ist, wobei das Verfahren weiter umfasst:
- auf eine Aufforderung des Nutzers des ID-Tokens zum Freischalten des erzeugten Zertifikats an ein drittes Prüf-Computersystem hin, Ausführen der ersten Datenbankabfrage der ersten Sperrdatenbank durch ein erstes Prüf-Computersystem zur Ermittlung eines Sperrstatus des ID-Tokens,
- Erzeugen des ersten Prüfsignals, welches das Ergebnis der ersten Datenbankabfrage anzeigt,
- Freischalten der Leserechte des erzeugten Zertifikats durch ein drittes Prüf-Computersystem durch Umsetzen, sodass das Zertifikat lesbar ist, unter der Voraussetzung anzeigt, dass das erste Prüfsignal anzeigt, dass der ID-Token nicht gesperrt ist.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsgemäßen elektronischen Systems,
- Figur 2: ein Blockdiagramm einer zweiten Ausführungsform eines erfindungsgemäßen elektronischen Systems,
- Figur 3: ein Ablaufdiagramm einer ersten Ausführungsform eines erfindungsgemäßen Verfahrens gemäß Figur 1,
- Figur 4: ein Ablaufdiagramm einer zweiten Ausführungsform eines erfindungsgemäßen Verfahrens gemäß Figur 2,
- Figur 5: eine Ausführungsform der Struktur einer Dokumenten-PKI und einer Berechtigungs-PKI für ein erfindungsgemäßes elektronisches System,
- Figur 6: ein Blockdiagramm einer Ausführungsform eines erfindungsgemäßen Computersystems,
- Figur 7: ein UML-Diagramm einer Ausführungsform eines erfindungsgemäßen Verfahrens,
- Figur 8: ein UML-Diagramm einer weiteren Ausführungsform eines erfindungsgemäßen Verfahrens.

Im Weiteren werden identische oder einander entsprechende Elemente der nachfolgend beschriebenen Ausführungsformen mit identischen Bezugszeichen gekennzeichnet.

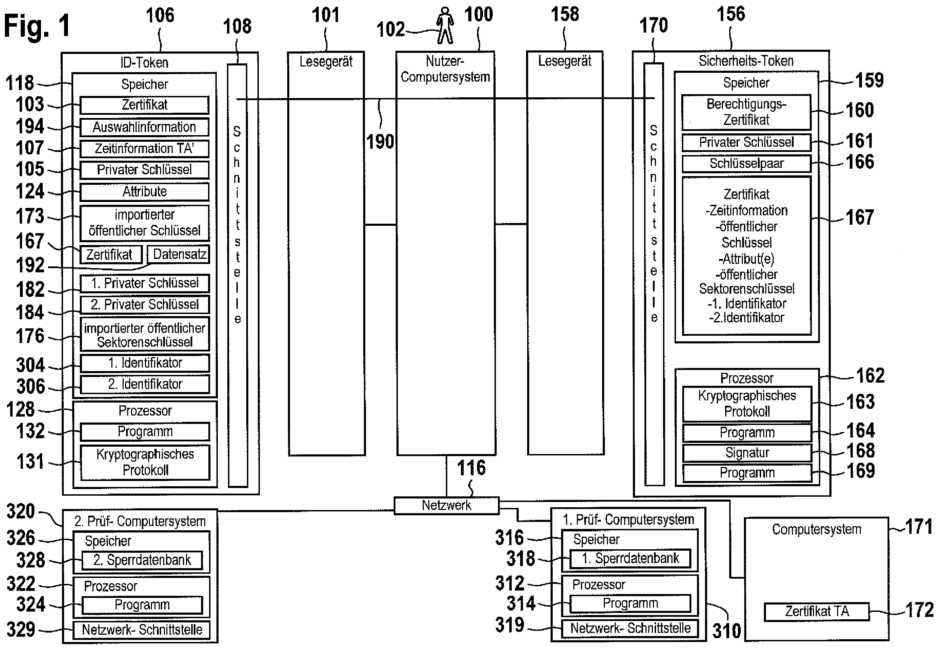

Die Figur 1 zeigt ein elektronisches System mit einem Nutzer-Computersystem 100 eines Nutzers 102. Bei dem Nutzer-Computersystem 100 kann es sich um einen Personal Computer, einen tragbaren Computer, wie zum Beispiel einen Laptop- oder Notebook-Computer, ein mobiles Telekommunikationsgerät, insbesondere ein Smartphone oder einen Tablet-Computer, oder einen anderen mobilen batteriegetriebenen Computer handeln, der vorzugsweise über eine Netzwerkschnittstelle zur Kommunikation über ein Netzwerk 116, bei dem es sich um ein privates oder ein öffentliches Netzwerk, insbesondere das Internet, handeln kann, verfügt. An das Nutzer-Computersystem 100 ist ein Lesegerät 101 angeschlossen, beispielsweise ein Chipkarten-Lesegerät, insbesondere ein Klasse I, II, III oder IV Kartenlesegerät für eine kontaktbehaftete oder kontaktlose Kommunikation mit einem ID-Token 106.

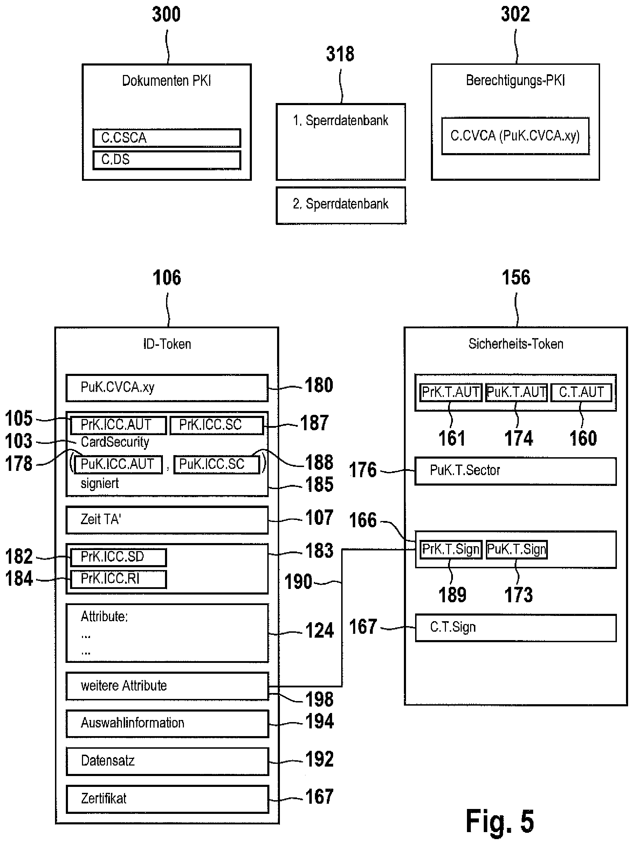

Der ID-Token 106 hat einen elektronischen Speicher 118, in dem ein Zertifikat 103 einer Dokumenten-PKI 300 (vgl. Fig. 5) gespeichert ist. In dem Zertifikat 103 befindet sich ein öffentlicher Schlüssel, der zusammen mit einem privaten Schlüssel 105 ein asymmetrisches kryptografisches Schlüsselpaar bildet, sodass der private Schlüssel 105 dem Zertifikat 103 zugeordnet ist. Der private Schlüssel 105 sowie Attribute 124 des Nutzers 102 und/oder des ID-Tokens 106 sowie eine Zeitinformation 107, die das aktuelle Datum je nach der Häufigkeit der Verwendung des ID-Tokens 106 mehr oder weniger gut approximiert, sind in einem geschützten Speicherbereich des elektronischen Speichers 118 gespeichert. Zudem sind in dem geschützten Speicherbereich des elektronischen Speichers 118 in Form des ersten privaten Schlüssels 182 und des zweiten privaten Schlüssels 184 weitere dem Zertifikat 103 zugeordnete private Schlüssel gespeichert.

Der ID-Token 106 hat ferner einen Prozessor 128, insbesondere einen Mikroprozessor oder Mikrocontroller, der mit dem Speicher 118 eine bauliche Einheit bilden kann, insbesondere auf demselben Chip integriert sein kann. Der Prozessor 128 dient zur Ausführung von Programminstruktionen 131, die die Ausführung der den ID-Token 106 betreffenden Schritte eines oder mehrerer kryptografischer Protokolle implementieren. Zur Signierung eines Datensatzes 192 dient der Prozessor 128 ferner zur Ausführung von Programminstruktionen 132, durch die eine Signatur eines Zertifikats 167 erzeugt wird.

Der ID-Token 106 hat ferner eine Kommunikationsschnittstelle 108 zur Kommunikation mit dem Lesegerät 101. Bei dem Lesegerät 101 kann es sich um ein Peripheriegerät des Nutzer-Computersystems 100 oder um einen integralen baulichen Bestandteil des Nutzer-Computersystems 100 handeln. Das Lesegerät 101 kann über einen oder mehrere Kanäle verfügen, sodass es gleichzeitig eine Kommunikationsverbindung zu dem ID-Token 106 und einem Sicherheitstoken 156 aufbauen kann. Im Weiteren wird aber ohne Beschränkung der Allgemeinheit davon ausgegangen, dass das Lesegerät 101 nur mit dem ID-Token 106 kommunizieren kann, sodass ein weiteres Lesegerät 158 des Nutzer-Computersystems 100 zur Kommunikation mit dem Sicherheitstoken 156 dient. Auch bei diesem weiteren Lesegerät 158 kann es sich um eine Peripheriekomponente des Nutzer-Computersystems 100 oder einen integralen Bestandteil des Nutzer-Computersystems 100 handeln.

Der Sicherheitstoken 156 hat einen elektronischen Speicher 159, in dem ein Berechtigungszertifikat 160 des Sicherheitstokens gespeichert ist. Das Berechtigungszertifikat 160 legt eine Schreibberechtigung für einen Schreibzugriff des Sicherheitstokens 156 auf den ID-Token 106 fest und beinhaltet einen öffentlichen Schlüssel eines asymmetrischen kryptografischen Schlüsselpaars, zu dem ein privater Schlüssel 161 gehört. Der private Schlüssel 161 ist in einem geschützten Speicherbereich des Speichers 159 gespeichert.

Der Sicherheitstoken 156 hat einen Prozessor 162, wie zum Beispiel einen Mikroprozessor oder Mikrocontroller, der eine bauliche Einheit mit dem Speicher 159 bilden kann. Der Prozessor 162 dient zur Ausführung von Programminstruktionen 163 zur Durchführung derjenigen Schritte eines kryptografischen Protokolls, die den Sicherheitstoken 156 betreffen.

Der Prozessor 162 dient beispielsweise auch zur Ausführung von Programminstruktionen 169. Die Programminstruktionen 169 dienen zur Nutzerauthentifizierung, d.h. zur Authentifizierung des Nutzers 102 gegenüber dem Sicherheitstoken.

Der Prozessor 162 dient ferner zur Ausführung von Programminstruktionen 164 zur Erzeugung eines asymmetrischen kryptografischen Schlüsselpaars 166, für welches das Zertifikat 167 der Dokumenten-PKI 300 erzeugt werden soll. Der Prozessor 162 dient ferner zur Ausführung von Programminstruktionen 168, durch die eine Signatur erzeugt wird. Zur Freischaltung dieser Signaturfunktion kann vorgesehen sein, dass der Nutzer 102 eine Signatur PIN eingeben muss.

Zur Kommunikation mit dem Lesegerät 158 hat der Sicherheitstoken 156 eine Kommunikationsschnittstelle 170.

Bei dem Computersystem 171 des elektronischen Systems gemäß Figur 1 kann es sich um ein ID-Provider-Computersystem oder ein Dienst-Computersystem handeln. Das Computersystem 171 hat ein Zertifikat 172, beispielsweise einer Berechtigungs-PKI 302 (vgl. Fig. 5). Das Zertifikat 172 beinhaltet eine Angabe der Anfangszeit TA von dessen Gültigkeitsdauer, wohingegen in dem ID-Token 106 die Zeitinformation TA' gespeichert ist.

Über das Lesegerät 101 des Nutzer-Computersystems 100 kann eine Kommunikationsverbindung zwischen dem ID-Token 106 und dem Computersystem 171 aufgebaut werden, sofern eine Verbindung des Nutzer-Computersystems 100 mit dem Netzwerk 116 möglich ist. Über diese Kommunikationsverbindung kann sich das Computersystem 171 gegenüber dem ID-Token 106 authentifizieren und seine Berechtigung nachweisen, indem es sein Zertifikat 172 über diese Kommunikationsverbindung an den ID-Token 106 überträgt. Der ID-Token 106 empfängt so auch die Anfangszeit TA des Zertifikats 172.

Wenn die Anfangszeit TA des Zertifikats 172 nach der in dem ID-Token 106 gespeicherten Zeitinformation TA' 107 liegt, ersetzt der Prozessor 128 durch einen Zugriff auf den elektronischen Speicher 118 die Zeitinformation TA' durch die aktuellere Zeitinformation, das heißt die Anfangszeit TA. Auf diese Art und Weise wird bei aufeinanderfolgenden Authentifizierungen externer Computersysteme die Zeitinformation 107 wiederholt aktualisiert, sodass die in dem ID-Token gespeichert Zeitinformation 107 das aktuelle Datum mehr oder weniger gut approximiert. Zur Aktualisierung der Zeitinformation 107 kann entsprechend WO 2008/071627 A1 verfahren werden. Hierzu kann auch das Berechtigungszertifikat 160 oder das Berechtigungszertifikat eines anderen Sicherheitstokens verwendet werden; eine Verbindung über das Netzwerk 116 ist also nicht zwingend.

Zur Erzeugung des Zertifikats 167 wird beispielsweise wie folgt vorgegangen:
1. Der Nutzer 102 bringt den ID-Token 106 in die Reichweite des Lesegeräts 101 und den Sicherheitstoken 156 in die Reichweite des Lesegeräts 158, wobei der Aufbau einer Verbindung zwischen dem Nutzer-Computersystem 100 und dem Netzwerk 116 nicht erforderlich ist. Die Erzeugung des Zertifikats kann also auch dann erfolgen, wenn sich das Nutzer-Computersystem 100 außerhalb der Reichweite des Netzwerks 116 befindet oder der Aufbau einer Netzwerkverbindung aus anderen technischen Gründen nicht möglich oder nicht erwünscht ist.
2. Der Nutzer 102 authentifiziert sich gegenüber dem ID-Token 106, beispielsweise durch Eingabe einer ersten PIN, die dem ID-Token 106 zugeordnet ist. Hierzu gibt der Nutzer 102 seine erste PIN beispielsweise in das Lesegerät 101 ein, sofern dieses über eine eigene Tastatur verfügt, oder über eine Tastatur des Nutzer-Computersystems 100. Durch Ausführung eines kryptografischen Protokolls wird die erste PIN dann von dem ID-Token 106 verifiziert, beispielsweise indem die eingegebene erste PIN von dem Lesegerät 101 bzw. dem Nutzer-Computersystem 100 zu dem ID-Token 106 übertragen wird, und die eingegebene erste PIN mit einem gespeicherten Referenzwert verglichen wird, um die Validität der ersten PIN zu überprüfen.
   Vorzugsweise erfolgt die Authentifizierung des Nutzers gegenüber dem ID-Token mittels einer "Fernüberprüfung", worunter hier jedes Verfahren verstanden wird, bei dem die zu überprüfende PIN nicht in den ID-Token unmittelbar eingegeben wird, um sie mit dem dort gespeicherten Referenzwert auf Übereinstimmung zu prüfen, sondern bei dem die Überprüfung mittels eines das Lesegerät und den ID-Token involvierenden Protokolls erfolgt, bei dem die PIN, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102013202001 A1. Vorzugsweise authentifiziert sich neben dem Nutzer auch das Lesegerät 101 gegenüber dem ID-Token 106, wobei auch ein gesicherter Übertragungskanal, das heißt ein sogenannter Secure Messaging-Kanal, zwischen dem ID-Token und dem Lesegerät aufgebaut werden kann, beispielsweise indem ein Session Key nach einem Diffie-Hellman-Protokoll zwischen dem ID-Token und dem Lesegerät vereinbart wird.
   In analoger Art und Weise authentifiziert sich der Nutzer 102 auch gegenüber seinem Sicherheitstoken 156, indem er in das Lesegerät 158 bzw. das Nutzer-Computersystem 100 seine zweite PIN eingibt, die von dem Sicherheitstoken 156 verifiziert wird.
3. Nach erfolgreicher Authentifizierung des Nutzers 102 gegenüber dem Sicherheitstoken 156 wird die Ausführung der Programminstruktionen 164 durch den Prozessor 162 gestartet, indem beispielsweise von dem Nutzer-Computersystem 100 ein entsprechendes Kommando über das Lesegerät 158 an den Sicherheitstoken 156 gesendet wird. Daraufhin erzeugen die Programminstruktionen 164 das kryptografische Schlüsselpaar 166 bestehend aus dem privaten Schlüssel 189 (vgl. Fig. 5) und dem öffentlichen Schlüssel 173, für welches das Zertifikat 167 erzeugt werden soll.
4. Der öffentliche Schlüssel 173 des Schlüsselpaars 166 wird dann von dem Sicherheitstoken 156 aus dem elektronischen Speicher 159 über die Schnittstelle 170, das Lesegerät 158, das Nutzer-Computersystem 100, das Lesegerät 101 und die Schnittstelle 108 in den elektronischen Speicher 118 des ID-Tokens 106 importiert, indem ein entsprechender Schreibzugriff durchgeführt wird. Die hierzu erforderliche Berechtigung zum Schreiben in den elektronischen Speicher 118 wird mithilfe des Berechtigungszertifikats 160 nachgewiesen. In analoger Weise wird der öffentliche Sektorenschlüssel 176 von dem Sicherheitstoken 156 aus dem elektronischen Speicher 159 in den elektronischen Speicher 118 des ID-Tokens 106 importiert und dort gespeichert.
   Zur Durchführung des Schreibzugriffs sendet das Nutzer-Computersystem 100 beispielsweise ein entsprechendes Kommando an den Sicherheitstoken 156, der daraufhin sein Berechtigungszertifikat 160 über die Schnittstelle 170 ausgibt. Das Berechtigungszertifikat 160 wird dann von dem Nutzer-Computersystem 100 an den ID-Token 106 weitergeleitet, weicher die Validität des Berechtigungszertifikats 106 und das Vorliegen der erforderlichen Schreibberechtigung überprüft. Je nach Ausführungsform kann der ID-Token 106 anhand der Zeitinformation 107 auch prüfen, ob eine Gültigkeitsdauer des Berechtigungszertifikats 106 abgelaufen ist.
   Beispielsweise aufgrund eines weiteren Kommandos des Nutzer-Computersystems 100 gibt der Sicherheitstoken 156 daraufhin den öffentlichen Schlüssel 173 des Schlüsselpaars 166 über seine Schnittstelle 170 aus, die von dem Nutzer-Computersystem 100 zu dem ID-Token 106 weitergeleitet wird, sodass der öffentliche Schlüssel 173 in den ID-Token 106 importiert und in dessen elektronischen Speicher 118 gespeichert wird.
5. Der Prozessor 128 des ID-Tokens 106 führt dann aufgrund der Speicherung des öffentlichen Schlüssels 173 in dem elektronischen Speicher 118 einen Zugriff auf Speicher 118 durch, um den öffentlichen Schlüssel 173, den ersten privaten Schlüssel 182, den zweiten privaten Schlüssel 184, den öffentlichen Sektoren Schlüssel 176, die Zeitinformation 107 und zumindest eines der Attribute 124 zu lesen.
6. Der Prozessor 128 berechnet aus dem ersten privaten Schlüssel 182 und dem öffentlichen Sektorenschlüssel 176 einen ersten sektorenspezifischen Identifikator 304. Zudem berechnet der Prozessor 128 aus dem zweiten privaten Schlüssel 184 und dem öffentlichen Sektorenschlüssel 176 einen zweiten sektorenspezifischen Identifikator 306.
7. Der Prozessor 128 erzeugt dann aus dem öffentlichen Schlüssel 173, dem öffentlichen Sektorenschlüssel 176, dem ersten Identifikator 304, dem zweiten Identifikator 306, der Zeitinformation 107 und dem zumindest einen der Attribute 124 einen Datensatz 192.
8. Dieser Datensatz 192 wird dann durch den Prozessor 128 mit dem privaten Schlüssel 105 durch Ausführung der Programminstruktionen 132 signiert, sodass nunmehr in dem ID-Token 106 das Zertifikat 167, das heißt der signierte Datensatz 192, vorliegt.
9. Das Zertifikat 167 wird dann über die Schnittstelle 108 des ID-Tokens 106 ausgegeben und beispielsweise über das Nutzer-Computersystem 100 an den Sicherheitstoken 156 weitergeleitet, um es in dessen elektronischen Speicher 159 zu speichern.
10. Das Nutzer-Computersystem 100 sendet zudem nach der Erzeugung des Zertifikats 167 eine Aufforderung über das Netzwerk 116 an das zweite Prüf-Computersystem 320 den zweiten Identifikator 306 in die zweite Sperrdatenbank 328 einzutragen. Das zweite Prüf-Computersystem 320 schickt daraufhin eine Anfrage über das Netzwerk 116 an das erste Prüf-Computersystem 310, welches daraufhin eine Datenbankabfrage der ersten Sperrdatenbank 318 ausführt, ein Prüfsignal mit dem Ergebnis der Datenbankabfrage erzeugt und als Antwort an das zweite Prüf-Computersystem 320 zurücksendet. Unter der Voraussetzung, dass das Prüfsignal anzeigt, dass der ID-Token 106 nicht gesperrt ist, trägt das zweite Prüf-Computersystem 320 den zweiten Identifikator 306 in die zweite Sperrdatenbank 328 ein.
   Zum Sperren des ID-Tokens 106 sendet das Nutzer-Computersystem 100 eine entsprechende Aufforderung an das erste Prüf-Computersystem 310, woraufhin der ersten Identifikator 304 in die erste Sperrdatenbank 318 gespeichert wird. Der ID-Token 106 ist gültig, solange der ersten Identifikator 304 nicht in die erste Sperrdatenbank 318 gespeichert ist.
   Zum Sperren des erzeugten Zertifikats 167 sendet das Nutzer-Computersystem 100 eine entsprechende Aufforderung an das zweite Prüf-Computersystem 320, woraufhin der zweite Identifikator 306 aus der zweiten Sperrdatenbank 328 wieder gelöscht wird. Das erzeugte Zertifikat 167 ist also gültig solange der zweite Identifikator 306 in der zweiten Sperrdatenbank 328 gespeichert ist und wird durch Löschen des zweiten Identifikators 306 aus der zweiten Sperrdatenbank 328 gesperrt.
   Alternativ kann zum Freischalten ein zusätzliches drittes Prüf-Computersystem (nicht gezeigt) vorgesehen sein, welches die zuvor beschriebene Freischaltfunktion des zweiten Prüf-Computersystems 320 ausführt, sodass das zweite Prüf-Computersystems 320 nur zum Sperren des erzeugten Zertifikats 167 dient. Hierzu kann das zweite Prüf-Computersystem 320 auf eine entsprechende Aufforderung des Nutzer-Computersystems 100 hin, beispielsweise den zweite Identifikator 306 in die zweite Sperrdatenbank 328 eintragen. In diesem Fall ist das erzeugten Zertifikats 167 gültig solange der zweite Identifikator 306 in einer dritten Datenbank (nicht gezeigt) des dritten Prüf-Computersystems, nicht aber in der zweiten Sperrdatenbank 328 des Prüf-Computersystems 320 gespeichert ist. Falls der zweite Identifikator 306 in der dritten Datenbank nicht gespeichert und/oder in der zweiten Sperrdatenbank 328 gespeichert ist, ist das erzeugten Zertifikats 167 gesperrt.

Im Weiteren kann der Nutzer 102 seinen Sicherheitstoken 156 beispielsweise für die Erzeugung von Signaturen mit seinem Zertifikat 167 verwenden.

Nach Ausführungsformen der Erfindung wird in dem oben genannten Schritt 2. ein Kanal mit Ende-zu-Ende-Verschlüsselung zwischen dem ID-Token 106 und dem Sicherheitstoken 156 aufgebaut, beispielsweise aufgrund der Durchführung eines kryptografischen Protokolls, durch welches ein symmetrischer Session Key zwischen dem ID-Token 106 und dem Sicherheitstoken 156 vereinbart wird. Zum Schutz gegen Manipulationen wird der öffentliche Schlüssel 173 durch den Schreibzugriff des Sicherheitstokens 156 über diesen Kanal mit Ende-zu-Ende-Verschlüsselung zu dem ID-Token 106 übertragen.

Beispielsweise erfolgt nach der erfolgreichen Authentifizierung des Nutzers sowohl gegenüber dem ID-Token als auch gegenüber dem Sicherheitstoken eine gegenseitige Authentifizierung des ID-Tokens 106 und des Sicherheitstokens 156 unter Verwendung des Zertifikats 103 der Dokumenten-PKI 300 bzw. des Berechtigungszertifikats 160 der Berechtigungs-PKI 302. Hierbei wird dann auch der symmetrischer Session Key für die Ende-zu-Ende-Verschlüsselung vereinbart.

Alternativ oder zusätzlich kann zur Sicherung der Übertragung des öffentlichen Schlüssels 173 von dem Sicherheitstoken 156 zu dem ID-Token 106 der öffentliche Schlüssel 173 durch den Sicherheitstoken 156 mithilfe von dessen privaten Schlüssel 161 signiert werden. Vor dem Schreiben des öffentlichen Schlüssels 173 in den elektronischen Speicher 118 prüft der Prozessor 128 die Validität der Signatur des öffentlichen Schlüssels 173, sodass der öffentliche Schlüssel 173 nur dann in dem elektronischen Speicher 118 gespeichert wird, wenn diese Signatur valide ist.

Nach Ausführungsformen der Erfindung kann der Nutzer 102 über sein Nutzer-Computersystem 100 dasjenige oder diejenigen der Attribute 124 auswählen, die in das Zertifikat 167 eingehen sollen. Dies ist besonders vorteilhaft, da der Nutzer 102 so selbst festlegen kann, welche Attribute er in dem Zertifikat 167 für Dritte preisgeben möchte. Im Sinne der Datensparsamkeit kann der Nutzer 102 dabei nur solche Attribute auswählen, die zur Ermöglichung einer gegebenen Anwendung zwingend erforderlich sind.

Zur Auswahl eines oder mehrerer der Attribute 124 gibt der Nutzer 102 eine entsprechende Auswahl an das Computersystem 100 ein, welches daraufhin ein Auswahlsignal generiert, welches über das Lesegerät 101 an den ID-Token 106 übertragen wird. Beispielsweise erfolgt die Übertragung der Auswahl an Attributen zusammen mit der PIN-Eingabe in dem o.g. Schritt 2.

Diese von dem Nutzer vorgenommene Auswahl wird in dem elektronischen Speicher 118 als Auswahlinformation gespeichert. Der Prozessor 128 greift dann in dem oben genannten Schritt 5 nur auf die in der Auswahlinformation 194 spezifizierten Attribute der Attribute 124 zu, um diese auszulesen und in den Schritten 7 und 8 den Datensatz 192 damit zu erzeugen.

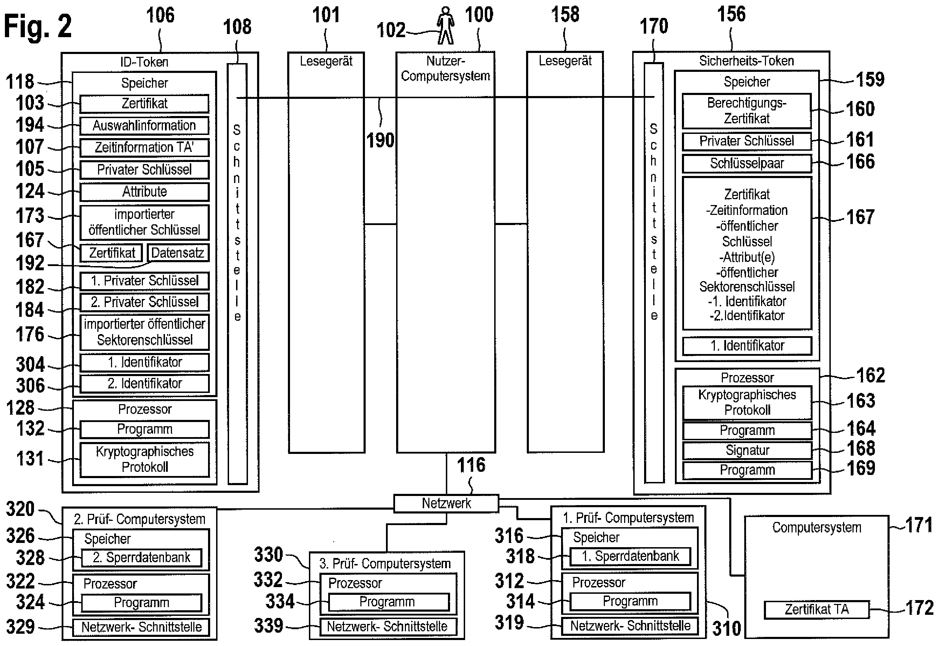

Die Figur 2 zeigt ein elektronisches System, welches sich von dem in Figur 1 gezeigten System nur durch das zusätzlich vorgesehene dritte Computersystem unterscheidet. Zur Erzeugung des Zertifikats 167 wird daher beispielsweise analog wie für Figur 1 beschrieben vorgegangen, wobei lediglich des Freischalten (Schritt 10) abweicht:
In dieser alternativen Ausführungsform wird das Zertifikat 167 derart erzeugt und auf dem Sicherheitstoken 156 gespeichert, dass es aufgrund seiner Leserechte nicht gelesen und somit, beispielsweise zum Signieren, nicht genutzt werden kann. Das Nutzer-Computersystem 100 sendet nach der Erzeugung des Zertifikats 167 eine Aufforderung über das Netzwerk 116 beispielsweise ein drittes Prüf-Computersystem 330 die Leserechte des Zertifikat 167 freizuschalten, d.h. so umzusetzen, dass das Zertifikat 167 gelesen und genutzt werden kann. Das dritte Prüf-Computersystem 330 schickt daraufhin eine Anfrage über das Netzwerk 116 an das erste Prüf-Computersystem 310, welches eine Datenbankabfrage der ersten Sperrdatenbank 318 ausführt, ein Prüfsignal mit dem Ergebnis der Datenbankabfrage erzeugt und als Antwort an das dritte Prüf-Computersystem 330 zurücksendet. Unter der Voraussetzung, dass das Prüfsignal anzeigt, dass der ID-Token 106 nicht gesperrt ist, schaltet das dritte Prüf-Computersystem 330 das Zertifikat 167 auf dem Sicherheitstoken 156 frei, sodass das Zertifikat 167 gelesen und genutzt werden kann.
Zum Sperren des ID-Tokens 106 sendet das Nutzer-Computersystem 100 beispielsweise eine entsprechende Aufforderung an das erste Prüf-Computersystem 310, woraufhin der ersten Identifikator 304 in die erste Sperrdatenbank 318 gespeichert wird. Der ID-Token 106 ist gültig, solange der ersten Identifikator 304 nicht in die erste Sperrdatenbank 318 gespeichert ist.
Zum Sperren des erzeugten Zertifikats 167 sendet das Nutzer-Computersystem 100 beispielsweise eine entsprechende Aufforderung an das zweite Prüf-Computersystem 320, woraufhin der zweite Identifikator 306 in der zweiten Sperrdatenbank 328 gespeichert wird. Der ID-Token 106 ist gültig, solange der zweite Identifikator 306 nicht in die zweiten Sperrdatenbank 328 gespeichert ist.

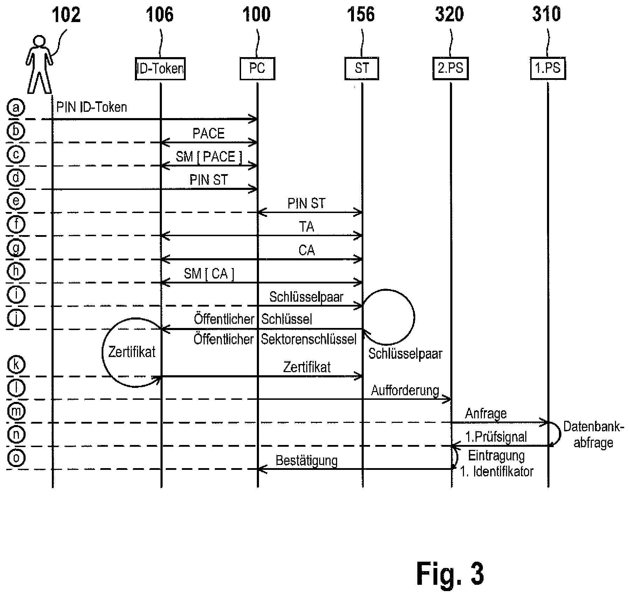

Die Figur 3 zeigt ein entsprechendes Ablaufdiagramm zu der Ausführungsform aus Figur 1. In dem Schritt a gibt der Nutzer 102 die erste PIN zu seiner Authentifizierung gegenüber dem ID-Token 106 in das Nutzer-Computersystem 100, beispielsweise einen PC, ein. Daraufhin wird in dem Schritt b zum Beispiel ein Diffie-Hellman-Protokoll durchgeführt, beispielsweise das PACE-Protokoll, um die Validität der ersten PIN zu überprüfen. Hierdurch wird in dem Schritt c ein sicherer Kanal nach einem Secure-Messaging-Verfahren, beispielsweise als Ergebnis der Durchführung des PACE-Protokolls, zwischen dem ID-Token 106 und dem PC 100 aufgebaut, das heißt SM[PACE].

In dem Schritt d gibt der Nutzer 102 seine zweite PIN, das heißt die PIN ST für den Sicherheitstoken (ST) 156 in den PC 100 ein. Wenn man ohne Beschränkung der Allgemeinheit hier davon ausgeht, dass der ID-Token 106 über eine kontaktlose Schnittstelle und der Sicherheitstoken 156 über eine kontaktbehaftete Schnittstelle verfügt, so ist für die Verifikation der PIN ST eine Fernüberprüfung nicht wesentlich, sodass in der hier betrachteten Ausführungsform die zweite PIN, das heißt PIN ST, von dem PC 100 an den Sicherheitstoken 156 übertragen wird (Schritt e), sodass der Sicherheitstoken 156 die PIN ST auf Validität durch Vergleich mit entsprechenden Referenzdaten überprüft.

In dem Schritt f erfolgt dann eine sogenannte Terminal-Authentication (TA) des Sicherheitstokens 156 gegenüber dem ID-Token 106, Hierzu wird das Berechtigungszertifikat 160 des Sicherheitstokens 156 an den ID-Token 106 übermittelt, um den Sicherheitstoken 156 gegenüber dem ID-Token 106 zu authentifizieren und um eine Prüfung der Schreibberechtigung, die in dem Berechtigungszertifikat 160 definiert ist, durchzuführen. Ferner kann der ID-Token mit Hilfe seiner Zeitinformation 107 prüfen, ob das Berechtigungszertifikat 160 noch gültig ist.

Anschließend wird in dem Schritt g eine sogenannte Chip Authentication (CA) durchgeführt, das heißt es erfolgt eine Authentisierung des ID-Tokens 106 gegenüber dem Sicherheitstoken 156, indem das Zertifikat 103 an den Sicherheitstoken 156 übertragen und dort auf Validität überprüft wird.

In dem Schritt h kann dann - je nach Ausführungsform - mit einem Secure-Messaging-Verfahren ein Kanal mit Ende-zu-Ende-Verschlüsselung zwischen dem ID-Token 106 und dem Sicherheitstoken 156 aufgebaut werden, beispielsweise durch Vereinbarung eines symmetrischen Session Keys nach einem Diffie-Hellman-Verfahren.

In dem Schritt i sendet das Nutzer-Computersystem 100 ein Kommando an den Sicherheitstoken 156, woraufhin der Sicherheitstoken 156 das Schlüsselpaar 166 erzeugt.

In dem Schritt j wird der öffentliche Schlüssel 173 des Schlüsselpaars 166 ebenso wie der öffentliche Sektorenschlüssel 176 über den in dem Schritt h aufgebauten Kanal von dem Sicherheitstoken 156 an den ID-Token 106 übertragen und in dem ID-Token 106 gespeichert.

Daraufhin erzeugt der ID-Token 106 das Zertifikat 167, welches in dem Schritt k beispielsweise über den in dem Schritt h aufgebauten Kanal von dem ID-Token an den Sicherheitstoken 156 übertragen wird, um das Zertifikat 167 in dem elektronischen Speicher 159 zu speichern.

In dem Schritt I sendet das Nutzer-Computersystem 100 eine Aufforderung über das Netzwerk 116 an das zweite Prüf-Computersystem 320 den zweiten Identifikator 306 in die zweite Sperrdatenbank 328 einzutragen.

Daraufhin sendet in Schritt m das zweite Prüf-Computersystem 320 eine Anfrage über das Netzwerk 116 an das erste Prüf-Computersystem 310, ob der zur Erzeugung des Zertifikats 167 verwendete ID-Token 106 gültig ist.

Das erste Prüf-Computersystem 310 führt eine Datenbankabfrage der ersten Sperrdatenbank 318 aus und erzeugt ein Prüfsignal mit dem Ergebnis der Datenbankabfrage, welches es in Schritt n als Antwort auf die Anfrage aus Schritt m an das zweite Prüf-Computersystem 320 zurücksendet.

Unter der Voraussetzung, dass das Prüfsignal anzeigt, dass der ID-Token 106 nicht gesperrt ist, trägt das zweite Prüf-Computersystem 320 den zweiten Identifikator 306 in die zweite Sperrdatenbank 328 ein.

In Schritt o schließlich sendet das zweite Prüf-Computersystem 320 in Antwort auf die Aufforderung aus Schritt I eine Bestätigung der Eintragung des zweiten Identifikator 306 in die zweite Sperrdatenbank 328, d.h. des Freischaltens des erzeugten Zertifikats an das Nutzer-Computersystem zurück.

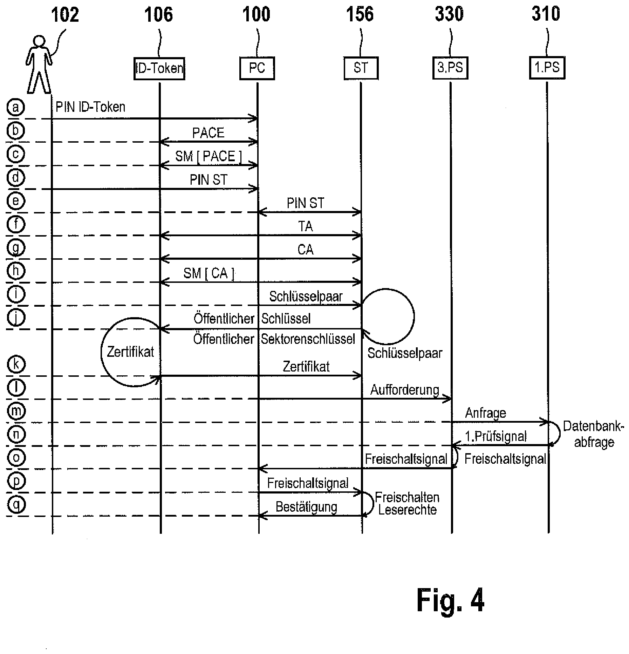

Die Figur 4 zeigt ein entsprechendes Ablaufdiagramm zu der Ausführungsform aus Figur 2 und unterscheidet sich von dem Ablauf gemäß Figur 3 lediglich in den letzten Schritten I bis o:

In dem Schritt I sendet das Nutzer-Computersystem 100 eine Aufforderung über das Netzwerk 116 an das dritte Prüf-Computersystem 330 die Leserechte des erzeugten Zertifikats 167 auf dem Sicherheitstoken 156 freizuschalten.

Daraufhin sendet in Schritt m das dritte Prüf-Computersystem 330 eine Anfrage über das Netzwerk 116 an das erste Prüf-Computersystem 310, ob der zur Erzeugung des Zertifikats 167 verwendete ID-Token 106 gültig ist.

Das erste Prüf-Computersystem 310 führt eine Datenbankabfrage der ersten Sperrdatenbank 318 aus und erzeugt ein Prüfsignal mit dem Ergebnis der Datenbankabfrage, welches es in Schritt n als Antwort auf die Anfrage aus Schritt m an das dritte Prüf-Computersystem 330 zurücksendet.

Unter der Voraussetzung, dass das Prüfsignal anzeigt, dass der ID-Token 106 nicht gesperrt ist, erzeugt das Prüf-Computersystem 330 ein Signal zum Freischalten der Leserechte des Zertifikats 167 und sendet das Freischaltsignal in Schritt o an das Nutzer-Computersystem 100, welches das Signal in Schritt p an den Sicherheitstoken 156 weiterleitet. Daraufhin werden die Leserechte des Zertifikats 167 auf dem Sicherheitstoken 156 derart umgesetzt, dass das Zertifikat 167 les- und damit nutzbar wird.

In Schritt q schließlich sendet der Sicherheitstoken 156 eine Bestätigung über das Freischalten der leserechte an das Nutzer-Computersystem 100.

Die Figur 5 zeigt eine Dokumenten-PKI 300. Diese hat ein Wurzelzertifikat C.CSCA sowie davon abgeleitete Zertifikate C.DS, die bei der Produktion des ID-Tokens 106 zum Signieren von Daten, die in dem elektronischen Speicher 118 des ID-Tokens 106 bei der Personalisierung gespeichert werden, verwendet werden. Die von einer Signiervorrichtung, d.h. dem sogenannten Document-Signer (DS) einer Personalisierungsanlage bei der Produktion des ID-Tokens 106 zum Signieren von Daten verwendeten Zertifikate C.DS sind öffentlich abrufbar und über die Dokumenten-PKI 300 mithilfe des Wurzelzertifikats C.CSCA verifizierbar.

Die Figur 5 zeigt ferner eine Berechtigungs-PKI 302, wobei mehrere solcher Berechtigungs-PKIen vorhanden sein können. Die Figur 5 zeigt exemplarisch den öffentlichen Schlüssel PuK.CVCA.xy der Berechtigungs-PKI 302 mit dem Wurzelzertifikat C.CVCA.xy.

Das Berechtigungszertifikat 160 des Sicherheitstokens 156 gehört zu dieser Berechtigungs-PKI 302. Dem Berechtigungszertifikat 160 ist das Schlüsselpaar bestehend aus dem privaten Schlüssel 161 PrK.T.AUT und dem dazugehörigen Schlüssel PuK.T.AUT 174 zugeordnet.

In dem elektronischen Speicher 159 des Sicherheitstokens 156 kann ferner ein Sektorenschlüssel 176 PuK.T.Sector gespeichert sein, wobei es sich hierbei um einen öffentlichen Schlüssel handelt, der für mehrere Sicherheitstoken 156, die einen "Sektor" bilden, identisch ist.

Zu dem privaten Schlüssel 105 PrK.ICC.AUT des ID-Tokens 106 gehört hier der entsprechende öffentliche Schlüssel 178 PuK.ICC.AUT, der von dem Document-Signer DS signiert ist, und im ID-Token 106 gespeichert ist. Beispielsweise ist der öffentliche Schlüssel 178 PuK.ICC.AUT in der Datei 103 "CardSecurity" enthalten, die auch das Zertifikat 103 beinhaltet oder mit diesem identisch ist. Beispielsweise ist beim elektronischen Personalausweis der Bundesrepublik Deutschland die Datei "CardSecurity" signiert, also selbst das Zertifikat 103. Ferner kann der öffentliche Schlüssel 180 PuK.CVCA.xy der Berechtigungs-PKI 302 bei der Personalisierung in dem elektronischen Speicher 118 des ID-Tokens 106 gespeichert werden, wodurch ein "Vertrauensanker" gebildet und die Verifikation des Berechtigungszertifikats 160 ermöglicht wird.

Ferner können in dem geschützten Speicherbereich des ID-Tokens 106 zusätzlich ein erster privater Schlüssel 182 und ein zweiter privater Schlüssel 184, nämlich PrK.ICC.SD bzw. PrK.ICC.RI gespeichert sein, die beispielsweise in dem Protokoll Restricted Identification (RI) und zum Sperren des ID-Tokens 106 bzw. des Zertifikats 167 des Sicherheitstokens 156 angewendet werden können.

Bei der Nutzung des ID-Tokens 106 wird der Schlüssel 105 in dem Protokoll Chip Authentication (CA) verbunden mit dem Prüfen der Signatur der Datei Card Security verwendet, damit ein Terminal, hier der Sicherheitstoken 156, den ID-Token 106 als echt erkennen kann. Der Schlüssel 105 kann für eine Serie von ID-Token 106 gleich sein, sodass aus diesem Schlüssel 105 keine Rückschlüsse auf die Identität oder die Eigenschaften des Nutzers 102 getroffen werden können.

Der ID-Token 106 kann die Berechtigung eines Terminals, hier des Sicherheitstokens 156, in dem Protokoll Terminal Authentication (TA) mithilfe des Schlüssels 180 verifizieren. Dabei wird die Zeitinformation 107 zur Verifikation des Berechtigungszertifikats 160 benutzt, nämlich um zu prüfen, ob der Nutzungszeitraum des Berechtigungszertifikats 160 noch nicht abgelaufen ist.

Der Sektorenschlüssel 176 ist in dem Berechtigungszertifikat 160 verankert und durch die Berechtigungs-PKI 302 festgelegt. Beispielsweise ist hierzu der Sektorenschlüssel 176 oder ein davon abgeleiteter Wert, wie zum Beispiel ein Hash-Wert des Sektorenschlüssels 176, in dem Berechtigungszertifikat 160 beinhaltet.

Durch eine kryptographische Verknüpfung, z.B. durch Punktmultiplikation auf einer elliptischen Kurve, des Schlüssels 182 oder alternativ des Schlüssels 184 mit dem Sektorenschlüssel 176 werden der erste und zweite Identifikator, sog. Restricted Identifier, berechnet.

Ferner können die aus dem Sektorenschlüssel 176 und den Schlüsseln 182 und 184 berechneten Identifikatoren zum Sperren des Sicherheitstokens 156 verwendet werden, indem diese Identifikatoren in das Zertifikat 167 eingebracht werden und im Fall einer Sperrung diese Identifikatoren von Sperrdiensten in eine erste und/oder zweite Sperrdatenbank 318 und 328 getragen werden. So kann beispielsweise wenn der Nutzer 102 den Verlust des Sicherheitstokens 156 meldet, mittels der zweiten Sperrdatenbank 328 das dem Sicherheitstokens 156 zugeordnete Zertifikat 167 gesperrt werden, indem der zweite Identifikator im Falle einer als Negativliste konfigurierten Sperrdatenbank 328 in diese eingetragen wird. Ebenso kann beispielsweise wenn der Nutzer 102 den Verlust des ID-Tokens 106 meldet, mittels der ersten Sperrdatenbank 328 der ID-Token 106 gesperrt werden, indem der erste Identifikator im Falle einer als Negativliste konfigurierten Sperrdatenbank 318 in diese eingetragen wird. Hierbei werden im Allgemeinen erste sektorenspezifische Identifikatoren für alle Sektoren in der entsprechend konfigurierten ersten Sperrdatenbank 318 gespeichert.

In dem ID-Token 106 kann zusätzlich zu dem privaten Schlüssel 105 ein weiterer privater Schlüssel 187 PrK.ICC.SC gespeichert sein, dessen öffentlicher Schlüssel 188 PuK.ICC.SC von dem Document-Signer der Dokumenten-PKI 300 beispielsweise als Teil der Datei 103 Card Security signiert ist. Je nach Ausführungsform kann dieser zusätzliche private Schlüssel 187 anstelle des privaten Schlüssels 105 für die Signierung des Zertifikats 167 von dem ID-Token 106 verwendet werden.

In der Ausführungsform gemäß Figur 5 beinhaltet das Schlüsselpaar 166 den öffentlichen Schlüssel 173 PuK.T.Sign und den dazugehörigen privaten Schlüssel 189 PrK.T.Sign. Durch Übertragung des öffentlichen Schlüssels 173 über den Kanal 190 mit Ende-zu-Ende-Verschlüsselung (vgl. auch Fig. 1 und 2) wird der ID-Token 106 dazu veranlasst, das Zertifikat 167 C.T.Sign zu erzeugen, indem der ID-Token 106 den Datensatz 192 generiert, der zumindest den öffentlichen Schlüssel 173, die Zeitinformation 107 sowie die ausgewählten Attribute beinhaltet, und welcher dann je nach Ausführungsform mit dem privaten Schlüssel 105 oder mit dem privaten Schlüssel 106 signiert wird. Vorzugsweise wird vor dem Signieren der Datensatz 192 formatiert, beispielsweise um ein CVC nach ISO/IEC 7816-8 oder ein X.509-Zertifikat nach ITU-X.509 oder ein Zertifikat nach einem anderen vorgegebenen Format zu erzeugen. Zu den ausgewählten Attributen können auch ein oder mehrere nachträglich in den ID-Token geladene Attribute 198 gehören, beispielsweise gemäß DE 10 2015 200 313 nachgeladene Attribute.

Im Ergebnis wird für den Nutzer 102 ein Zertifikat 167 erzeugt, dessen dazugehöriger private Schlüssel 189 auf dem Sicherheitstoken 156 gespeichert ist, wobei das Zertifikat 167 nur die von dem Nutzer 102 ausgewählten der Attribute 124 beinhalten kann. Das Zertifikat 167 kann über die Dokumenten-PKI 300 verifiziert werden, da das Zertifikat 167 mit dem privaten Schlüssel 105 oder 106 signiert ist und der dazugehörige öffentliche Schlüssel 178 bzw. 188 von dem Document-Signer DS beispielsweise in der Datei 103 Card Security signiert ist. Dem DS wiederum kann vertraut werden, weil dessen Zertifikat C.DS von dem Wurzelzertifikat C.CSCA abhängt.

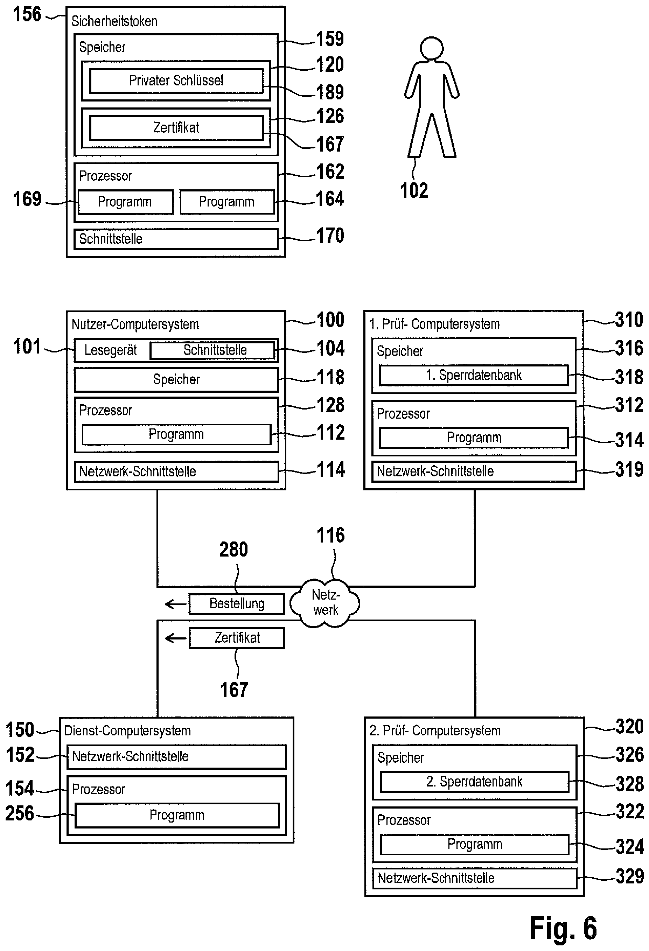

Die Figur 6 zeigt eine Weiterbildung der o.g. Ausführungsformen. Insbesondere zeigt die Figur 6 das Nutzer-Computersystem 100 des Nutzers 102 (vgl. auch Fig. 1 bis 4). Das Nutzer-Computersystem 100 hat das Lesegerät 101 mit einer Schnittstelle 104 zur Kommunikation mit einem Sicherheitstoken 156, der eine entsprechende Schnittstelle 170 aufweist.

Das Nutzer-Computersystem 100 hat zumindest einen Prozessor 115 zur Ausführung von Programminstruktionen 112 sowie eine Netzwerk-Schnittstelle 114 zur Kommunikation über das Netzwerk 116. Bei dem Netzwerk 116 kann es sich um ein Computernetzwerk, wie zum Beispiel das Internet, handeln.

Der Sicherheitstoken 156 hat in Weiterbildung der o.g. Ausführungsformen (vgl. insbesondere Fig. 1 bis 4) einen elektronischen Speicher 159 mit geschützten Speicherbereichen. Der geschützte Speicherbereich 120 dient zur Speicherung eines Referenzwerts, der für die Authentifizierung des Nutzers 102 gegenüber dem Sicherheitstoken 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem Sicherheitstoken 156 verwendet werden kann.

Der geschützte Bereich 120 dient zudem zur Speicherung des privaten Schlüssels 189. Der elektronische Speicher 159 kann ferner einen Speicherbereich 126 zur Speicherung des abgeleiteten Zertifikats 167 aufweisen.

Der Sicherheitstoken 156 hat einen Prozessor 162. Der Prozessor 162 dient beispielsweise zur Ausführung von Programminstruktionen 169. Die Programminstruktionen 169 dienen zur Nutzerauthentifizierung, d.h. zur Authentifizierung des Nutzers 102 gegenüber dem Sicherheitstoken.

Bei einer Ausführungsform mit PIN gibt der Nutzer 102 seine PIN zu seiner Authentifizierung ein, beispielsweise in das Nutzer-Computersystem 100. Durch Ausführung der Programminstruktionen 169wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Ferner dient der Prozessor 162 wie oben beschrieben zur Ausführung von Programminstruktionen 164 zur Erzeugung eines asymmetrischen kryptografischen Schlüsselpaars 166.

Alternativ zu der in der Figur 6 dargestellten Ausführungsform kann das Nutzer-Computersystem 100 mit seiner Schnittstelle 104 nicht unmittelbar mit der Schnittstelle 170 kommunizieren, sondern über ein an die Schnittstelle 104 als Peripheriegerät angeschlossenes Lesegerät 158 für den Sicherheitstoken 156. Über dieses Lesegerät, wie zum Beispiel einen so genannten Klasse 2-Chipkarten-Terminal, kann auch die Eingabe der PIN erfolgen.

Ein Dienst-Computersystem 150 kann zur Entgegennahme einer Bestellung oder eines Auftrags für eine Dienstleistung oder ein Produkt, insbesondere eine Online-Dienstleistung, konfiguriert sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus konfiguriert sein, sodass der Benutzer 102 beispielsweise online ein Mobiltelefon oder dergleichen erwerben kann. Ferner kann das Dienst-Computersystem 150 auch zur Lieferung von digitalen Inhalten konfiguriert sein, beispielsweise für den Download von Musik- und/oder Videodaten oder als Behördenserver für eine eGovernment Anwendung.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 256. Durch Ausführung der Programminstruktionen 256 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 Attribute des Nutzers 102 und/oder dessen Sicherheitstoken anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem Sicherheitstoken 156 ersetzt.

Zur Bestellung von Waren bei dem Dienst-Computersystem 150 wird beispielsweise wie folgt vorgegangen:
Der Nutzer 102 baut mithilfe seines Nutzer-Computersystems 100 eine Internetsession über das Netzwerk 116 zu dem Dienst-Computersystem 150 auf. Der Nutzer erstellt eine Bestellung 280 und signiert diese mit dem privaten Schlüssel 189. Zum Signieren der Bestellung 280 authentifiziert sich der Nutzer 102 zunächst gegenüber dem Sicherheitstoken 156. Hierzu gibt der Nutzer 102 seine PIN zum Beispiel über das Lesegerät 101 oder eine Tastatur des Nutzer-Computersystems 100 ein. Die Bestellung 280 oder Hashwert derselben werden an den Sicherheitstoken 156 gesendet und von diesem signiert. Die signierte Bestellung 280 oder der entsprechende Hashwert werden an das Nutzer-Computersystem zusammen mit dem abgeleiteten Zertifikat 167 zurückgesendet. Das sendet die signierte Bestellung 280 und das Zertifikat 167 an das Dienst-Computersystem 150. Das Dienst-Computersystem 150 sendet daraufhin eine Anfrage über das Netzwerk 116 an das zweite Prüf-Computersystem 320, ob das von dem Nutzer-Computersystem 100 zur Verfügung gestellte Zertifikat 167 gültig, d.h. nicht gesperrt ist. Hier wird davon ausgegangen, dass, wie in Figur 1, eine Prüfung des Sperrstatus des ID-Tokens 106 bereits bei der Erzeugung des Zertifikats 167 erfolgt ist und die zweite Sperrdatenbank 328 in Form einer Positivliste konfiguriert ist, in der der zweite Identifikator 306 nach positiver Prüfung der Gültigkeit des ID-Tokens 106 gespeichert wurde. Auf diese Anfrage hin führt das zweite Prüf-Computersystem 320 eine Datenbankabfrage der zweiten Sperrdatenbank 328 aus, erzeugt ein Prüfsignal mit dem Ergebnis der Datenbankabfrage und sendet dieses Prüfsignal als Antwort an das Dienst-Computersystem 150 zurück. Unter der Voraussetzung, dass das Prüfsignal anzeigt, dass das Zertifikat 167 nicht gesperrt ist, d.h. im vorliegenden Fall, dass der zweite Identifikator 306 in der zweiten Sperrdatenbank 328 gespeichert ist, erzeugt das Dienst-Computersystem 150 ein Gültigkeitssignal, d.h. akzeptiert das Zertifikat 167 und die darauf basierende Signatur der Bestellung als gültig, und führt die Bestellung aus.

In einer alternativen Ausführungsform gemäß Figur 2 ist das Zertifikat 167 nur unter der Voraussetzung einer positiven Prüfung der Gültigkeit des ID-Tokens 106 les- und nutzbar. Mithin folgt aus dem Übersenden des Zertifikats 167 bereits, das der ID-Token 106 bei der Erzeugung des Zertifikats 167 nicht gesperrt war. In diesem Fall kann die zweite Sperrdatenbank 328 auch in Form einer Negativliste konfiguriert sein, in der der zweite Identifikator 306 auf eine Aufforderung des Nutzers 102 zur Sperrung des Zertifikats 167 hin gespeichert wird. In diesem Fall erzeugt das Dienst-Computersystem 150 ein Gültigkeitssignal, d.h. akzeptiert das Zertifikat 167 und die darauf basierende Signatur der Bestellung als gültig unter der Voraussetzung, dass das Prüfsignal anzeigt, dass der zweite Identifikator 306 nicht in der zweiten Sperrdatenbank 328 gespeichert ist.

In einer weiteren Ausführungsform ist keine Prüfung des Sperrstatus des ID-Tokens 106 bei der Erzeugung des Zertifikats 167 erfolgt. Das Dienst-Computersystem 150 sendet in diesem Fall eine erste Anfrage über das Netzwerk 116 an das erste Prüf-Computersystem 310, welches eine Datenbankabfrage der ersten Sperrdatenbank 318 ausführt, ein erstes Prüfsignal mit dem Ergebnis der Datenbankabfrage erzeugt und als Antwort an das Dienst-Computersystem 150 zurücksendet. Zudem sendet das Dienst-Computersystem 150 eine zweite Anfrage über das Netzwerk 116 an das zweite Prüf-Computersystem 320, welches eine Datenbankabfrage der zweiten Sperrdatenbank 328 ausführt, ein zweites Prüfsignal mit dem Ergebnis der Datenbankabfrage erzeugt und als Antwort an das Dienst-Computersystem 150 zurücksendet

Unter der Voraussetzung, dass das erste Prüfsignal anzeigt, dass der ID-Token 106 nicht gesperrt ist, und das zweite Prüfsignal anzeigt, dass das Zertifikat 167 nicht gesperrt ist, erzeugt das Dienst-Computersystem 150 ein Gültigkeitssignal, d.h. akzeptiert das Zertifikat 167 und die darauf basierende Signatur der Bestellung als gültig, und führt die Bestellung aus. Sind sowohl die erste Sperrdatenbank 318 als auch die zweite Sperrdatenbank 328 als Negativlisten konfiguriert, wird das Zertifikat 167 unter der Voraussetzung akzeptiert, dass weder der erste Indentifikator 304 in der ersten Sperrdatenbank 318 noch der zweite Identifikator in der zweite Sperrdatenbank 328 gespeichert ist.

Das zweite Prüf-Computersystem 320 mit der zweiten Sperrdatenbank 328 wird beispielsweise von dem Herausgeber des unpersonalisierten Sicherheitstoken 156 bereitgestellt, dieser betreibt also einen automatisierten Sperrdienst und stellt die Sperrinformation bereit.

In diesem Fall wird das Sperrmerkmal, d.h. der zweite Identifikator 306, mit dem zweiten privaten Schlüssel 184 des ID-Tokens 106 berechnet und in den zu signierten Datensatz 192 eingebracht, aus dem das Zertifikat 167 resultiert. Der Nutzer 102 sperrt dann sein Zertifikat 167, indem er sich gegenüber dem Herausgeber seines Sicherheitstokens 156 mithilfe des RI-Protokolls authentisiert. Weitere Informationen braucht der Nutzer 102 nicht preiszugeben, da der mit RI für den Sektor des Herausgebers des Sicherheitstokens 156 berechnete Wert in dem zu sperrenden Zertifikat 167 enthalten ist. Dieser Wert erscheint in einer automatisch erstellten Sperrliste der Sperrdatenbank 328 des Herausgebers des Sicherheitstokens 156 oder die entsprechende Information wird beispielsweise über das Online Certificate Status Protocol (OCSP) gemäß RFC 6960 bereitgestellt.

Dass mit einem laut erster Sperrdatenbank 318 gesperrten ID-Token 106 kein gültiges Zertifikat 167 für einen Sicherheitstoken 156 erstellt werden kann, kann beispielsweise auf folgende Arten erreicht werden:
Im Zertifikat 167 werden die aus den beiden Schlüsseln 182 und 184 berechneten Identifikatoren 304 und 306 als Sperrmarkmale eingebracht. Das Zertifikat 167 ist als gültig zu betrachten, wenn der aus Schlüssel 184 berechnete Identifikator 306 nicht in der zweiten Sperrdatenbank 328 des Herausgebers des Sicherheitstokens 156 auftaucht und der aus Schlüssel 182 berechnete Identifikator 304 nicht in der ersten Sperrdatenbank 318 auftaucht. Bei beiden Sperrdatenbanken 318 und 328 handelt es sich in diesem Fall um Blacklists bzw. Negativlisten. Mit gesperrten ID-Token 106 erstellte Zertifikate 167 werden damit als ungültig erkannt. Zudem kann der Nutzer mit seinem nicht-gesperrten ID-Token 106 ein abgeleitetes Zertifikat 167 sperren, ohne dass dadurch auch der ID-Token 106 gesperrt wird.

Alternativ führt der Herausgeber des Sicherheitstokens 156 beispielsweise nicht nur eine Sperrdatenbank 318 in Form einer Negativliste, sondern auch eine dritte Datenbank in Form einer Whitelist bzw. Positivliste. In diesem Fall muss sich der Nutzer 102, nachdem er auf seinem Sicherheitstoken 156 über seinen ID-Token 106 ein Zertifikat 167 erstellt hat, mit seinem ID-Token 106 mithilfe des RI-Protokolls beim Herausgeber des Sicherheitstokens 156 anmelden. In der dritten Datenbank wird der Zeitpunkt und der mit dem Schlüssel 184 des ID-Tokens 106 berechneten Identifikator 306 vermerkt. Zertifikate 167 mit diesem Identifikator 306, die vor dem in der dritten Datenbank vermerkten Zeitpunkt erstellt wurden und die außerdem nicht in der oben genannten zweiten Sperrdatenbank 328 des Herausgebers des Sicherheitstokens 156 gespeichert sind, sind gültig.

Ferner kann das Zertifikat 167 wird auf dem Sicherheitstoken 156 initial so gespeichert werden, dass es initial nicht auslesbar ist und damit außerhalb des Sicherheitstokens 156 nicht existiert. Um genutzt werden zu können, soll es später auslesbar sein. Der aus dem ersten Schlüssel 182 berechnete erste Identifikator 304 geht zwar nicht in das Zertifikat 167 ein, wird aber im Sicherheitstoken 156 in einem geschützten Speicherbereich 120 abgelegt. Alternativ kann der erste Identifikator 304 sowohl in dem Zertifikat 167 als auch gesondert in dem geschützten Speicherbereich 120 gespeichert werden. Der Nutzer 102 muss, nachdem er mit seinem ID-Token 106 das Zertifikat 167 auf seinem Sicherheitstoken 156 erstellt hat, seinen Sicherheitstoken 156 aktivieren bzw. das Zertifikat 167 freischalten. Er kontaktiert mit seinem Sicherheitstoken 106 einen Aktivierungsdienst, beispielsweise das dritte Prüf-Computersystem 330, der den aus dem ersten Schlüssel 182 berechneten ersten Identifikator 304 gegen die erste Sperrdatenbank 318 des Sperrdienstes des ID-Tokens 106 prüft. Wenn der aus Schlüssel 182 berechnete Identifikator 304 dort nicht gespeichert ist, also der ID-Token 106 nicht gesperrt ist, ändert der Sicherheitstoken 156 auf Veranlassung des dritten Prüf-Computersystems 330 hin die Zugriffsrechte bzw. Leserechte auf das gespeicherte Zertifikat 167 auf lesbar, andernfalls wird es gelöscht.

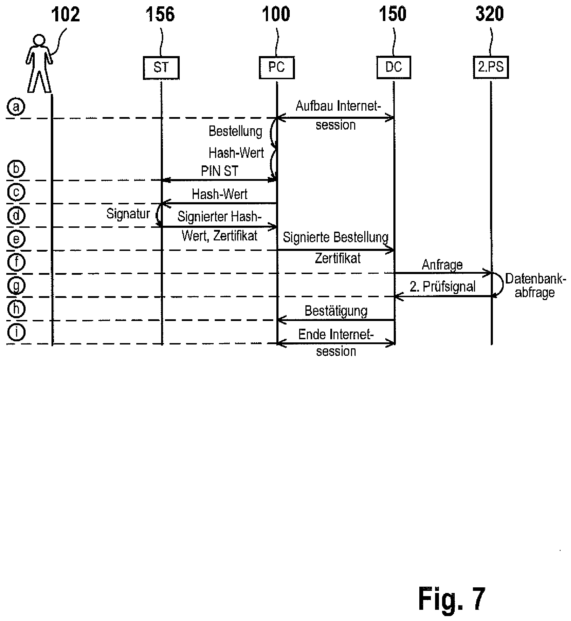

Die Figur 7 zeigt ein der Figur 6 entsprechendes Ablaufdiagramm.

In Schritt a wird mithilfe des Nutzer-Computersystems 100 eine Internetsession über das Netzwerk 116 zu dem Dienst-Computersystem 150 aufgebaut. Der Nutzer erstellt eine Bestellung 280 und bildet beispielsweise einen Hash-Wert zum Signieren durch den Sicherheitstoken 156 mit dem privaten Schlüssel 184.

In Schritt b gibt der Nutzer 102 die PIN ST für den Sicherheitstoken (ST) 156 in den PC 100 ein. Wenn man ohne Beschränkung der Allgemeinheit hier davon ausgeht, dass der Sicherheitstoken 156 über eine kontaktbehaftete Schnittstelle verfügt, so ist für die Verifikation der PIN ST eine Fernüberprüfung nicht wesentlich, sodass in der hier betrachteten Ausführungsform die PIN ST von dem PC 100 an den Sicherheitstoken 156 übertragen wird, sodass der Sicherheitstoken 156 die PIN ST auf Validität durch Vergleich mit entsprechenden Referenzdaten überprüft.

In Schritt c übersendet der PC 100 den zu signierenden Hash-Wert an den Sicherheitstoken 156, den der Sicherheitstoken 156 mit dem privaten Schlüssel 189 signiert.

In Schritt d werden der signierte Hashwert zusammen mit dem abgeleiteten Zertifikat 167 an das Nutzer-Computersystem 100 zurückgesendet.

Das Nutzer-Computersystem 100 übersendet in Schritt e die signierte Bestellung 280, welche den signierten Hash-Wert umfasst und das Zertifikat 167 an das Dienst-Computersystem 150.

Auf den Empfang der signierten Bestellung 280 und des Zertifikats 167 hin sendet das Dienst-Computersystem 150 in dem Schritt f eine Anfrage über das Netzwerk 116 an das zweite Prüf-Computersystem 320, ob das Zertifikats 167 gültig ist, d.h. nicht gesperrt ist. Hier wird beispielsweise davon ausgegangen, dass, wie in Figur 1, eine Prüfung des Sperrstatus des ID-Tokens 106 bereits bei der Erzeugung des Zertifikats 167 erfolgt ist und die zweite Sperrdatenbank 328 in Form einer Positivliste konfiguriert ist, in der der zweite Identifikator 306 nach positiver Prüfung der Gültigkeit des ID-Tokens 106 gespeichert wurde.

Das zweite Prüf-Computersystem 320 führt eine Datenbankabfrage der zweiten Sperrdatenbank 328 aus und erzeugt ein Prüfsignal mit dem Ergebnis der Datenbankabfrage, welches es in Schritt g als Antwort auf die Anfrage aus Schritt f an das Dienst-Computersystem 150 zurücksendet.

Unter der Voraussetzung, dass das Prüfsignal anzeigt, dass das Zertifikat 167 nicht gesperrt ist, akzeptiert das Dienst-Computersystem 150 das Zertifikat 167 und die darauf basierende Signatur der Bestellung als gültig und führt die Bestellung aus.

In diesem Fall sendet das Dienst-Computersystem 150 in Schritt h eine Bestätigung der Bestellung 280 an das Nutzer-Computersystem 100, woraufhin die Internetsession zwischen dem Nutzer-Computersystem 100 und dem Dienst-Computersystem 150 in Schritt i beendet wird.

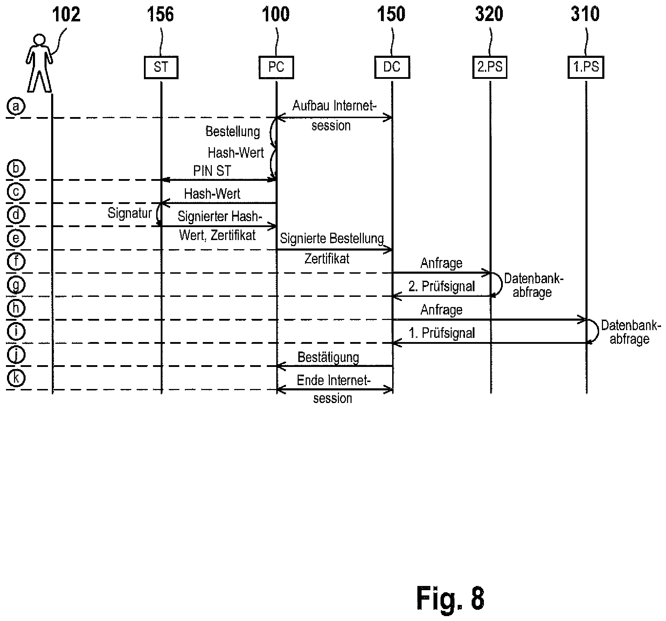

Die Figur 8 zeigt ein weiteres der Figur 6 entsprechendes Ablaufdiagramm, wobei keine Prüfung des Sperrstatus des ID-Tokens 106 bei der Erzeugung des Zertifikats 167 erfolgt ist. Der Ablauf gemäß Figur 8 unterscheidet sich daher von dem Ablauf gemäß Figur 7 lediglich in den letzten Schritten h bis k:
In dem Schritt h sendet das Dienst-Computersystem 150 eine zusätzliche Anfrage über das Netzwerk 116 an das erste Prüf-Computersystem 310, ob der zur Erzeugung des Zertifikats 167 verwendete ID-Token 106 gültig ist.

Das erste Prüf-Computersystem 310 führt eine Datenbankabfrage der ersten Sperrdatenbank 318 aus und erzeugt ein erstes Prüfsignal mit dem Ergebnis der Datenbankabfrage, welches es in Schritt i als Antwort auf die Anfrage aus Schritt h an das Dienst-Computersystem 150 zurücksendet.

Unter der Voraussetzung, dass das erste Prüfsignal anzeigt, dass der ID-Token 106 nicht gesperrt ist, und das zweite Prüfsignal anzeigt, dass das Zertifikat 167 nicht gesperrt ist, akzeptiert das Dienst-Computersystem 150 das Zertifikat 167 und die darauf basierende Signatur der Bestellung als gültig und führt die Bestellung aus.

In diesem Fall sendet das Dienst-Computersystem 150 in Schritt j eine Bestätigung der Bestellung 280 an das Nutzer-Computersystem 100, woraufhin die Internetsession zwischen dem Nutzer-Computersystem 100 und dem Dienst-Computersystem 150 in Schritt k beendet wird.

### Bezugszeichenliste

- 100: Nutzer-Computersystem
- 101: Lesegerät
- 102: Nutzer
- 103: Zertifikat
- 105: privater Schlüssel
- 106: ID-Token
- 107: Zeitinformation
- 108: Kommunikationsschnittstelle
- 112: Programminstruktionen
- 114: Netzwerkschnittstelle
- 116: Netzwerk
- 118: elektronischer Speicher
- 120: geschützter Speicherbereich
- 124: Attribute
- 126: Speicherbereich
- 128: Prozessor
- 130: Programminstruktionen
- 131: Programminstruktionen
- 132: Programminstruktionen
- 150: Dienst-Computersystem
- 152: Netzwerkschnittstelle
- 154: Prozessor
- 156: Sicherheitstoken
- 158: Lesegerät
- 159: elektronischer Speicher
- 160: Berechtigungszertifikat
- 161: privater Schlüssel
- 162: Prozessor
- 163: Programminstruktionen
- 164: Programminstruktionen
- 166: Schlüsselpaar
- 167: Zertifikat
- 168: Programminstruktionen
- 169: Programminstruktionen
- 170: Kommunikationsschnittstelle
- 171: Computersystem
- 172: Zertifikat
- 173: öffentlicher Schlüssel
- 174: öffentlicher Schlüssel
- 176: Sektorenschlüssel
- 178: öffentlicher Schlüssel
- 180: öffentlicher Schlüssel
- 182: erster privater Schlüssel
- 183: geschützter Speicherbereich
- 184: zweiter privater Schlüssel
- 185: geschützter Speicherbereich
- 187: privater Schlüssel
- 188: öffentlicher Schlüssel
- 189: privater Schlüssel
- 190: Kanal
- 192: Datensatz
- 194: Auswahlinformation
- 198: nachgeladene Attribute
- 256: Programminstruktionen
- 280: Nachricht
- 300: Dokumenten-PKI
- 302: Berechtigungs-PKI
- 304: erster Identifikator
- 306: zweiter Identifikator
- 310: erstes Prüf-Computersystem
- 312: Prozessor
- 314: Programminstruktionen
- 316: Speicher
- 318: erste Sperrdatenbank
- 319: Netzwerk-Schnittstelle
- 320: zweites Prüf-Computersystem
- 322: Prozessor
- 324: Programminstruktionen
- 326: Speicher
- 328: zweite Sperrdatenbank
- 329: Netzwerk-Schnittstelle
- 330: drittes Prüf-Computersystem
- 332: Prozessor
- 334: Programminstruktionen
- 339: Netzwerk-Schnittstelle

## Patentansprüche

1. Verfahren zur Prüfung der Gültigkeit eines durch einen ID-Token (106) eines Nutzers (102) für einen Sicherheitstoken (156) desselben Nutzers (102) erzeugten Zertifikats (167),
wobei der ID-Token (106) einen geschützten Speicherbereich (183) aufweist, in welchem mindestens ein erster privater Schlüssel (182) eines ersten kryptographischen Schlüsselpaars bestehend aus dem ersten privaten Schlüssel (182) und einem ersten öffentlichen Schlüssel gespeichert ist, und wobei dem ID-Token (106) ein Zertifikat (103) einer Dokumenten-PKI (300) zugeordnet ist,
wobei dem Sicherheitstoken (156) ein Zertifikat (160) einer Berechtigungs-PKI (302) zugeordnet und auf dem Sicherheitstoken (156) gespeichert ist, wobei in dem Zertifikat (160) der Berechtigungs-PKI (302) eine Schreibberechtigung für einen Schreibzugriff des Sicherheitstokens (156) auf den geschützten Speicherbereich (183) des ID-Tokens (106) festgelegt ist, wobei das Zertifikat (160) der Berechtigungs-PKI (302) zur Authentifizierung des Sicherheitstokens (156) gegenüber dem ID-Token (106) verwendbar ist, wobei das Zertifikat (160) der Berechtigungs-PKI (302) einen öffentlichen Sektorenschlüssel (176) beinhaltet, weicher einem Sektor aus einer Mehrzahl von vordefinierten Sektoren zugeordnet und für alle Sicherheitstoken desselben Sektors identisch ist, wobei auf dem Sicherheitstoken (156) ein dem erzeugten Zertifikat (167) zugeordneter privater Schlüssel (189) eines durch den Sicherheitstoken (106) erzeugten kryptographischen Schlüsselpaars (166) bestehend aus dem privaten Schlüssel (189) und einem öffentlichen Schlüssel (173) gespeichert ist, und wobei auf dem Sicherheitstoken (156) zumindest ein erster dem ID-Token (106) zugeordneter sektorenspezifischer Identifikator (304) gespeichert ist, welcher aus dem ersten privaten Schlüssel (182) des ID-Token (106) und dem öffentlichen Sektorenschlüssel (176) des Sicherheitstoken (156) berechnet ist,
wobei das von dem ID-Token (106) erzeugte Zertifikat (167) ein von dem Zertifikat (103) der Dokumenten-PKI (300) abgeleitetes und auf dem Sicherheitstoken (156) gespeichertes Zertifikat (167) ist, welches den öffentlichen Sektorenschlüssel (176) oder einen kryptografisch davon abgeleiteter Wert und den öffentlichen Schlüssel (173) des durch den Sicherheitstoken (106) erzeugten kryptographischen Schlüsselpaars (166) beinhaltet,
wobei das Verfahren umfasst:
- Ausführen einer ersten Datenbankabfrage einer ersten Sperrdatenbank (318) durch ein erstes Prüf-Computersystem (310) zur Ermittlung eines Sperrstatus des ID-Tokens (106), wobei die erste Sperrdatenbank (318) derart konfiguriert ist, dass aus ihr der Sperrstatus des ID-Tokens (106) abfragbar ist,
- Erzeugen eines ersten Prüfsignals durch das erste Prüf-Computersystem (310), welches das Ergebnis der ersten Datenbankabfrage anzeigt,
- Ausführen einer zweiten Datenbankabfrage einer zweiten Sperrdatenbank (328) durch ein zweites Prüf-Computersystem (320) zur Ermittlung eines Sperrstatus des erzeugten Zertifikats (167), wobei die zweite Sperrdatenbank (328) derart konfiguriert ist, dass aus ihr der Sperrstatus des erzeugten Zertifikats (167) abfragbar ist,
- Erzeugen eines zweiten Prüfsignals durch das zweite Prüf-Computersystem (320), welches das Ergebnis der zweiten Datenbankabfrage anzeigt,
- Erzeugen eines Gültigkeitssignals, welches die Gültigkeit des erzeugten Zertifikats (167) unter der Voraussetzung anzeigt, dass das erste Prüfsignal anzeigt, dass der ID-Token (106) nicht gesperrt ist, und das zweite Prüfsignal anzeigt, dass das erzeugte Zertifikat (167) nicht gesperrt ist.

2. Verfahren nach Anspruch 1, wobei der erste sektorenspezifische Identifikator (304) in dem erzeugten Zertifikat (164) beinhaltet ist.

3. Verfahren nach einem der Ansprüche 1 oder 2, wobei die erste Sperrdatenbank (318) derart konfiguriert ist, dass auf eine Sperraufforderung des Nutzers (102) des ID-Tokens (106) zum Sperren des ID-Tokens (106) hin in der ersten Sperrdatenbank (318) der erste sektorenspezifische Identifikator (304) gespeichert wird, sodass das erste Prüfsignal als Ergebnis der ersten Datenbankabfrage der ersten Sperrdatenbank (318) anzeigt, dass der ID-Token (106) nicht gesperrt ist, unter der Voraussetzung, dass der erste sektorenspezifische Identifikator (304) nicht in der ersten Sperrdatenbank (318) gespeichert ist,
oder wobei die erste Sperrdatenbank (318) derart konfiguriert ist, dass der erste sektorenspezifische Identifikator (304) des ID-Tokens (106) in der ersten Sperrdatenbank (318) vorgespeichert ist und auf eine Sperraufforderung des Nutzers (102) des ID-Tokens (106) zum Sperren des ID-Tokens (106) hin der vorgespeicherte erste sektorenspezifische Identifikator (304) aus der ersten Sperrdatenbank (318) gelöscht wird, sodass das erste Prüfsignal als Ergebnis der ersten Datenbankabfrage der ersten Sperrdatenbank (318) anzeigt, dass der ID-Token (106) nicht gesperrt ist, unter der Voraussetzung, dass der erste sektorenspezifische Identifikator (304) in der ersten Sperrdatenbank (318) gespeichert ist.

4. Verfahren nach einem der Ansprüche 1 bis 3, wobei die erste Sperrdatenbank (318) eine Mehrzahl von Sektorendatenbanken umfasst, wobei jede Sektorendatenbank jeweils einem individuellen Sektor zugeordnet und jeweils so konfiguriert ist, dass auf eine Sperraufforderung des Nutzers (102) des ID-Tokens (106) zum Sperren des ID-Tokens (106) hin in der Sektorendatenbank ein dem ID-Token (106) zugeordneter sektorenspezifischer Sperrfaktor gespeichert wird, der jeweils aus dem ersten privaten Schlüssel (182) des ID-Tokens (106) und einem dem Sektor der Sektorendatenbank zugeordneten öffentlichen Sektorenschlüssel berechnet ist,
oder wobei jede Sektorendatenbank jeweils so konfiguriert ist, dass in der Sektorendatenbank jeweils ein dem ID-Token (106) zugeordneter sektorenspezifischer Sperrfaktor vorgespeichert ist, der aus dem ersten privaten Schlüssel (182) des ID-Tokens (106) und einem dem Sektor des jeweiligen Sektorendatenbank zugeordneten öffentlichen Sektorenschlüssel berechnet ist, und auf eine Sperraufforderung des Nutzers (102) des ID-Tokens (106) zum Sperren des ID-Tokens (106) hin aus jeder Sektorendatenbank der jeweilige dem ID-Token (106) zugeordnete vorgespeicherte sektorenspezifischen Identifikator gelöscht wird.

5. Verfahren nach einem der Ansprüche 1 bis 4, wobei die zweite Sperrdatenbank (320) derart konfiguriert ist, dass auf eine Sperraufforderung des Nutzers (102) des ID-Tokens (106) zum Sperren des erzeugten Zertifikats (167) hin in der zweiten Sperrdatenbank (328) ein zweiter sektorenspezifischer Identifikator (306) gespeichert wird, sodass das zweite Prüfsignal als Ergebnis der zweiten Datenbankabfrage der zweiten Sperrdatenbank (328) anzeigt, dass das erzeugte Zertifikat (167) nicht gesperrt ist, unter der Voraussetzung, dass der zweite sektorenspezifische Identifikator (306) nicht in der zweiten Sperrdatenbank (328) gespeichert ist,
oder wobei die zweite Sperrdatenbank (328) derart konfiguriert ist, dass in der zweiten Sperrdatenbank (328) ein zweiter sektorenspezifischer Identifikator (306) des erzeugten Zertifikats (167) vorgespeichert ist und auf eine Sperraufforderung des Nutzers (102) des ID-Tokens (106) zum Sperren des erzeugten Zertifikats (167) hin der vorgespeicherte zweite sektorenspezifische Identifikator (306) aus der zweiten Sperrdatenbank (328) gelöscht wird, sodass das zweite Prüfsignal als Ergebnis der zweiten Datenbankabfrage der zweiten Sperrdatenbank (328) anzeigt, dass das erzeugte Zertifikat (167) nicht gesperrt ist, unter der Voraussetzung, dass der zweite sektorenspezifische Identifikator (306) in der zweiten Sperrdatenbank (328) gespeichert ist, wobei vorzugsweise der zweite sektorenspezifische Identifikator (306) mit dem ersten sektorenspezifischen Identifikator (304) identisch ist oder
in dem geschützten Speicherbereich (183) des ID-Tokens ferner ein zweiter privater Schlüssel (184) eines zweiten kryptographischen Schlüsselpaars bestehend aus dem zweiten privaten Schlüssel (184) und einem zweiten Öffentlichen Schlüssel gespeichert ist, wobei das von dem ID-Token erzeugte Zertifikat ferner den zweiten dem ID-Token zugeordneten sektorenspezifischen Identifikator (306) beinhaltet, welcher aus dem zweiten privaten Schlüssel (184) des ID-Token (106) und dem öffentlichen Sektorenschlüssel (176) des Sicherheitstoken (156) berechnet ist, und/oder
wobei vorzugsweise das von dem ID-Token (106) erzeugte Zertifikat (167) ferner eine individuelle Kennung aufweist und die Kennung des erzeugten Zertifikats (167) in der zweiten Sperrdatenbank (328) zusammen mit dem zweiten Identifikator (306) jeweils gespeichert und/oder gelöscht wird.

6. Verfahren nach einem der Ansprüche 1 bis 5, wobei das Verfahren ferner umfasst:
- Ausführen einer dritten Datenbankabfrage einer dritten Datenbank durch ein drittes Prüf-Computersystem zur Ermittlung, ob das durch den ID-Token (106) erzeugte Zertifikat (167) freigeschaltet ist, wobei die dritte Sperrdatenbank derart konfiguriert ist, dass aus ihr abfragbar ist, ob das erzeugte Zertifikat (167) freigeschaltet ist,
- Erzeugen eines dritten Prüfsignals durch das dritte Prüf-Computersystem, welches das Ergebnis der dritten Datenbankabfrage anzeigt,
- wobei das Gültigkeitssignal die Gültigkeit des erzeugten Zertifikats (167) unter der zusätzlichen Voraussetzung anzeigt, dass das dritte Prüfsignal anzeigt, dass das erzeugte Zertifikat (167) freigeschaltet ist,
wobei vorzugsweise das dritte Prüf-Computersystem mit dem ersten und/oder dem zweiten Prüf-Computersystem (310; 320) identisch ist und/oder
zum Freischalten des erzeugten Zertifikats (167) bei der Erzeugung des Zertifikats (167) in der dritten Datenbank ein dritter sektorenspezifischer Identifikator gespeichert wird, sodass das dritte Prüfsignal als Ergebnis der dritten Datenbankabfrage der dritten Datenbank anzeigt, dass das erzeugte Zertifikat (167) freigeschaltet ist, unter der Voraussetzung, dass der dritte sektorenspezifischer Identifikator in der dritten Datenbank gespeichert ist, wobei die erste Datenbankabfrage der ersten Sperrdatenbank (318) durch das erste Prüf-Computersystem (310) beim Speichern des dritten sektorenspezifischer Identifikator erfolgt und wobei der dritte sektorenspezifischen Identifikator in der dritten Datenbank nur unter der Voraussetzung gespeichert wird, dass das erste Prüfsignal anzeigt, dass der ID-Token (106) nicht gesperrt ist,
oder wobei zum Freischalten des erzeugten Zertifikats (167) bei der Erzeugung des Zertifikats (167) ein vorgespeicherter dritter sektorenspezifischer Identifikator aus der dritten Datenbank gelöscht wird, sodass das dritte Prüfsignal als Ergebnis der dritten Datenbankabfrage der dritten Datenbank anzeigt, dass das erzeugte Zertifikat (167) freigeschaltet ist, unter der Voraussetzung, dass der dritte sektorenspezifischer Identifikator nicht in der dritten Datenbank gespeichert ist,
wobei die erste Datenbankabfrage der ersten Sperrdatenbank (318) durch das erste Prüf-Computersystem (310) beim Löschen des dritten sektorenspezifischer Identifikator erfolgt und wobei der dritte sektorenspezifischen Identifikator in der dritten Datenbank nur unter der Voraussetzung gelöscht wird, dass das erste Prüfsignal anzeigt, dass der ID-Token (106) nicht gesperrt ist,
wobei vorzugsweise der dritte sektorenspezifische Identifikator mit dem ersten und/oder dem zweiten Identifikator (318; 328) identisch ist und/oder die individuelle Kennung des erzeugten Zertifikats (167) zusammen mit dem dritten Identifikator in der dritten Sperrdatenbank gespeichert und/oder gelöscht wird.

7. Verfahren nach einem der Ansprüche 1 bis 5, wobei bei der Erzeugung des Zertifikats (167) die Leserechte für das erzeugte Zertifikat (167) auf dem Sicherheitstoken (156) so gesetzt werden, dass das Zertifikat (167) nicht lesbar ist, wobei die Leserechte für den ersten sektorenspezifischen Identifikator (304) auf dem Sicherheitstoken (156) so gesetzt sind, dass der erste sektorenspezifische Identifikator (304) lesbar ist,
wobei auf eine Aufforderung des Nutzers (102) des ID-Tokens (106) zum Freischalten der Leserechte des erzeugten Zertifikats (167) an ein drittes Prüf-Computersystem (330) hin die erste Datenbankabfrage der ersten Sperrdatenbank (318) durch das erste Prüf-Computersystem (310) erfolgt, und
wobei die Leserechte des erzeugten Zertifikats (167) von dem dritten Prüf-Computersystem (330) durch Umsetzen freigeschaltet werden, sodass das Zertifikat (167) lesbar ist, unter der Voraussetzung, dass das erste Prüfsignal anzeigt, dass der ID-Token (106) nicht gesperrt ist.

8. Verfahren zur Erzeugung eines Zertifikats (167) für einen Sicherheitstoken (156) eines Nutzers (102) durch einen ID-Token (106) desselben Nutzers (102),
wobei in dem ID-Token (106) ein Zertifikat (103) einer Dokumenten-PKI (300) gespeichert ist und der ID-Token (106) einen geschützten Speicherbereich (183, 185) aufweist, in dem ein dem Zertifikat (103) der Dokumenten-PKI zugeordneter privater Schlüssel (105; 187) eines kryptographischen Schlüsselpaars bestehend aus dem privaten (105; 187) und einem öffentlichen Schlüssel (178; 188) zur Erzeugung des Zertifikats (167), zumindest ein weiterer, dem Zertifikat (103) der Dokumenten-PKI (300) zugeordneter erster privater Schlüssel (182) eines weiteren ersten kryptographischen Schlüsselpaars bestehend aus dem ersten privaten Schlüssel (182) und einem ersten öffentlichen Schlüssel, ein oder mehrere Attribute (124, 198) und eine über eine Kommunikationsschnittstelle (108) des ID-Tokens (106) empfangene Zeitinformation (107, TA') gespeichert sind,
wobei in dem Sicherheitstoken (156) ein Zertifikat (160) einer Berechtigungs-PKI (302) gespeichert ist, wobei in dem Zertifikat (160) der Berechtigungs-PKI (302) eine Schreibberechtigung für einen Schreibzugriff des Sicherheitstokens (156) auf den geschützten Speicherbereich (183) des ID-Tokens (106) festgelegt ist und wobei das Zertifikat (160) der Berechtigungs-PKI (302) einen öffentlichen Sektorenschlüssel (176) beinhaltet, welcher einem Sektor aus einer Mehrzahl von vordefinierten Sektoren zugeordnet und für alle Sicherheitstoken desselben Sektors identisch ist,
wobei das Verfahren umfasst:
- Authentifizierung des Nutzers (102) gegenüber dem ID-Token (106) und gegenüber dem Sicherheitstoken (156),
- gegenseitige Authentifizierung des ID-Tokens (106) und des Sicherheitstokens (156) unter Verwendung des Zertifikats (103) der Dokumenten-PKI (300) und des Zertifikats (160) der Berechtigungs-PKI (302),
- Erzeugung eines kryptografischen Schlüsselpaars (166) bestehend aus einem privaten Schlüssel (189) und einem öffentlichen Schlüssel (173) durch den Sicherheitstoken (156),
- Durchführung des Schreibzugriffs des Sicherheitstokens (156) auf den geschützten Speicherbereich (183) des ID-Tokens (106) zur Speicherung des öffentlichen Schlüssels (173) des erzeugten Schlüsselpaars (166) und des öffentlichen Sektorenschlüssels (176) in dem ID-Token (106),
- Durchführung eines Zugriffs des ID-Tokens (106) auf den geschützten Speicherbereich (183), um den öffentlichen Schlüssel (173), den zumindest einen weiteren privaten Schlüssel (182), den öffentlichen Sektorenschlüssel (176), die Zeitinformation (107, TA') und zumindest das eine Attribut (124, 198) zu lesen,
- Berechnung eines ersten Identifikators (304) aus dem weiteren ersten privaten Schlüssel (182) und dem öffentlichen Sektorenschlüssel (176) durch den ID-Token (156),
- Erzeugung eines Datensatzes (192), der den öffentlichen Schlüssel (173), den öffentlichen Sektorenschlüssel (176) oder einen kryptografisch davon abgeleiteter Wert, die Zeitinformation (107, TA') und das zumindest eine Attribut (124, 198) beinhaltet, durch den ID-Token (106),
- Signierung des Datensatzes (192) mit dem in dem geschützten Speicherbereich (185) gespeicherten privaten Schlüssel (105, 187) durch den ID-Token (106) zur Erzeugung des Zertifikats (167),
- Ausgabe des Zertifikats (167) durch den ID-Token (106) an den Sicherheitstoken (156) und Speicherung des Zertifikats (167) auf dem Sicherheitstoken (156),
- Ausgabe des ersten Identifikators (304) durch den ID-Token (106) an den Sicherheitstoken (156) und Speicherung des ersten Identifikators (304) auf dem Sicherheitstoken (156),
- Verwendung des ersten Identifikators (304) als Sperrmerkmal des ID-Token (106) für eine erste Sperrdatenbank (318), wobei die erste Sperrdatenbank (318) derart konfiguriert ist, dass aus ihr ein Sperrstatus des ID-Tokens (106) abfragbar ist,
- Verwendung eines zweiten Identifikator (306) als Sperrmerkmal des erzeugten Zertifikats (167) für eine zweite Sperrdatenbank (328), wobei die zweite Sperrdatenbank (328) derart konfiguriert ist, dass aus ihr ein Sperrstatus des erzeugten Zertifikats (167) abfragbar ist.

9. Verfahren nach Anspruch 8, wobei der Datensatz (192) den ersten Identifikator (304) beinhaltet und der erste Identifikator (304) als Bestandteil des aus dem Datensatz (192) erzeugten Zertifikats (167) durch den ID-Token (106) an den Sicherheitstoken (156) ausgegeben und auf dem Sicherheitstoken (156) gespeichert wird und/oder
wobei der zweite sektorenspezifische Identifikator (306) mit dem ersten sektorenspezifischen Identifikator (304) identisch ist oder
in dem geschützten Speicherbereich (183) des ID-Tokens (106) ein weiterer, dem Zertifikat (103) der Dokumenten-PKI (300) zugeordneter zweiter privater Schlüssel (184) eines weiteren zweiten kryptographischen Schlüsselpaars bestehend aus dem zweiten privaten Schlüssel (184) und einem zweiten öffentlichen Schlüssel gespeichert ist,
wobei das Verfahren ferner umfasst:
- Berechnung eines zweiten Identifikators (306) aus dem weiteren zweiten privaten Schlüssel (184) und dem öffentlichen Sektorenschlüssel (176) durch den ID-Token (106),
- Erzeugung des Datensatzes (192) durch den ID-Token (106), sodass der Datensatz (192) zusätzlich den zweiten Identifikator (306) beinhaltet.

10. Verfahren nach einem der Ansprüche 8 bis 9, wobei die erste Sperrdatenbank (318) derart konfiguriert ist, dass auf eine Sperraufforderung des Nutzers (102) des ID-Tokens (106) zum Sperren des ID-Tokens (106) hin in der ersten Sperrdatenbank (318) der erste sektorenspezifische Identifikator (304) gespeichert wird, sodass ein auf eine erste Datenbankabfrage der ersten Sperrdatenbank (318) durch ein erstes Prüf-Computersystem (310) zur Ermittlung eines Sperrstatus des ID-Tokens (106) hin erzeugtes erstes Prüfsignal als Ergebnis der ersten Datenbankabfrage anzeigt, dass der ID-Token (106) nicht gesperrt ist, unter der Voraussetzung, dass der erste sektorenspezifische Identifikator (304) nicht in der ersten Sperrdatenbank (318) gespeichert ist,
oder wobei die erste Sperrdatenbank (318) derart konfiguriert ist, dass der erste sektorenspezifische Identifikator (304) des ID-Tokens (106) in der ersten Sperrdatenbank (318) vorgespeichert ist und auf eine Sperraufforderung des Nutzers (102) des ID-Tokens (106) zum Sperren des ID-Tokens (106) hin der vorgespeicherte erste sektorenspezifische Identifikator (304) aus der ersten Sperrdatenbank (318) gelöscht wird, sodass das erste Prüfsignal als Ergebnis der ersten Datenbankabfrage der ersten Sperrdatenbank (318) anzeigt, dass der ID-Token (106) nicht gesperrt ist, unter der Voraussetzung, dass der erste sektorenspezifische Identifikator (304) in der ersten Sperrdatenbank (318) gespeichert ist.

11. Verfahren nach einem der Ansprüche 8 bis 10, wobei die zweite Sperrdatenbank (328) derart konfiguriert ist, dass auf eine Sperraufforderung des Nutzers (102) des ID-Tokens (106) zum Sperren des erzeugten Zertifikats (167) hin in der zweiten Sperrdatenbank (328) ein zweiter sektorenspezifischer Identifikator (306) gespeichert wird, sodass ein auf eine zweite Datenbankabfrage der zweiten Sperrdatenbank (328) durch ein zweites Prüf-Computersystem (320) zur Ermittlung eines Sperrstatus des erzeugten Zertifikats (167) hin erzeugtes zweites Prüfsignal als Ergebnis der zweiten Datenbankabfrage anzeigt, dass das erzeugte Zertifikat (167) nicht gesperrt ist, unter der Voraussetzung, dass der zweite sektorenspezifische Identifikator (306) nicht in der zweiten Sperrdatenbank (328) gespeichert ist,
oder wobei die zweite Sperrdatenbank (328) derart konfiguriert ist, dass in der zweiten Sperrdatenbank (328) ein zweiter sektorenspezifischer Identifikator (306) des erzeugten Zertifikats (167) vorgespeichert ist und auf eine Sperraufforderung des Nutzers (102) des ID-Tokens (106) zum Sperren des erzeugten Zertifikats (167) hin der vorgespeicherte zweite sektorenspezifische Identifikator (306) aus der zweiten Sperrdatenbank (328) gelöscht wird, sodass das zweite Prüfsignal als Ergebnis der zweiten Datenbankabfrage der zweiten Sperrdatenbank (328) anzeigt, dass das erzeugte Zertifikat (167) nicht gesperrt ist, unter der Voraussetzung, dass der zweite sektorenspezifische Identifikator (306) in der zweiten Sperrdatenbank (328) gespeichert ist, wobei vorzugsweise das erzeugte Zertifikat (167) eine individuelle Kennung aufweist und die Kennung des erzeugten Zertifikats (167) in der zweiten Sperrdatenbank (328) zusammen mit dem zweiten Identifikator (306) jeweils gespeichert und/oder gelöscht wird.

12. Verfahren nach einem der Ansprüche 8 bis 11, wobei das Verfahren ferner umfasst:
- Freischalten des erzeugten Zertifikats (167) auf eine Aufforderung des Nutzers (102) des ID-Tokens (106) zum Freischalten des erzeugten Zertifikats (167) hin durch Speichern eines dritten sektorenspezifischen Identifikators in einer dritten Datenbank, wobei die dritte Datenbank derart konfiguriert ist, dass ein auf eine dritte Datenbankabfrage der dritten Sperrdatenbank durch ein drittes Prüf-Computersystem zur Ermittlung eines Sperrstatus des erzeugten Zertifikats hin erzeugtes drittes Prüfsignal als Ergebnis der dritten Datenbankabfrage anzeigt, dass das erzeugte Zertifikat (167) freigeschaltet ist, unter der Voraussetzung, dass der dritte sektorenspezifischer Identifikator in der dritten Datenbank gespeichert ist, wobei die erste Datenbankabfrage der ersten Sperrdatenbank (318) durch das erste Prüf-Computersystem (310) beim Speichern des dritten sektorenspezifischer Identifikator erfolgt und wobei der dritte sektorenspezifischen Identifikator in der dritten Datenbank nur unter der Voraussetzung gespeichert wird, dass das erste Prüfsignal anzeigt, dass der ID-Token (167) nicht gesperrt ist.

13. Verfahren nach einem der Ansprüche 8 bis 11, wobei das Verfahren ferner umfasst:
- Freischalten des erzeugten Zertifikats (167) auf eine Aufforderung des Nutzers (102) des ID-Tokens zum Freischalten des erzeugten Zertifikats (167) hin durch Löschen eines vorgespeicherten dritten sektorenspezifischen Identifikators aus einer dritten Datenbank, wobei die dritte Datenbank derart konfiguriert ist, dass ein auf eine dritte Datenbankabfrage der dritten Sperrdatenbank durch ein drittes Prüf-Computersystem zur Ermittlung eines Sperrstatus des erzeugten Zertifikats hin erzeugtes drittes Prüfsignal als Ergebnis der dritten Datenbankabfrage anzeigt, dass das erzeugte Zertifikat freigeschaltet ist, unter der Voraussetzung, dass der dritte sektorenspezifischer Identifikator nicht in der dritten Datenbank gespeichert ist,
wobei die erste Datenbankabfrage der ersten Sperrdatenbank (318) durch das erste Prüf-Computersystem (310) beim Speichern des dritten sektorenspezifischer Identifikator erfolgt und wobei der dritte sektorenspezifischen Identifikator in der dritten Datenbank nur unter der Voraussetzung gelöscht wird, dass das erste Prüfsignal anzeigt, dass der ID-Token (106) nicht gesperrt ist,
wobei vorzugsweise der dritte sektorenspezifische Identifikator mit dem ersten und/oder dem zweiten Identifikator (304; 306) identisch ist und/oder die Kennung des erzeugten Zertifikats in der dritten Sperrdatenbank zusammen mit dem dritten Identifikator jeweils gespeichert und/oder gelöscht wird.

14. Verfahren nach einem der Ansprüche 8 bis 11, wobei die Leserechte für das auf dem Sicherheitstoken (156) gespeicherte Zertifikat (167) bei der Erzeugung so gesetzt werden, dass das Zertifikat (167) nicht lesbar ist, und wobei die Leserechte für den ersten sektorenspezifischen Identifikator (304) auf dem Sicherheitstoken (156) so gesetzt sind, dass der erste sektorenspezifische Identifikator (304) lesbar ist,
wobei das Verfahren weiter umfasst:
- auf eine Aufforderung des Nutzers (102) des ID-Tokens (106) zum Freischalten des erzeugten Zertifikats (167) an ein drittes Prüf-Computersystem (330) hin, Ausführen der ersten Datenbankabfrage der ersten Sperrdatenbank (318) durch ein erstes Prüf-Computersystem (310) zur Ermittlung eines Sperrstatus des ID-Tokens (106),
- Erzeugen des ersten Prüfsignals, welches das Ergebnis der ersten Datenbankabfrage anzeigt,
- Freischalten der Leserechte des erzeugten Zertifikats (167) durch ein drittes Prüf-Computersystem (330) durch Umsetzen, sodass das Zertifikat (167) lesbar ist, unter der Voraussetzung anzeigt, dass das erste Prüfsignal anzeigt, dass der ID-Token (106) nicht gesperrt ist.

15. Elektronisches System mit einem ID-Token (106), einem Sicherheitstoken (156) und einem Nutzer-Computersystem (100) sowie mindestens einem weiteren Computersystem (310, 320, 330), welches zur Durchführung eines Verfahrens nach einem der vorhergehenden Patentansprüche konfiguriert ist.

## Claims

1. A method for checking the validity of a certificate (167) generated by an ID token (106) of a user (102) for a security token (156) of the same user (102),
wherein the ID token (106) has a protected memory area (183), in which there is stored at least one first private key (182) of a first cryptographic key pair consisting of the first private key (182) and a first public key, and wherein a certificate (103) of a document PKI (300) is associated with the ID token (106),
wherein a certificate (160) of an authorisation PKI (302) is associated with the security token (156) and is stored on the security token (156), wherein a write authorisation for write access by the security token (156) to the protected memory area (183) of the ID token (106) is defined in the certificate (160) of the authorisation PKI (302),
wherein the certificate (160) of the authorisation PKI (302) may be used for authentication of the security token (156) to the ID token (106),
wherein the certificate (160) of the authorisation PKI (302) contains a public sector key (176), which is associated with a sector from a plurality of predefined sectors and is identical for all security tokens of the same sector, wherein a private key (189) of a cryptographic key pair (166) generated by the security token (106), said private key being associated with the generated certificate (167) and said cryptographic key pair consisting of the private key (189) and a public key (173), is stored on the security token (156), and wherein at least one first sector-specific identifier (304) associated with the ID token (106) is stored on the security token (156) and is calculated from the first private key (182) of the ID token (106) and the public sector key (176) of the security token (156),
wherein the certificate (167) generated by the ID token (106) is a certificate (167) which is derived from the certificate (103) of the document PKI (300) and stored on the security token (156) and contains the public sector key (176) or a value cryptographically derived therefrom and the public key (173) of the cryptographic key pair (166) generated by the security token (106),
wherein the method comprises the following steps:
- executing a first database query of a first blocking database (318) by a first check computer system (310) in order to ascertain a blocked status of the ID token (106), wherein the first blocking database (318) is configured in such a way that the blocked status of the ID token (106) may be queried from said database,
- generating a first check signal by the first check computer system (310), which signal indicates the result of the first database query,
- executing a second database query of a second blocking database (328) by a second check computer system (320) in order to ascertain a blocked status of the generated certificate (167), wherein the second blocking database (328) is configured in such a way that the blocked status of the generated certificate (167) may be queried from said database,
- generating a second check signal by the second check computer system (320), which signal indicates the result of the second database query,
- generating a validity signal, which indicates the validity of the generated certificate (167) on the precondition that the first check signal indicates that the ID token (106) is not blocked and the second checked signal indicates that the generated certificate (167) is not blocked.

2. The method according to claim 1, wherein the first sector-specific identifier (304) is contained in the generated certificate (164).

3. The method according to either one of claims 1 or 2, wherein the first blocking database (318) is configured in such a way that, upon a blocking request by the user (102) of the ID token (106) to block the ID token (106), the first sector-specific identifier (304) is stored in the first blocking database (318) so that the first check signal, as the result of the first database query of the first blocking database (318), indicates that the ID token (106) is not blocked on the precondition that the first sector-specific identifier (304) is not stored in the first blocking database (318),
or wherein the first blocking database (318) is configured in such a way that the first sector-specific identifier (304) of the ID token (106) is pre-stored in the first blocking database (318), and, upon a blocking request by the user (102) of the ID token (106) to block the ID token (106), the pre-stored first sector-specific identifier (304) is deleted from the first blocking database (318) so that the first check signal, as the result of the first database query of the first blocking database (318), indicates that the ID token (106) is not blocked on the precondition that the first sector-specific identifier (304) is stored in the first blocking database (318).

4. The method according to any one of claims 1 to 3, wherein the first blocking database (318) comprises a plurality of sector databases, wherein each sector database is associated with an individual sector and is configured such that, upon a blocking request by the user (102) of the ID token (106) to block the ID token (106), a sector-specific blocking factor associated with the ID token (106) is stored in the sector database, which sector-specific blocking factor is calculated from the first private key (182) of the ID token (106) and a public sector key associated with the sector of the sector database,
or wherein each sector database is configured such that a sector-specific blocking factor associated with the ID token (106) is pre-stored in the sector database, which sector-specific blocking factor is calculated from the first private key (182) of the ID token (106) and a public sector key associated with the sector of the particular sector database, and, upon a blocking request by the user (102) of the ID token (106) to block the ID token (106), the pre-stored sector-specific identifier associated with the particular ID token (106) is deleted from each sector database.

5. The method according to any one of claims 1 to 4, wherein the second blocking database (320) is configured in such a way that, upon a blocking request by the user (102) of the ID token (106) to block the generated certificate (167), a second sector-specific identifier (306) is stored in the second blocking database (328) so that the second check signal, as the result of the second database query of the second blocking database (328), indicates that the generated certificate (167) is not blocked on the precondition that the second sector-specific identifier (306) is not stored in the second blocking database (328),
or wherein the second blocking database (328) is configured in such a way that a second sector-specific identifier (306) of the generated certificate (167) is pre-stored in the second blocking database (328), and, upon a blocking request by the user (102) of the ID token (106) to block the generated certificate (167), the pre-stored second sector-specific identifier (306) is deleted from the second locking database (328) so that the second check signal, as the result of the second database query of the second blocking database (328), indicates that the generated certificate (167) is not blocked on the precondition that the second sector-specific identifier (306) is stored in the second blocking database (328), wherein the second sector-specific identifier (306) is preferably identical to the first sector-specific identifier (304) or a second private key (184) of a second cryptographic key pair consisting of the second private key (184) and a second public key is also stored in the protected memory area (183) of the ID token, wherein the certificate generated by the ID token also contains the second sector-specific identifier (306) associated with the ID token, which sector-specific identifier is calculated from the second private key (184) of the ID token (106) and the public sector key (176) of the security token (156), and/or
wherein the certificate (167) generated by the ID token (106) preferably also has an individual identifying characteristic, and the identifying characteristic of the generated certificate (167) is stored in and/or deleted from the second blocking database (328) together with the second identifier (306).

6. The method according to any one of claims 1 to 5, wherein the method also comprises the following steps:
- executing a third database query of a third database by a third check computer system in order to ascertain whether the certificate (167) generated by the ID token (106) is unblocked, wherein the third blocking database is configured in such a way that it may be queried from said database whether the generated certificate (167) is unblocked,
- generating a third check signal by the third check computer system, which signal indicates the result of the third database query,
- wherein the validity signal indicates the validity of the generated certificate (167) on the additional precondition that the third check signal indicates that the generated certificate (167) is unblocked,
wherein the third check computer system is preferably identical to the first and/or the second check computer system (310; 320), and/or
in order to unblock the generated certificate (167), at the time of generation of the certificate (167) a third sector-specific identifier is stored in the third database so that the third check signal, as the result of the third database query of the third database, indicates that the generated certificate (167) is unblocked on the precondition that the third sector-specific identifier is stored in the third database, wherein the first database query of the first blocking database (318) is performed by the first check computer system (310) when the third sector-specific identifier is stored, and wherein the third selector-specific identifier is stored in the third database only on the precondition that the first check signal indicates that the ID token (106) is not blocked,
or wherein in order to unblock the generated certificate (167), at the time of generation of the certificate (167) a pre-stored third sector-specific identifier is deleted from the third database so that the third check signal, as the result of the third database query of the third database, indicates that the generated certificate (167) is unblocked on the precondition that the third sector-specific identifier is not stored in the third database, wherein the first database query of the first blocking database (318) is performed by the first check computer system (310) when the third sector-specific identifier is deleted, and wherein the third sector-specific identifier is deleted in the third database only on the precondition that the first check signal indicates that the ID token (106) is not blocked,
wherein the third sector-specific identifier is preferably identical to the first and/or the second identifier (318; 328) and/or the individual identifying characteristic of the generated certificate (167) is stored in and/or deleted from the third blocking database together with the third identifier.

7. The method according to any one of claims 1 to 5, wherein when generating the certificate (167) the read rights for the generated certificate (167) are set on the security token (156) such that the certificate (167) is not readable, wherein the read rights for the first sector-specific identifier (304) are set on the security token (156) such that the first selector-specific identifier (304) is readable,
wherein, upon a request of the user (102) the ID token (106) to a third check computer system (330) to unblock the read rights of the generated certificate (167), the first database query of the first blocking database (318) is performed by the first check computer system (310),
and
wherein the read rights of the generated certificate (167) are unblocked by the third check computer system (330) by resetting, such that the certificate (167) is readable on the condition that the first check signal indicates that the ID token (106) is not blocked.

8. A method for generating a certificate (167) for a security token (156) of a user (102) by an ID token (106) of the same user (102),
wherein a certificate (103) of a document PKI (300) is stored in the ID token (106), and the ID token (106) has a protected memory area (183, 185), in which there are stored: a private key (105; 187) of a cryptographic key pair, said private key being associated with the certificate (103) of the document PKI and said cryptographic key pair consisting of the private key (105; 187) and a public key (178; 188), for generating the certificate (167); at least one further first private key (182) of a further first cryptographic key pair, said first private key being associated with the certificate (103) of the document PKI (300) and said cryptographic key pair consisting of the first private key (182) and a first public key; one or more attributes (124, 198); and a time information item (107, TA') received via a communication interface (108) of the ID token (106), wherein a certificate (160) of an authorisation PKI (302) is stored in the security token (156), wherein a write authorisation for write access by the security token (156) to the protected memory area (183) of the ID token (106) is defined in the certificate (160) of the authorisation PKI (302), and wherein the certificate (160) of the authorisation PKI (302) contains a public sector key (176), which is associated with a sector from a plurality of predefined sectors and is identical for all security tokens of the same sector,
wherein the method comprises the following steps:
- authenticating the user (102) to the ID token (106) and to the security token (156),
- authenticating the ID token (106) and the security token (156) to one another with use of the certificate (103) of the document PKI (300) and with use of the certificate (160) of the authorisation PKI (302),
- generating, by the security token (156), a cryptographic key pair (166) consisting of a private key (189) and a public key (173),
- implementing the write access by the security token (156) to the protected memory area (183) of the ID token (106) in order to store the public key (173) of the generated key pair (166) and of the public sector key (176) in the ID token (106),
- implementing an access by the ID token (106) to the protected memory area (183) in order to read the public key (173), the at least one further private key (182), the public sector key (176), the time information item (107, TA'), and at least the one attribute (124, 198),
- calculating a first identifier (304) from the further first private key (182) and the public sector key (176) by the ID token (156),
- generating, by the ID token (106), a dataset (192), which contains the public key (173), the public sector key (176) or a value derived cryptographically therefrom, the time information item (107, TA'), and the at least one attribute (124, 198),
- signing the dataset (192), by the ID token (106), using the private key (105, 187) stored in the protected memory area (185) in order to generate the certificate (167),
- outputting the certificate (167) by the ID token (106) to the security token (156) and storing the certificate (167) on the security token (156),
- outputting the first identifier (304) by the ID token (106) to the security token (156) and storing the first identifier (304) on the security token (156),
- using the first identifier (304) as blocking feature of the ID token (106) for a first blocking database (318), wherein the first blocking database (318) is configured in such a way that a blocked status of the ID token (106) may be queried from said first blocking database,
- using a second identifier (306) as blocking feature of the generated certificate (167) for a second blocking database (328), wherein the second blocking database (328) is configured in such a way that a blocked status of the generated certificate (167) may be queried from said second blocking database.

9. The method according to claim 8, wherein the dataset (192) contains the first identifier (304), and the first identifier (304) is output by the ID token (106) to the security token (156) as part of the certificate (167) generated from the dataset (192) and is stored on the security token (156), and/or wherein the second sector-specific identifier (306) is identical to the first sector-specific identifier (304), or
a further, second private key (184) of a further second cryptographic key pair, said further, second private key being associated with the certificate (103) of the document PKI (300) and said further second cryptographic key pair consisting of the second private key (184) and a second public key, is stored in the protected memory area (183) of the ID token (106), wherein the method also comprises the following steps:
- calculating, by the ID token (106), a second identifier (306) from the further second private key (184) and the public sector key (176),
- generating the dataset (192) by the ID token (106), such that the dataset (192) additionally contains the second identifier (306).

10. The method according to any one of claims 8 to 9, wherein the first blocking database (318) is configured in such a way that, upon a blocking request by the user (102) of the ID token (106) to block the ID token (106), the first sector-specific identifier (304) is stored in the first blocking database (318) so that a first check signal generated by a first check computer system (310) upon a first database query of the first blocking database (318) in order to ascertain a blocked status of the ID token (106), as the result of the first database query, indicates that the ID token (106) is not blocked on the precondition that the first sector-specific identifier (304) is not stored in the first blocking database (318),
or wherein the first blocking database (318) is configured in such a way that the first sector-specific identifier (304) of the ID token (106) is pre-stored in the first blocking database (318), and, upon a blocking request by the user (102) of the ID token (106) to block the ID token (106), the pre-stored first sector-specific identifier (304) is deleted from the first blocking database (318) so that the first check signal, as the result of the first database query of the first blocking database (318), indicates that the ID token (106) is not blocked on the precondition that the first sector-specific identifier (304) is stored in the first blocking database (318).

11. The method according to any one of claims 8 to 10, wherein the second blocking database (328) is configured in such a way that, upon a blocking request by the user (102) of the ID token (106) to block the generated certificate (167), a second sector-specific identifier (306) is stored in the second blocking database (328) so that a second check signal, generated upon a second database query of the second blocking database (328) by a second check computer system (320) in order to ascertain a blocked status of the generated certificate (167), as the result of the second database query, indicates that the generated certificate (167) is not blocked on the precondition that the second sector-specific identifier (306) is not stored in the second blocking database (328),
or wherein the second blocking database (328) is configured in such a way that a second sector-specific identifier (306) of the generated certificate (167) is pre-stored in the second blocking database (328), and, upon a blocking request by the user (102) of the ID token (106) to block the generated certificate (167), the pre-stored second sector-specific identifier (306) is deleted from the second locking database (328) so that the second check signal, as the result of the second database query of the second blocking database (328), indicates that the generated certificate (167) is not blocked on the precondition that the second sector-specific identifier (306) is stored in the second blocking database (328),
wherein the generated certificate (167) preferably has an individual identifying characteristic, and the identifying characteristic of the generated certificate (167) is stored in and/or deleted from the second blocking database (328) together with the second identifier (306).

12. The method according to any one of claims 8 to 11, wherein the method also comprises the following steps:
- unblocking the generated certificate (167) upon a request by the user (102) of the ID token (106) to unblock the generated certificate (167) by storing a third sector-specific identifier in a third database, wherein the third database is configured in such a way that a third check signal, generated upon a third database query of the third blocking database by a third check computer system in order to ascertain a blocked status of the generated certificate, as the result of the third database query, indicates that the generated certificate (167) is unblocked on the precondition that the third sector-specific identifier is stored in the third database, wherein the first database query of the first blocking database (318) is performed by the first check computer system (310) when the third sector-specific identifier is stored, and wherein the third selector-specific identifier is stored in the third database only on the precondition that the first check signal indicates that the ID token (106) is not blocked.

13. The method according to any one of claims 8 to 11, wherein the method also comprises the following steps:
- unblocking the generated certificate (167), upon a request by the user (102) of the ID token (106) to unblock the generated certificate (167), by deleting a pre-stored third sector-specific identifier from a third database, wherein the third database is configured in such a way that a third check signal, generated upon a third database query of the third blocking database by a third check computer system in order to ascertain a blocked status of the generated certificate, as the result of the third database query, indicates that the generated certificate is unblocked on the precondition that the third sector-specific identifier is not stored in the third database,
wherein the first database query of the first blocking database (318) is performed by the first check computer system (310) when the third sector-specific identifier is stored, and wherein the third sector-specific identifier is stored in the third database only on the precondition that the first check signal indicates that the ID token (106) is not blocked,
wherein the third sector-specific identifier is preferably identical to the first and/or the second identifier (304; 306) and/or the identifying characteristic of the generated certificate is stored in and/or deleted from the third blocking database together with the third identifier.

14. The method according to any one of claims 8 to 11, wherein the read rights for the certificate (167) stored on the security token (156) are set at the time of generation such that the certificate (167) is not readable, and wherein the read rights for the first sector-specific identifier (304) are set on the security token (156) such that the first sector-specific identifier (304) is readable,
wherein the method further comprises the following steps:
- upon a request by the user (102) of the ID token (106) to a third check computer system (330) to unblock the generated certificate (167), executing the first database query of the first blocking database (318) by a first check computer system (310) in order to ascertain a blocked status of the ID token (106),
- generating the first check signal, which indicates the result of the first database query,
- unblocking the read rights of the generated certificate (167) by a third check computer system (330) by resetting, such that the certificate (167) is readable on the precondition that the first check signal indicates that the ID token (106) is not blocked.

15. An electronic system comprising an ID token (106), a security token (156), and a user computer system (100) as well as at least one further computer system (310, 320, 320), which is configured to carry out a method according to any one of the preceding claims.

## Revendications

1. Procédé de vérification de la validité d'un certificat (167) créé par un jeton d'identification (106) d'un utilisateur (102) pour un jeton de sécurité (156) de ce même utilisateur (102),
dans lequel le jeton d'identification (106) présente une zone de mémoire sécurisée (183), dans laquelle est stockée au moins une première clé privée (182) d'une première paire de clés cryptographiques constituée de la première clé privée (182) et d'une première clé publique, et où un certificat (103) d'une infrastructure à clés publiques ICP de documents (300) est associé au jeton d'identification (106),
dans lequel un certificat (160) d'une ICP d'autorisation (302) est associé au jeton de sécurité (156) et est stocké sur le jeton de sécurité (156), où une autorisation d'écriture pour un accès en écriture du jeton de sécurité (156) pour la zone de mémoire sécurisée (183) du jeton d'identification (106) est fixée sur le certificat (160) de l'ICP d'autorisation (302),
dans lequel le certificat (160) de l'ICP d'autorisation (302) peut être employé pour l'authentification du jeton de sécurité (156) vis-à-vis du jeton d'identification (106), où
le certificat (160) de l'ICP d'autorisation (302) contient une clé de secteur publique (176), laquelle est associée à un secteur d'une multiplicité de secteurs prédéfinis et est identique pour tous les jetons de sécurité du même secteur, où une clé privée (189) d'une paire de clés (166) cryptographiques créée par le jeton de sécurité (166) constituée de la clé privée (189) et d'une clé publique (173) est stockée sur le jeton de sécurité (156), et où au moins un premier identificateur spécifique de secteur (304) associé au jeton d'identification (106) est stocké sur le jeton de sécurité (156), lequel identificateur est calculé à partir de la première clé privée (182) du jeton d'identification (106) et de la clé de secteur publique (176) du jeton de sécurité (156), où le certificat (167) créé par le jeton d'identification (106) est un certificat (167) dérivé du certificat (103) de l'ICP de documents (300) et stocké sur le jeton de sécurité (156), lequel contient la clé de secteur publique (176) ou une valeur en étant dérivée de manière cryptographique et la clé publique (173) de la paire de clés (166) cryptographiques créée par le jeton de sécurité (106),
où le procédé comprend :
- l'exécution d'une première interrogation de banque de données d'une première banque de données de révocation (318) par un premier système informatique de vérification (310) pour la détermination d'un état de révocation du jeton d'identification (106), où la première banque de données de révocation (318) est configurée de telle manière que l'on peut l'interroger sur l'état de révocation du jeton d'identification (106),
- la création d'un premier signal de vérification par le premier système informatique de vérification (310), lequel indique le résultat de la première interrogation de banque de données,
- l'exécution d'une deuxième interrogation de banque de données d'une deuxième banque de données de révocation (328) par un deuxième système informatique de vérification (320) pour la détermination d'un état de révocation du certificat (167) créé, où la deuxième banque de données de révocation (328) est configurée de telle manière que l'on peut l'interroger sur l'état de révocation du certificat (167) créé,
- la création d'un deuxième signal de vérification par le deuxième système informatique de vérification (320), lequel indique le résultat de la deuxième interrogation de banque de données,
- la création d'un signal de validité, lequel indique la validité du certificat (167) créé moyennant la condition que le premier signal de vérification indique que le jeton d'identification (106) n'est pas révoqué et le deuxième signal de vérification indique que le certificat (167) créé n'est pas révoqué.

2. Procédé selon la revendication 1, dans lequel le premier identificateur spécifique de secteur (304) est contenu dans le certificat (164) créé.

3. Procédé selon l'une des revendications 1 ou 2, dans lequel la première banque de données de révocation (318) est configurée de telle manière que, suite à une requête de révocation de l'utilisateur (102) du jeton d'identification (106) pour la révocation du jeton d'identification (106), le premier identificateur spécifique de secteur (304) est stocké dans la première banque de données de révocation (318), de sorte que le premier signal de vérification indique, en tant que résultat de la première interrogation de banque de données de la première banque de données de révocation (318), que le jeton d'identification (106) n'est pas révoqué, moyennant la condition que le premier identificateur spécifique de secteur (304) n'est pas stocké dans la première banque de données de révocation (318),
ou dans lequel la première banque de données de révocation (318) est configurée de telle manière que le premier identificateur spécifique de secteur (304) du jeton d'utilisation (106) est stocké préalablement dans la première banque de données de révocation (318) et est effacé de la première banque de données de révocation (318) suite à une requête de révocation de l'utilisateur (102) du jeton d'identification (106) pour révoquer le jeton d'identification (106), de sorte que le premier signal de vérification indique en tant que résultat de la première interrogation de banque de données de la première banque de données de révocation (318) que le jeton d'identification (106) n'est pas révoqué à la condition que le premier identificateur spécifique de secteur (304) est stocké dans la première banque de données de révocation (318).

4. Procédé selon l'une des revendications 1 à 3, dans lequel la première banque de données de révocation (318) comprend une multiplicité de banques de données de secteurs, où chaque banque de données de secteur est respectivement associée à un secteur individuel et est respectivement configurée qu'un facteur de révocation spécifique au secteur associé au jeton d'identification (106) est stocké dans la banque de données de secteurs suite à une requête de révocation de l'utilisateur (102) du jeton d'identification (106) pour la révocation du jeton d'identification (106), facteur qui est calculé respectivement à partir de la première clé privée (182) du jeton d'identification (106) et d'une clé de secteur publique associée au secteur de la banque de données de secteur,
ou dans lequel chaque banque de données de secteur est respectivement configurée de telle manière qu'un facteur de révocation spécifique à un secteur associé au jeton d'identification (106) est stocké préalablement dans la banque de données de secteurs, facteur qui est calculé à partir de la première clé privée (182) du jeton d'identification (106) et d'une clé de secteur publique associée au secteur de la banque de données de secteur respective et suite à une requête de révocation de l'utilisateur (102) du jeton d'identification (106) pour la révocation du jeton d'identification (106), l'identificateur spécifique au secteur préalablement stocké associé au jeton d'identification (106) respectif est effacé à partir de chaque banque de données de secteur.

5. Procédé selon l'une des revendications 1 à 4, dans lequel la deuxième banque de données de révocation (320) est configurée de telle manière que, suite à une requête de révocation de l'utilisateur (102) du jeton d'identification (106) pour la révocation du certificat (167) créé, un deuxième identificateur spécifique de secteur (306) est stocké dans la deuxième banque de données de révocation (328), de sorte que le deuxième signal de vérification indique en tant que résultat de la deuxième interrogation de la banque de données de la deuxième banque de données de révocation (328) que le certificat (167) créé n'est pas révoqué, à la condition que le deuxième identificateur spécifique de secteur (306) n'est pas stocké dans la deuxième banque de données de révocation (328),
ou dans lequel la deuxième banque de données de révocation (328) est configurée de telle manière qu'un deuxième identificateur spécifique de secteur (306) du certificat (167) créé est stocké préalablement dans la deuxième banque de données de révocation (328) et suite à une requête de révocation de l'utilisateur (102) du jeton d'identification (106) pour la révocation du certificat (167) créé, le deuxième identificateur spécifique de secteur (306) préalablement stocké est effacé de la deuxième banque de données de révocation (328), de sorte que le deuxième signal de vérification indique en tant que résultat de la deuxième interrogation de la deuxième banque de données de révocation (328) que le certificat (167) créé n'est pas révoqué, à la condition que le deuxième identificateur spécifique de secteur (306) est stocké dans la deuxième banque de données de révocation (328), où, de préférence, le deuxième identificateur spécifique de secteur (306) est identique au premier identificateur spécifique de secteur (304) ou qu'en outre une deuxième clé privée (184) d'une deuxième paire de clés cryptographiques constituée de la deuxième clé privée (184) et d'une deuxième clé publique est stockée dans la zone de mémoire sécurisée (183) du jeton d'identification, où le certificat créé par le jeton d'identification contient en outre le deuxième identificateur spécifique de secteur (306) associé au jeton d'identification, lequel est calculé à partir de la deuxième clé privée (184) du jeton d'identification (106) et de la clé de secteur publique (176) du jeton de sécurité (156), et/ou
de préférence, le certificat (167) créé par le jeton d'identification (106) présente en outre un identifiant individuel et l'identifiant du certificat (167) créé est respectivement stocké et/ou effacé conjointement avec le deuxième identificateur (306) dans la deuxième banque de données de révocation (328).

6. Procédé selon l'une des revendications 1 à 5, dans lequel le procédé comprend en outre :
- l'exécution d'une troisième interrogation de banque de données d'une troisième banque de données par un troisième système informatique de vérification pour la détermination si le certificat (167) créé par le jeton d'identification (106) est libéré, où la troisième banque de données de révocation est configurée de telle manière que l'on peut l'interroger si le certificat (167) créé est libéré,
- la création d'un troisième signal de vérification par le troisième système informatique de vérification, lequel indique le résultat de la troisième interrogation de banque de données,
- où le signal de validité indique la validité du certificat (167) créé à la condition supplémentaire que le troisième signal de vérification indique que le certificat (167) créé est libéré,
où, de préférence, le troisième système informatique de vérification est identique au premier et/ou au deuxième système informatique de vérification (310 ; 320) et/ou pour la libération du certificat (167) créé lors de la création du certificat (167), un troisième identificateur spécifique de secteur est stocké dans la troisième banque de données, de sorte que le troisième signal de vérification indique en tant que résultat de la troisième interrogation de banque de données de la troisième banque de données que le certificat (167) créé est libéré, à la condition que le troisième identificateur spécifique de secteur est stocké dans la troisième banque de données, où la première interrogation de banque de données de la première banque de données de révocation (318) a lieu par le premier système informatique de vérification (310) lors du stockage du troisième identificateur spécifique de secteur et où le troisième identificateur spécifique de secteur est stocké dans la troisième banque de données uniquement à la condition que le premier signal de vérification indique que le jeton d'identification (106) n'est pas révoqué,
ou dans lequel, pour la libération du certificat (167) créé lors de la création du certificat (167), un troisième identificateur spécifique de secteur préalablement stocké est effacé de la troisième banque de données, de sorte que le troisième signal de vérification indique en tant que résultat de la troisième interrogation de banque de données de la troisième banque de données que le certificat (167) créé est libéré à la condition que le troisième identificateur spécifique de secteur n'est pas stocké dans la troisième banque de données,
dans lequel la première interrogation de banque de données de la première banque de données de révocation (318) a lieu par le premier système informatique de vérification (310) lors de l'effacement du troisième identificateur spécifique de secteur et dans lequel le troisième identificateur spécifique de secteur n'est effacé dans la troisième banque de données uniquement à la condition que le premier signal de vérification indique que le jeton d'identification (106) n'est pas révoqué,
dans lequel, de préférence, le troisième identificateur spécifique de secteur est identique au premier et/ou au deuxième identificateur (318 ; 328) et/ou l'identifiant individuel du certificat (167) créé est stocké et/ou effacé dans la troisième banque de données de révocation conjointement avec le troisième identificateur.

7. Procédé selon l'une des revendications 1 à 5, dans lequel, lors de la création du certificat (167), les droits de lecture pour le certificat (167) créé sont fixés de telle manière sur le jeton de sécurité (156) que le certificat (167) n'est pas lisible, où les droits de lecture pour le premier identificateur spécifique de secteur (304) sont fixés de telle manière sur le jeton de sécurité (156) que le premier identificateur spécifique de secteur (304) est lisible,
dans lequel, suite à une requête de l'utilisateur (102) du jeton d'identification (106) pour la libération des droits de lecture du certificat (167) créé à un troisième système informatique de vérification (330), la première interrogation de banque de données de la première banque de données de révocation (318) a lieu par le premier système informatique de vérification (310), et
dans lequel les droits de lecture du certificat (167) créé sont libérés par le troisième système informatique de vérification (330) par une conversion, de sorte que le certificat (167) est lisible à la condition que le premier signal de vérification indique que le jeton d'identification (106) n'est pas révoqué.

8. Procédé de création d'un certificat (167) pour un jeton de sécurité (156) d'un utilisateur (102) par un jeton d'identification (106) de ce même utilisateur (102),
dans lequel un certificat (103) d'une ICP de documents (300) est stocké dans le jeton d'identification (106), et le jeton d'identification (106) présente une zone de mémoire sécurisée (183, 185) dans laquelle sont stockés une clé privée (105 ; 187), associée au certificat (103) de l'ICP de documents, d'une paire de clés cryptographiques constituée de la clé privée (105 ; 187) et d'une clé publique (178 ; 188) pour la création du certificat (167), au moins une nouvelle première clé privée (182) associée au certificat (103) de l'ICP de documents (300), d'une nouvelle paire de clés cryptographiques constituée de la première clé privée (182) et d'une première clé publique, un ou plusieurs attributs (124,198) et une information horaire (107, TA') reçue par le biais d'une interface de communication (108) du jeton d'identification (106),
dans lequel un certificat (160) d'une ICP d'autorisation (302) est stockée dans le jeton de sécurité (156), où une autorisation d'écriture est fixée dans le certificat (160) de l'ICP d'autorisation (302) pour un accès en écriture du jeton de sécurité (156) pour la zone de mémoire sécurisée (183) du jeton d'identification (106) et où le certificat (160) de l'ICP d'autorisation (302) contient une clé de secteur publique (176), laquelle est associée à un secteur d'une pluralité de secteurs prédéfinis et est identique pour tous les jetons de sécurité du même secteur,
où le procédé comprend :
- l'authentification de l'utilisateur (102) vis-à-vis du jeton d'identification (106) et vis-à-vis du jeton de sécurité (156),
- l'authentification réciproque du jeton d'identification (106) et du jeton de sécurité (156) moyennant l'emploi du certificat (103) de l'ICP de documents (300) et du certificat (160) de l'ICP d'autorisation (302),
- la création d'une paire de clés cryptographiques (166) constituée d'une clé privée (189) et d'une clé publique (173) par le jeton de sécurité (156),
- l'exécution de l'accès en écriture du jeton de sécurité (156) sur la zone de mémoire sécurisée (183) du jeton d'identification (106) pour le stockage de la clé publique (173) de la paire de clés (166) créée et de la clé de secteur publique (176) dans le jeton d'identification (106),
- l'exécution d'un accès du jeton d'identification (106) sur la zone de mémoire sécurisée (183) afin de lire la clé publique (173), l'au moins une nouvelle clé privée (182), la clé de secteur publique (176), l'information horaire (107, TA') et l'au moins un attribut (124, 198),
- le calcul d'un premier identificateur (304) à partir de la nouvelle première clé privée (182) et de la clé de secteur publique (176) par le jeton d'identification (156),
- la création d'un ensemble de données (192) qui contient la clé publique (173), la clé de secteur publique (176) ou une valeur en étant dérivée de manière cryptographique, l'information horaire (107, TA') et l'au moins un attribut (124, 198), par le jeton d'identification (106),
- la signature de l'ensemble de données (192) avec la clé privée (105, 187) stockée dans la zone de mémoire sécurisée (185) par le jeton d'identification (106) pour la création du certificat (167),
- la délivrance du certificat (167) par le jeton d'identification (106) au jeton de sécurité (156) et le stockage du certificat (167) sur le jeton de sécurité (156),
- la délivrance du premier identificateur (304) par le jeton d'identification (106) au jeton de sécurité (156) et le stockage du premier identificateur (304) sur le jeton de sécurité (156),
- l'utilisation du premier identificateur (304) en tant que caractéristique de révocation du jeton d'identification (106) pour une première banque de données de révocation (318), où la première banque de données de révocation (318) est configurée de telle manière que l'on peut l'interroger sur un état de révocation du jeton d'identification (106),
- l'utilisation d'un deuxième identificateur (306) en tant que caractéristique de révocation du certificat (167) créé pour une deuxième banque de données de révocation (328), où la deuxième banque de données de révocation (328) est configurée de telle manière que l'on peut l'interroger sur un état de révocation du certificat (167) créé.

9. Procédé selon la revendication 8, dans lequel l'ensemble de données (192) contient le premier identificateur (304) et le premier identificateur (304) est délivré en tant que composant du certificat (167) créé à partir de l'ensemble de données (192) par le jeton d'identification (106) au jeton de sécurité (156) et est stocké sur le jeton de sécurité (156), et/ou
dans lequel le deuxième identificateur spécifique de secteur (306) est identique au premier identificateur spécifique de secteur (304), ou
une nouvelle deuxième clé privée (184), associée au certificat (103) de l'ICP de document (300), d'une nouvelle deuxième paire de clés cryptographiques constituée de la deuxième clé privée (184) et d'une deuxième clé publique est stockée dans la zone de mémoire sécurisée (183) du jeton d'identification (106),
où le procédé comprend en outre :
- le calcul d'un deuxième identificateur (306) à partir de la nouvelle deuxième clé privée (184) et de la clé de secteur publique (176) par le jeton d'identification (106),
- la création de l'ensemble de données (192) par le jeton d'identification (106) de sorte que l'ensemble de données (192) contient le deuxième identificateur (306) de manière complémentaire.

10. Procédé selon l'une des revendications 8 à 9, dans lequel la première banque de données de révocation (318) est configurée de telle manière que, suite à une requête de révocation de l'utilisateur (102) du jeton d'identification (106) pour la révocation du jeton d'identification (106), le premier identificateur spécifique de secteur (304) est stocké dans la première banque de données de révocation (318), de sorte que, suite à une première interrogation de banque de données de la première banque de données de révocation (318) par un premier système informatique de vérification (310) pour la détermination d'un état de révocation du jeton d'identification (106),. le premier signal de vérification généré indique, en tant que résultat de la première interrogation de banque de données, que le jeton d'identification (106) n'est pas révoqué, moyennant la condition que le premier identificateur spécifique de secteur (304) n'est pas stocké dans la première banque de données de révocation (318),
où dans lequel la première banque de données de révocation (318) est configurée de telle manière que le premier identificateur spécifique de secteur (304) du jeton d'identification (106) est stocké préalablement dans la première banque de données de révocation (318) et est effacé de la première banque de données de révocation (318) suite à une requête de révocation de l'utilisateur (102) du jeton d'identification (106) pour révoquer le jeton d'identification (106), de sorte que le premier signal de vérification indique en tant que résultat de la première interrogation de banque de données de la première banque de données de révocation (318) que le jeton d'identification (106) n'est pas révoqué à la condition que le premier identificateur spécifique de secteur (304) est stocké dans la première banque de données de révocation (318).

11. Procédé selon l'une des revendications 8 à 10, dans lequel la deuxième banque de données de révocation (328) est configurée de telle manière que, suite à une requête de révocation de l'utilisateur (102) du jeton d'identification (106) pour la révocation du certificat (167) créé, un deuxième identificateur spécifique de secteur (306) est stocké dans la deuxième banque de données de révocation (328), de sorte que, suite à une deuxième interrogation de banque de données de la deuxième banque de données de révocation (328) par un deuxième système informatique de vérification (320) pour la détermination d'un état de révocation du certificat (167) créé,. un deuxième signal de vérification généré indique, en tant que résultat de la deuxième interrogation de banque de données, que le certificat (167) créé n'est pas révoqué, moyennant la condition que le deuxième identificateur spécifique de secteur (306) n'est pas stocké dans la deuxième banque de données de révocation (328),
ou dans lequel la deuxième banque de données de révocation (328) est configurée de telle manière qu'un deuxième identificateur spécifique de secteur (306) du certificat (167) créé est stocké préalablement dans la deuxième banque de données de révocation (328) et est effacé de la deuxième banque de données de révocation 328) suite à une requête de révocation de l'utilisateur (102) du jeton d'identification (106) pour révoquer le certificat (167) créé, de sorte que le deuxième signal de vérification indique en tant que résultat de la deuxième interrogation de banque de données de la deuxième banque de données de révocation (328) que le certificat (167) créé n'est pas révoqué à la condition que le deuxième identificateur spécifique de secteur (306) est stocké dans la deuxième banque de données de révocation (328), où, de préférence, le certificat (167) créé présente un identifiant individuel et l'identifiant du certificat (167) créé est respectivement stocké et/ou est effacé dans la deuxième banque de données de révocation (328) conjointement avec le deuxième identificateur (306).

12. Procédé selon l'une des revendications 8 à 11, où le procédé comprend en outre :
- la libération du certificat (167) créé suite à une requête de l'utilisateur (102) du jeton d'identification (106) pour la libération du certificat (167) créé, par le stockage d'un troisième identificateur spécifique de secteur dans une troisième banque de données, où la troisième banque de données est configurée de telle manière que, suite à une troisième interrogation de banque de données de la troisième banque de données de révocation par un troisième système informatique de vérification pour la détermination d'un état de révocation du certificat créé, un troisième signal de vérification créé indique en tant que résultat de la troisième interrogation de banque de données que le certificat (167) créé est libéré à la condition que le troisième identificateur spécifique de secteur est stocké dans la troisième banque de données, où la première interrogation de banque de données de la première banque de données de révocation (318) a lieu par le premier système informatique de vérification (310) lors du stockage du troisième identificateur spécifique de secteur et où le troisième identificateur spécifique de secteur est stocké dans la troisième banque de données uniquement à la condition que le premier signal de vérification indique que le jeton d'identification (106) n'est pas révoqué.

13. Procédé selon l'une des revendications 8 à 11, où le procédé comprend en outre :
- la libération du certificat (167) créé suite à une requête de l'utilisateur (102) du jeton d'identification pour la libération du certificat (167) créé, par un effacement d'un troisième identificateur spécifique de secteur stocké préalablement à partir d'une troisième banque de données, où la troisième banque de données est configurée de telle manière qu'un troisième signal de vérification créé suite à une troisième interrogation de banque de données de la troisième banque de données par un troisième système informatique de vérification pour la détermination d'un état de révocation du certificat créé, indique que le certificat créé est libéré à la condition que le troisième identificateur spécifique de secteur n'est pas stocké dans la troisième banque de données,
où la première interrogation de banque de données de la première banque de données de révocation (318) a lieu par le premier système informatique de vérification (310) lors du stockage du troisième identificateur spécifique de secteur et où le troisième identificateur spécifique de secteur n'est effacé dans la troisième banque de données uniquement à la condition que le premier signal de vérification indique que le jeton d'identification (106) n'est pas révoqué,
où, de préférence, le troisième identificateur spécifique de secteur est identique au premier, et/ou au deuxième identificateur (304 ; 306) et/ou l'identifiant du certificat créé dans la troisième banque de données de révocation est respectivement stocké et/ou effacé conjointement avec le troisième identificateur.

14. Procédé selon l'une des revendications 8 à 11, dans lequel les droits de lecture pour le certificat (167) stocké sur le jeton de sécurité (156) sont fixés de telle manière lors de la création que le certificat (167) n'est pas lisible, et où les droits de lecture pour le premier identificateur spécifique de secteur (304) sont fixés de telle manière sur le jeton de sécurité (156) que le premier identificateur spécifique de secteur (304) est lisible,
où le procédé comprend en outre :
- suite à une requête de l'utilisateur (102) du jeton d'identification (106) pour la libération du certificat (167) créé à un troisième système informatique de vérification (330), l'exécution de la première interrogation de banque de données de la première banque de données de révocation (318) par un premier système informatique de vérification (310) pour la détermination d'un état de révocation du jeton d'identification (106),
- la création du premier signal de vérification lequel indique le résultat de la première interrogation de banque de données,
- la libération des droits de lecture du certificat (167) créé par un troisième système informatique de vérification (330) par une conversion, de sorte que le certificat (167) est lisible à la condition que le premier signal de vérification indique que le jeton d'identification (106) n'est pas révoqué.

15. Système électronique doté d'un jeton d'identification (106), d'un jeton de sécurité (156) et d'un système informatique d'utilisateur (100) ainsi que d'au moins un autre système informatique (310, 320, 330), lequel est configuré pour l'exécution d'un procédé selon l'une des revendications précédentes.
